# EUROPEAN PATENT APPLICATION

(11) **EP 4 704 008 A1**
(43) Date of publication of application: **04.03.2026**
(21) Application number: 25196952.3
(22) Date of filing: 20.08.2025
(51) Int. Cl.: G06Q 20/32, G06Q 20/38, G06Q 20/40

(54) **AUTHENTICATION SYSTEM, AUTHENTICATION METHOD, AND PROGRAM**

(30) Priority: 29.08.2024 JP 2024147369
(71) Applicant: Rakuten Group, Inc., Setagaya-ku Tokyo 158-0094 (JP)
(72) Inventor: SUTO, Keito, Minato-ku, Tokyo, 108-0075 (JP)
(74) Representative: Hoffmann Eitle

(57) **Abstract**

A read information acquisition module (107) of an authentication system (1) acquires, when a code for payment displayed on a first user terminal (30A) of a user who uses a payment service is read by a second user terminal (30B) different from the first user terminal (30A), read information read from the code for payment. An authentication module (102) executes, when the read information is acquired, a code-for-payment authentication using the code for payment.

## Description

### BACKGROUND OF THE INVENTION

### Field of the Invention

The present disclosure relates to an authentication system, an authentication method, and a program.

### Description of the Related Art

Hitherto, there has been known authentication for improving security of a payment service. For example, in Japanese Patent Application Laid-open No. 2023-129935, there is described an information processing device capable of communicating to/from each of a first terminal device that has already been authenticated as a terminal device used by a user and a second terminal device that has not yet been authenticated, in which code information having authentication information encoded is generated when a login request is received from the second terminal device, the code information is transmitted to any one of the first terminal device or the second terminal device, and the authentication is executed by reading a code for authentication displayed based on the code information on the other terminal device.

### SUMMARY OF THE INVENTION

However, with the technology of Japanese Patent Application Laid-open No. 2023-129935, it is premised that a code for authentication displayed based on the code information issued for authentication is read, and hence a user is required to perform an operation (an operation for displaying the code for authentication) different from an operation for payment that is usually performed by the user. For that reason, with the technology of Japanese Patent Application Laid-open No. 2023-129935, the user is required to perform an operation to which the user is unaccustomed, and hence it has not been possible to sufficiently improve convenience of the user. This point applies not only to the technology of Japanese Patent Application Laid-open No. 2023-129935 but also to other technologies in a payment service.

One object of the present disclosure is to improve convenience of a user.

According to at least one embodiment of the present disclosure, there is provided an authentication system including: a read information acquisition module configured to acquire, when a code for payment displayed on a first user terminal of a user who uses a payment service is read by a second user terminal different from the first user terminal, read information read from the code for payment; and an authentication module configured to execute, when the read information is acquired, a code-for-payment authentication using the code for payment.

According to the present disclosure, the convenience of the user can be improved.

### BRIEF DESCRIPTION OF THE DRAWINGS

FIG. 1 is a diagram for illustrating an example of a hardware configuration of an authentication system according to a first embodiment of the present invention.
FIG. 2 is a view for illustrating an example of screens displayed on a first user terminal in the first embodiment.
FIG. 3 is a view for illustrating an example of screens displayed on a second user terminal in the first embodiment.
FIG. 4 is a diagram for illustrating an example of functions implemented in the authentication system according to the first embodiment.
FIG. 5 is a table for showing an example of an authentication database in the first embodiment.
FIG. 6 is a table for showing an example of a payment database in the first embodiment.
FIG. 7 is a flow chart for illustrating an example of processing executed in the authentication system according to the first embodiment.
FIG. 8 is a view for illustrating an example of screens displayed on the second user terminal in a second embodiment of the present invention.
FIG. 9 is a diagram for illustrating an example of functions implemented in an authentication system according to the second embodiment.
FIG. 10 is a flow chart for illustrating an example of processing executed in the authentication system according to the second embodiment.
FIG. 11 is a flow chart for illustrating the example of the processing executed in the authentication system according to the second embodiment.
FIG. 12 is a view for illustrating an example of screens displayed on the second user terminal according to a third embodiment of the present invention.
FIG. 13 is a diagram for illustrating an example of functions implemented in an authentication system according to the third embodiment.
FIG. 14 is a flow chart for illustrating an example of processing executed in the authentication system according to the third embodiment.
FIG. 15 is a flow chart for illustrating the example of the processing executed in the authentication system according to the third embodiment.
FIG. 16 is a diagram for illustrating an example of functions implemented in modification examples regarding the first embodiment.
FIG. 17 is a view for illustrating an example of an authentication selection screen displayed on the second user terminal in Modification Example 1-8.
FIG. 18 is a view for illustrating an example of screens respectively displayed on the first user terminal and the second user terminal in Modification Example 1-11.
FIG. 19 is a view for illustrating an example of screens displayed on the second user terminal in Modification Example 2-2.
FIG. 20 is a view for illustrating an example of screens displayed on the second user terminal in Modification Example 2-3.
FIG. 21 is a diagram for illustrating an example of functions implemented in modification examples regarding the third embodiment.
FIG. 22 is a view for illustrating an example of screens displayed on the second user terminal in Modification Example 3-1.

### DESCRIPTION OF THE EMBODIMENTS

### [1. First Embodiment]

A first embodiment, which is an example of embodiments of an authentication system, an authentication switching method, and a program according to the present disclosure, is described.

### [1-1. Hardware Configuration of Authentication System according to First Embodiment]

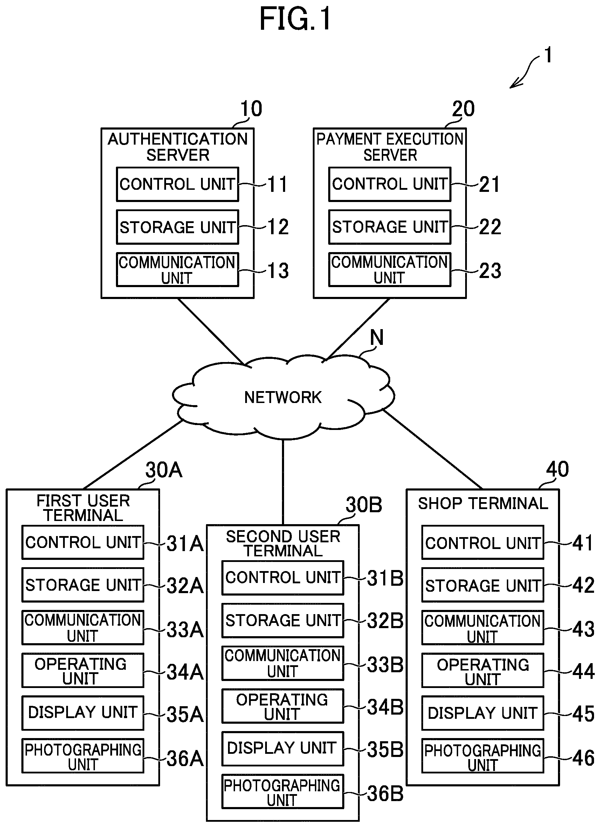

FIG. 1 is a diagram for illustrating an example of a hardware configuration of an authentication system according to the first embodiment. For example, an authentication system 1 according to the first embodiment includes an authentication server 10, a payment execution server 20, a first user terminal 30A, a second user terminal 30B, and a shop terminal 40. Each of the authentication server 10, the payment execution server 20, the first user terminal 30A, the second user terminal 30B, and the shop terminal 40 is connected to a network N such as the Internet or a LAN. At least one of the authentication server 10, the payment execution server 20, the first user terminal 30A, the second user terminal 30B, or the shop terminal 40 may be provided as two or more components.

The authentication server 10 is a server computer that executes authentication in a predetermined service. For example, the authentication server 10 includes a control unit 11, a storage unit 12, and a communication unit 13. The control unit 11 includes at least one processor. The storage unit 12 includes at least one of a volatile memory such as a RAM or a non-volatile memory such as a flash memory. The communication unit 13 includes at least one of a communication interface for wired communication or a communication interface for wireless communication.

In the first embodiment, a case in which a payment service corresponds to the predetermined service is taken as an example. Thus, the payment service as used herein can be read as the predetermined service. The payment service is a service that provides electronic payment (cashless payment) to a user. The predetermined service may be another service other than the payment service. Examples of the predetermined service may include an electronic commerce service, a travel reservation service, an electronic ticket service, a communication service, a financial service, and another service. The predetermined service may be a service provided from a browser instead of being provided from a specific application.

The payment execution server 20 is a server computer that executes payment in the payment service. For example, the payment execution server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively. In the first embodiment, a case in which an authentication function and a payment function are distributed to the authentication server 10 and the payment execution server 20, respectively, is taken as an example, but those functions may be implemented by a single computer. For example, the authentication server 10 may have not only the authentication function but also the payment function. The payment execution server 20 may have not only the payment function but also the authentication function.

The first user terminal 30A is a computer of the user. For example, the first user terminal 30A is a smartphone, a tablet computer, a personal computer, or a wearable terminal. The first user terminal 30A includes a control unit 31A, a storage unit 32A, a communication unit 33A, an operating unit 34A, a display unit 35A, and a photographing unit 36A. Hardware configurations of the control unit 31A, the storage unit 32A, and the communication unit 33A may be the same as those of the control unit 11, the storage unit 12, and the communication unit 13, respectively. The operating unit 34A is an input device such as a touch panel or a mouse. The display unit 35A is a display such as a liquid crystal display or an organic EL display. The photographing unit 36A includes at least one camera.

The second user terminal 30B is a computer of the user. In principle, the user of the first user terminal 30A and the user of the second user terminal 30B are the same. However, when a malicious third party impersonates the user, a terminal of the malicious third party may correspond to the second user terminal 30B. For example, the second user terminal 30B is a smartphone, a tablet computer, a personal computer, or a wearable terminal. The second user terminal 30B includes a control unit 31B, a storage unit 32B, a communication unit 33B, an operating unit 34B, a display unit 35B, and a photographing unit 36B. Hardware configurations of the control unit 31B, the storage unit 32B, the communication unit 33B, the operating unit 34B, the display unit 35B, and the photographing unit 36B may be the same as those of the control unit 31A, the storage unit 32A, the communication unit 33A, the operating unit 34A, the display unit 35A, and the photographing unit 36A, respectively.

The shop terminal 40 is a computer of a shop affiliated with the payment service. The shop is not limited to a brick- and-mortar shop to be actually visited by the user, and may be an online shop. For example, the shop terminal 40 is a POS terminal, a self-checkout register, a handheld terminal, a smartphone, a tablet computer, or a personal computer. The shop terminal 40 includes a control unit 41, a storage unit 42, a communication unit 43, an operating unit 44, a display unit 45, and a reading unit 46. Hardware configurations of the control unit 41, the storage unit 42, the communication unit 43, the operating unit 44, and the display unit 45 may be the same as those of the control unit 11, the storage unit 12, the communication unit 13, the operating unit 34A, and the display unit 35A, respectively. The reading unit 46 includes at least one code reader or reader/writer. The reading unit 46 may include at least one camera.

Programs to be stored in the storage units 12, 22, 32A, 32B, and 42 may be supplied to the authentication server 10, the payment execution server 20, the first user terminal 30A, the second user terminal 30B, and the shop terminal 40, respectively, through the network N. At least one of a reading unit (for example, a memory card slot) that reads a computer-readable information storage medium or an input/output unit (for example, a USB port) for inputting and outputting data to and from an external apparatus may be included in the authentication server 10, the payment execution server 20, the first user terminal 30A, the second user terminal 30B, or the shop terminal 40. For example, a program stored in an information storage medium may be supplied to the authentication server 10, the payment execution server 20, the first user terminal 30A, the second user terminal 30B, or the shop terminal 40 through at least one of the reading unit or the input/output unit.

Further, the authentication system 1 is only required to include at least one computer. Computers included in the authentication system 1 are not limited to the example of FIG. 1. For example, the authentication system 1 may include only the authentication server 10 and the payment execution server 20. In this case, the first user terminal 30A, the second user terminal 30B, and the shop terminal 40 are present outside the authentication system 1. The authentication system 1 may include only the authentication server 10. In this case, the payment execution server 20, the first user terminal 30A, the second user terminal 30B, and the shop terminal 40 are present outside the authentication system 1. For example, the authentication system 1 may include the authentication server 10 and other computers not shown in FIG. 1.

### [1-2. Overview of First Embodiment]

In the first embodiment, a case in which the user uses the payment service from a payment app stored in the first user terminal 30A is taken as an example. The payment app is an application provided by an administrator of the payment service. When the user installs the payment app in the first user terminal 30A and registers for membership of the payment service, the user becomes able to use the payment service from the payment app. The user may use the payment service from another app other than the payment app stored in the first user terminal 30A (for example, an app provided by a company of a credit card or another non-payment-related app) or a browser.

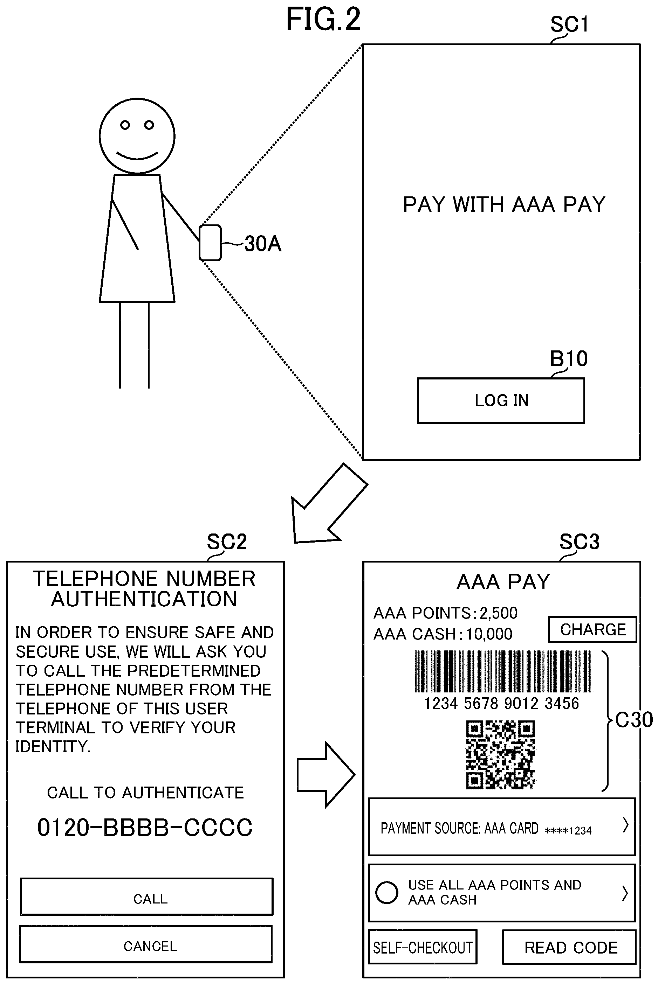

FIG. 2 is a view for illustrating an example of screens displayed on the first user terminal 30A in the first embodiment. When the user operates the first user terminal 30A to start the payment app as in the upper left of FIG. 2, the first user terminal 30A displays a login screen SC1 for the user to log in to the payment service on the display unit 35A as in the upper right of FIG. 2. For example, when the user selects a button B10 and inputs a login account and a password, the first user terminal 30A cooperates with the authentication server 10 to execute a login authentication for the user to log in to the payment service. The login authentication may be executed by the payment execution server 20.

In the first embodiment, a case in which the user is requested to perform a telephone number authentication in addition to the login authentication is taken as an example. For example, when the user does not execute the telephone number authentication, a predetermined usage restriction (for example, a restriction on an upper limit of a payment amount) may be set for the payment service. In this case, when the user performs the telephone number authentication, the user can have the usage restriction lifted. When the user does not execute the telephone number authentication, the user may be inhibited from using the payment service. In this case, when the user performs the telephone number authentication, the user becomes able to use the payment service. The payment service may be usable to the user without any usage restriction even when the user does not perform the telephone number authentication. In this case, the user may be required to execute the telephone number authentication by a predetermined expiration timing.

For example, when the user has not yet executed the telephone number authentication, the first user terminal 30A displays a telephone number authentication screen SC2 for the user to execute the telephone number authentication on the display unit 35A as in the lower left of FIG. 2. Even in a case in which the user has logged in to the payment service, when the user has not executed the telephone number authentication (when a telephone number is not registered in the payment service), the first user terminal 30A displays the telephone number authentication screen SC2 on the display unit 35A and requests the user to perform the telephone number authentication. The user executes the telephone number authentication based on a flow provided as guidance on the telephone number authentication screen SC2.

The flow of the telephone number authentication may be the same as a publicly-known flow. In the example of FIG. 2, a case in which an outgoing call to a telephone number for authentication is executed is illustrated, but the telephone number authentication may be executed by an incoming call to the telephone number of the user, a method using a short message service (SMS), or another method. When the telephone number authentication is executed, the telephone number of the user is registered in the payment service. Other information, such as information that can identify the first user terminal 30A used by the user when the user logs in to the payment service, may be registered in the payment service. In the telephone number authentication, the telephone number registered by the user in another service, such as an electronic commerce service, may be verified.

For example, when the telephone number authentication is executed, the first user terminal 30A displays a code screen SC3 including a code C30 for payment, which has been generated based on a code ID that can temporarily identify the user, on the display unit 35A as in the lower right of FIG. 2. The code C30 for payment is a code to be used for payment. In the example in the lower right of FIG. 2, a case in which the code C30 for payment includes a barcode and a two-dimensional code is described, but the code C30 for payment may be any one of the barcode or the two-dimensional code.

For example, when the shop terminal 40 reads the code C30 for payment by the reading unit 46, the shop terminal 40 acquires the code ID from the code C30 for payment. When the shop terminal 40 transmits the code ID acquired from the code C30 for payment to the authentication server 10 or the payment execution server 20, the payment is executed. The flow of the payment may be the same as that of a publicly-known payment service. For example, when validity of the code ID is confirmed, the payment is executed based on a payment type designated as a payment source by the user.

The payment may be executed by another method other than the method of causing the shop terminal 40 to read the code C30 for payment. For example, the payment may be payment of a type in which the first user terminal 30A is used to read a code displayed on the shop terminal 40, payment of a type in which the first user terminal 30A is used to read a code posted in the shop, payment of a type in which the payment is completed only by operating the first user terminal 30A, payment of a type in which an IC chip of the first user terminal 30A is used, online payment (for example, account payment using the account of the user or ID payment using the ID of the user), carrier payment which is payment provided by a carrier used by the first user terminal 30A, or payment of another type. In addition, for example, payment in which the user reads a code on a bill by the first user terminal 30A to pay the bill may be executed. The payment performed from the second user terminal 30B may employ any of those methods in the same manner.

In the first embodiment, a case in which the user changes a model from the first user terminal 30A to the second user terminal 30B is taken as an example. For example, the user installs the payment app in the second user terminal 30B. When the user operates the second user terminal 30B to start the payment app, the second user terminal 30B displays the login screen SC1 on the display unit 35B. The user logs in to the payment service from the second user terminal 30B in the same manner as when the user logs in to the payment service from the first user terminal 30A. When the authentication server 10 detects that the user has logged in from the second user terminal 30B, which is a new terminal, the authentication server 10 requests the user to perform another authentication other than the login authentication. In the first embodiment, the authentication is switched depending on whether or not the telephone number is to be changed.

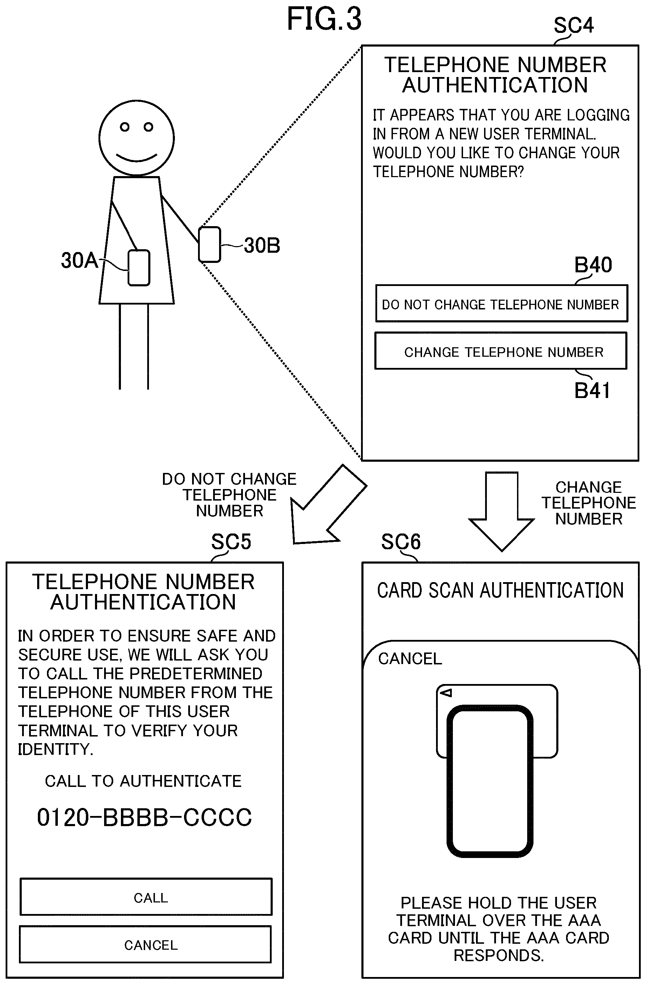

FIG. 3 is a view for illustrating an example of screens displayed on the second user terminal 30B in the first embodiment. For example, when the user logs in to the payment service from the second user terminal 30B for the first time after having completed the telephone number authentication on the first user terminal 30A, the second user terminal 30B displays a change necessity/unnecessity screen SC4, which inquires of the user whether or not to change the telephone number, on the display unit 35B as in the upper right of FIG. **3****.** When the user does not intend to change the telephone number at the time of changing the model, the user selects a button B40 indicating that the telephone number is not to be changed. When the user intends to change the telephone number at the time of changing the model, the user selects a button B41 indicating that the telephone number is to be changed.

In the first embodiment, when the telephone number has not been changed, the user is requested to perform a predetermined authentication. This authentication is hereinafter referred to as "first authentication." The first authentication is an authentication different from the login authentication. In the first embodiment, a case in which the telephone number authentication corresponds to the first authentication is taken as an example, but the first authentication may be another authentication other than the telephone number authentication. For example, the first authentication may be a knowledge authentication that uses information other than the password for the login authentication, a biometric authentication such as a face authentication or a fingerprint authentication, or a possession authentication that verifies possession of a credit card or the like.

For example, when the user selects the button B40, the second user terminal 30B displays a first authentication screen SC5 for the user to execute the first authentication on the display unit 35B as in the lower left of FIG. 3. In the example in the lower left of FIG. 3, the first authentication screen SC5 has the same layout as that of the telephone number authentication screen SC2, but the first authentication screen SC5 may have a layout different from that of the telephone number authentication screen SC2. The first authentication screen SC5 may be the same screen as the telephone number authentication screen SC2, or may be a screen different from the telephone number authentication screen SC2. The user executes the first authentication from the first authentication screen SC5 in the same flow as the flow in which the user executes the telephone number authentication from the telephone number authentication screen SC2 on the first user terminal 30A. When the user executes the first authentication, the user becomes able to use the payment service from the second user terminal 30B without changing the telephone number.

In the first embodiment, when the telephone number has been changed, the user is requested to perform an authentication different from the first authentication. This authentication is hereinafter referred to as "second authentication." The second authentication is an authentication different not only from the first authentication but also from the login authentication. In the first embodiment, a case in which a card scan authentication in which the user uses the second user terminal 30B to scan the credit card corresponds to the second authentication is taken as an example, but a card scan authentication in which the user scans a card (such as an electronic money card or an individual number card) other than the credit card possessed by the user may be used. The second authentication may be another authentication other than the card scan authentication. For example, the second authentication may be a knowledge authentication that uses information other than the password for the login authentication, a biometric authentication such as a face authentication or a fingerprint authentication, or another possession authentication other than the card scan authentication. For example, the second authentication may be an authentication (a type of knowledge authentication) that requests the user to input the telephone number before the change and verifies validity of the telephone number before the change. The second authentication may be an authentication (a type of knowledge authentication) that requests the user to input attribute information on the user and verifies validity of the user.

For example, when the user selects the button B41, the second user terminal 30B displays a second authentication screen SC6 for the user to execute the second authentication on the display unit 35B as in the lower right of FIG. 3. In the first embodiment, a case in which the communication unit 33B of the second user terminal 30B supports short-range wireless communication (for example, near field communication (NFC)) is taken as an example. The second user terminal 30B activates a short-range wireless communication function, and scans a credit card. The flow of the card scan authentication, which is an example of the second authentication, may be the same as a publicly-known flow. The second user terminal 30B cooperates with the authentication server 10 to execute the second authentication based on information read from the credit card.

For example, when the user executes the second authentication, the user becomes able to use the payment service from the second user terminal 30B. The user may execute the telephone number authentication through use of the changed telephone number (new telephone number) from the second user terminal 30B, to thereby register the changed telephone number to the payment service. The user may input the changed telephone number from at least one of the first user terminal 30A or the second user terminal 30B before the second authentication, to thereby register the changed telephone number to the payment service. The old telephone number (telephone number before the change) of the user may remain registered in the payment service, or may be overwritten by the changed telephone number.

As described above, in the authentication system 1 according to the first embodiment, when the user who has been using the payment service from the first user terminal 30A changes the model and logs in to the payment service from the second user terminal 30B, the user is prompted to select from the change necessity/unnecessity screen SC4 whether or not to change the telephone number registered in the payment service. The authentication system 1 switches, based on an operation performed on the change necessity/unnecessity screen SC4 by the user, the authentication to be executed from the second user terminal 30B between the first authentication and the second authentication. The authentication system 1 provides the user with flexible authentication depending on necessity or unnecessity of changing the telephone number, thereby improving convenience of the user and enhancing security. Details of the authentication system 1 according to the first embodiment are described below.

### [1-3. Functions implemented in Authentication System according to First Embodiment]

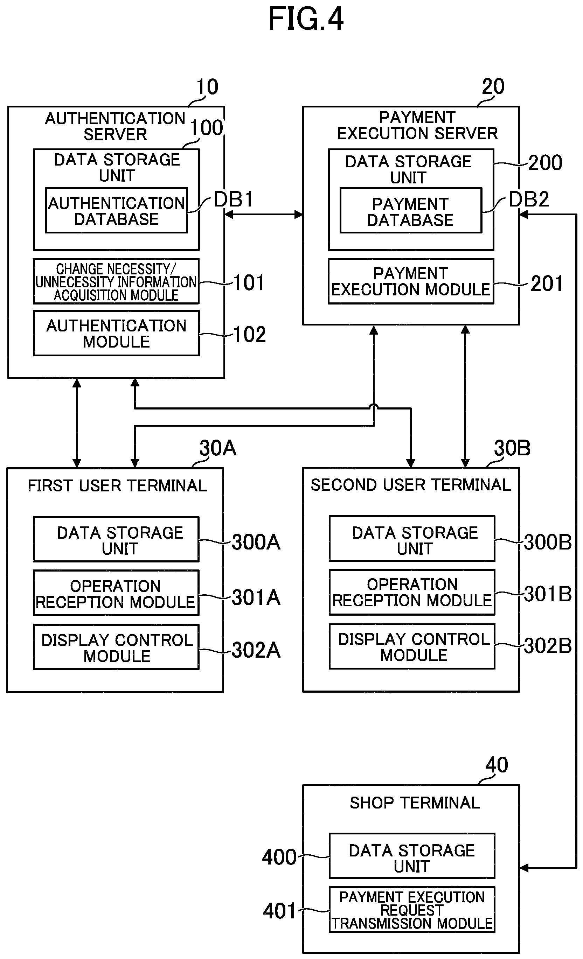

FIG. 4 is a diagram for illustrating an example of functions implemented in the authentication system 1 according to the first embodiment. Respective units and modules implemented by the authentication system 1 according to the first embodiment can be configured by combining some units or modules into a single device, or by distributing each unit or module into smaller devices, for example.

### [1-3-1. Functions implemented in Authentication Server]

For example, the authentication server 10 includes a data storage unit 100, a change necessity/unnecessity information acquisition module 101, and an authentication module 102. The data storage unit 100 is implemented by the storage unit 12. Each of the change necessity/unnecessity information acquisition module 101 and the authentication module 102 is implemented by the control unit 11.

### [Data Storage Unit]

The data storage unit 100 stores various kinds of data for authentication. For example, the data storage unit 100 stores an authentication database DB1.

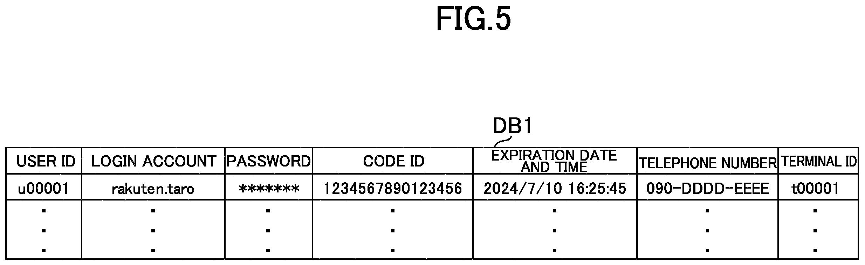

FIG. 5 is a table for showing an example of the authentication database DB1 in the first embodiment. The authentication database DB1 is a database in which various kinds of information for authentication are stored. For example, the authentication database DB1 stores a user ID, a login account, a password, a code ID, an expiration date and time, a telephone number, and a terminal ID. The information stored in the authentication database DB1 is not limited to the example of FIG. 5. The authentication database DB1 may store other information. For example, the authentication database DB1 may store personal information such as a name of the user, or a login history of the user to the payment service.

The user ID is an example of user identification information that can identify the user. The login account is also an example of the user identification information. The login account may be freely changeable by the user. In the first embodiment, a case in which the login account is present separately from the user ID (case in which at least two pieces of user identification information are present) is taken as an example, but there may be only one piece of user identification information. That is, the user ID and the login account are not required to be separately provided. The password is authentication information to be verified in the login authentication.

The code ID is an ID that can temporarily identify the user, and hence the code ID is also an example of the user identification information. In the first embodiment, a case in which the payment execution server 20 issues the code ID is taken as an example. For example, in a case of issuing the code ID for a certain user, the payment execution server 20 issues a new code ID so as to avoid overlaps with other code IDs. The payment execution server 20 transmits the new code ID for the certain user to the authentication server 10. The authentication server 10 stores the new code ID and an expiration date and time in the authentication database DB1 in association with the user ID and the login account of the certain user. The expiration date and time may be determined by any method. For example, the expiration date and time may be a time point later than the issuance of the code ID by a predetermined time period.

The code ID may be issued at any timing. For example, the payment execution server 20 may issue the code ID when the payment app is started, when the expiration date and time is reached, when the user gives an instruction to issue the code ID, or at another timing. The code ID may be issued by the authentication server 10 or another computer instead of being issued by the payment execution server 20. The expiration date and time is not required to be set for the code ID. For example, the code ID may be a semi-permanently valid ID with no particular expiration date and time being set therefor.

Further, the code ID may be issued by the authentication server 10 instead of being issued by the payment execution server 20. In this case, the payment execution server 20 may acquire the code ID issued by the authentication server 10, and store the acquired code ID in a payment database DB2. Further, the code ID is not particularly required to be managed on the authentication server 10 side. The expiration date and time for the code ID may also be determined by the authentication server 10 instead of being determined by the payment execution server 20. The payment execution server 20 acquires the expiration date and time of the code ID from the authentication server 10, and stores the acquired code ID in the authentication database DB1.

In the first embodiment, the telephone number stored in the authentication database DB1 is a telephone number registered in the payment service by the telephone number authentication. For example, when a certain user executes the telephone number authentication from the telephone number authentication screen SC2 of the first user terminal 30A, the authentication server 10 registers the telephone number in the payment service by storing the telephone number of the first user terminal 30A in the authentication database DB1 in association with the user ID and the login account of the certain user. The telephone number may be registered in another database other than the authentication database DB1, another computer other than the authentication server 10, or an information storage medium. For example, the telephone number may be registered in the payment database DB2 of the payment execution server 20.

The terminal ID is an example of terminal identification information that can identify the first user terminal 30A or the second user terminal 30B. The terminal ID may be information issued by the authentication server 10 or another computer when the user logs in to the payment service from the first user terminal 30A or the second user terminal 30B for the first time. The terminal identification information may be information other than the terminal ID. The terminal identification information may be information stored in advance in the first user terminal 30A or the second user terminal 30B (for example, an individual identification number of the first user terminal 30A or the second user terminal 30B). When the user logs in to the payment service from the first user terminal 30A or the second user terminal 30B, the terminal ID is stored in the authentication database DB1. The terminal ID may be stored in the payment database DB2 of the payment execution server 20.

For example, the terminal ID may be stored in the authentication database DB1 on condition that the telephone number authentication is executed. When the telephone number authentication is executed from a certain first user terminal 30A, the authentication server 10 may store the terminal ID of the certain first user terminal 30A in the authentication database DB1. The authentication server 10 may store the telephone number verified by the telephone number authentication and the terminal ID in the authentication database DB1 in association with each other. The authentication server 10 may store, in the authentication database DB1, the terminal ID of the second user terminal 30B for which the first authentication or the second authentication has been completed. When the user registers the changed telephone number in the payment service, the authentication server 10 may store the changed telephone number and the terminal ID of the second user terminal 30B in the authentication database DB1 in association with each other.

The authentication database DB1 may store execution-completion information indicating whether or not each of the telephone number authentication, the first authentication, and the second authentication has been executed. When a certain user executes authentication, the authentication module 102 described later stores the execution-completion information indicating that the authentication has been executed in the authentication database DB1 in association with the user ID and the login account of the certain user. The authentication server 10 or the payment execution server 20 may provide the payment service to a certain user based on the execution-completion information on the certain user. For example, the authentication server 10 or the payment execution server 20 may restrict the use of the payment service by a certain user when the certain user has not executed a specific authentication.

For example, the authentication server 10 or the payment execution server 20 may provide the same payment service to the second user terminal 30B that has executed the first authentication and the second user terminal 30B that has executed the second authentication, or may restrict the use of the payment service from at least one thereof. The authentication server 10 or the payment execution server 20 may restrict the use of the payment service from the second user terminal 30B that has executed the first authentication more than the use of the payment service from the second user terminal 30B that has executed the second authentication. The authentication server 10 or the payment execution server 20 may restrict the use of the payment service from the second user terminal 30B that has executed the second authentication more than the use of the payment service from the second user terminal 30B that has executed the first authentication. It is sufficient that which authentication has been executed is specified by the execution-completion information.

Further, the data stored in the data storage unit 100 is not limited to the above-mentioned example. The data storage unit 100 is only required to store data for authentication. For example, the data storage unit 100 may store data required for displaying the login screen SC1, the telephone number authentication screen SC2, the code screen SC3, the change necessity/unnecessity screen SC4, the first authentication screen SC5, the second authentication screen SC6, or another screen. The data storage unit 100 may store a program indicating processing for each authentication described in the first embodiment.

### [Change Necessity/unnecessity Information Acquisition Module]

The change necessity/unnecessity information acquisition module 101 acquires change necessity/unnecessity information regarding whether or not to change the telephone number registered in the payment service when a login to the payment service (which is an example of the predetermined service) is performed from the second user terminal 30B different from the first user terminal 30A after a login to the payment service was performed from the first user terminal 30A. The first user terminal 30A and the second user terminal 30B are assumed to perform a login from the same login account. When a valid user performs a login, both the first user terminal 30A and the second user terminal 30B belong to the valid user. When a malicious third party performs a login, the first user terminal 30A belongs to the valid user, but the second user terminal 30B belongs to the malicious third party.

The change necessity/unnecessity information indicates that the telephone number is to be changed or the telephone number is not to be changed. In the first embodiment, a case in which the change necessity/unnecessity information acquisition module 101 acquires the change necessity/unnecessity information from the second user terminal 30B is taken as an example, but the change necessity/unnecessity information acquisition module 101 may acquire the change necessity/unnecessity information from the first user terminal 30A, the payment execution server 20, another computer, or an information storage medium.

For example, when the user selects the button B40 or B41 from the change necessity/unnecessity screen SC4, the second user terminal 30B generates change necessity/unnecessity information based on a selection result of the user, and transmits the change necessity/unnecessity information to the authentication server 10. When the user selects the button B40, the second user terminal 30B transmits the change necessity/unnecessity information indicating that the telephone number is not to be changed to the authentication server 10. When the user selects button B41, the second user terminal 30B transmits the change necessity/unnecessity information indicating that the telephone number is to be changed to the authentication server 10.

Another part other than the buttons B40 and B41 may be used to select whether or not to change the telephone number. The other part may be a publicly-known part that is used as a user interface. For example, a radio button, a checkbox, a panel, an icon, or text may be used to select whether or not to change the telephone number. The necessity or unnecessity of changing the telephone number may be selected from another screen other than the change necessity/unnecessity screen SC4. The user may select, from the first user terminal 30A, the necessity or unnecessity of changing the telephone number to register the change necessity/unnecessity information in advance in the authentication database DB1. In this case, the change necessity/unnecessity information acquisition module 101 may acquire the change necessity/unnecessity information from the authentication database DB1. The change necessity/unnecessity information acquisition module 101 may acquire the change necessity/unnecessity information from another database other than the authentication database DB1.

Further, whether or not to change the telephone number may be automatically identified instead of being selected by the user himself or herself. For example, when the user logs in to the payment service from the second user terminal 30B, the second user terminal 30B may acquire the telephone number registered by the user in the payment service from the authentication server 10, and may identify whether or not to change the telephone number by comparing the acquired telephone number and the telephone number stored in the own second user terminal 30B (for example, a SIM card therein) to each other. There may be a case in which the telephone number in another service (for example, a service that collectively manages user information) linked to the payment service has been changed, thereby causing the telephone number registered in the payment service to differ from the telephone number in the other service. In this case, it may be identified that the telephone number is to be changed. When those telephone numbers match, the second user terminal 30B may transmit the change necessity/unnecessity information indicating that the telephone number is not to be changed to the authentication server 10. When those telephone numbers do not match, the second user terminal 30B may transmit the change necessity/unnecessity information indicating that the telephone number is to be changed to the authentication server 10. The change necessity/unnecessity information acquisition module 101 acquires the change necessity/unnecessity information from the second user terminal 30B.

For example, the second user terminal 30B may receive input of the telephone number performed by the user, and transmit the telephone number input by the user to the authentication server 10. The second user terminal 30B may transmit the telephone number stored in the own second user terminal 30B (for example, a SIM card therein) to the authentication server 10 instead of receiving the input of the telephone number performed by the user. The change necessity/unnecessity information acquisition module 101 may acquire the change necessity/unnecessity information by comparing the telephone number registered in the payment service and the telephone number acquired from the second user terminal 30B to each other. When those telephone numbers match, the change necessity/unnecessity information acquisition module 101 may acquire the change necessity/unnecessity information indicating that the telephone number is not to be changed. When those telephone numbers do not match, the change necessity/unnecessity information acquisition module 101 may acquire the change necessity/unnecessity information indicating that the telephone number is to be changed.

For example, the authentication server 10 may receive the input of the telephone number of the second user terminal 30B from the first user terminal 30A instead of from the second user terminal 30B. The first user terminal 30A transmits the telephone number of the second user terminal 30B to the authentication server 10. The change necessity/unnecessity information acquisition module 101 may acquire change necessity/unnecessity information by comparing the telephone number registered in the payment service and the telephone number acquired from the first user terminal 30A to each other. When those telephone numbers match, the change necessity/unnecessity information acquisition module 101 may acquire the change necessity/unnecessity information indicating that the telephone number is not to be changed. When those telephone numbers do not match, the change necessity/unnecessity information acquisition module 101 may acquire the change necessity/unnecessity information indicating that the telephone number is to be changed.

### [Authentication Module]

The authentication module 102 executes authentication in the payment service. For example, the authentication module 102 switches the authentication to be executed from the second user terminal 30B based on the change necessity/unnecessity information. Switching the authentication refers to causing the authentication to differ (selectively using the authentication) depending on the change necessity/unnecessity information. The authentication module 102 causes the authentication that is requested to be performed by the user who has logged in to the payment service from the second user terminal 30B to differ between a case in which the change necessity/unnecessity information indicates that the telephone number is not to be changed and a case in which the change necessity/unnecessity information indicates that the telephone number is to be changed.

In the first embodiment, the authentication module 102 executes the first authentication using the telephone number in the case in which the change necessity/unnecessity information indicates that the telephone number is not to be changed, and executes the second authentication different from the first authentication in the case in which the change necessity/unnecessity information indicates that the telephone number is to be changed. For example, the authentication module 102 executes the telephone number authentication as the first authentication in the case in which the change necessity/unnecessity information indicates that the telephone number is not to be changed, and executes the card scan authentication as the second authentication in the case in which the change necessity/unnecessity information indicates that the telephone number is to be changed. That is, the authentication module 102 switches the authentication that is requested to be performed by the user between the first authentication and the second authentication based on the change necessity/unnecessity information.

The authentication module 102 may execute the first authentication based further on another condition in addition to the change necessity/unnecessity information indicating that the telephone number is not to be changed. The authentication module 102 is not required to immediately execute the first authentication merely based on the change necessity/unnecessity information indicating that the telephone number is not to be changed. For example, the authentication module 102 may execute the first authentication when the change necessity/unnecessity information indicates that the telephone number is not to be changed and the user performs an operation for the first authentication (for example, the first authentication screen SC5 is displayed and the user performs an operation for the first authentication on the first authentication screen SC5). Such a mode is also included in the authentication module 102 executing the first authentication in the case in which the change necessity/unnecessity information indicates that the telephone number is not to be changed. The other condition is not limited to the display of a screen or an operation of the user. Examples of the other condition may include arrival of a predetermined date and time, the number of logins reaching a predetermined number, and an elapsed time period since login reaching a predetermined time period.

Similarly, the authentication module 102 may execute the second authentication based further on another condition in addition to the change necessity/unnecessity information indicating that the telephone number is to be changed. The authentication module 102 is not required to immediately execute the second authentication merely based on the change necessity/unnecessity information indicating that the telephone number is to be changed. For example, the authentication module 102 may execute the second authentication when the change necessity/unnecessity information indicates that the telephone number is to be changed and the user performs an operation for the second authentication. Such a mode is also included in the authentication module 102 executing the second authentication in the case in which the change necessity/unnecessity information indicates that the telephone number is to be changed. The other condition is not limited to an operation of the user. Examples of the other condition may include arrival of a predetermined date and time, the number of logins reaching a predetermined number, and an elapsed time period since login reaching a predetermined time period.

Further, the first authentication and the second authentication may have any combination. The combination of the first authentication and the second authentication is not limited to the telephone number authentication and the card scan authentication. For example, the first authentication may be an authentication that does not use the telephone number. In contrast, the second authentication may be an authentication that uses the telephone number. For example, the first authentication may be the knowledge authentication, and the second authentication may be the biometric authentication or the possession authentication. The first authentication may be the biometric authentication, and the second authentication may be the knowledge authentication or the possession authentication. The first authentication may be the possession authentication, and the second authentication may be the knowledge authentication or the biometric authentication. The first authentication and the second authentication may both be the knowledge authentication, but may have specific authentication methods that differ from each other. The first authentication and the second authentication may both be the biometric authentication, but may have specific authentication methods that differ from each other. The first authentication and the second authentication may both be the possession authentication, but may have specific authentication methods that differ from each other.

For example, the authentication module 102 cooperates with the second user terminal 30B to execute the telephone number authentication, which is an example of the first authentication, in the case in which the change necessity/unnecessity information indicates that the telephone number is not to be changed. The authentication module 102 executes the telephone number authentication, which is an example of the first authentication, based on an incoming call from the second user terminal 30B, an originated call to the second user terminal 30B, or transmission of an SMS message to the second user terminal 30B. The authentication module 102 may execute the telephone number authentication, which is an example of the first authentication, by determining whether or not the telephone number registered in the payment service and the telephone number of the second user terminal 30B match. The authentication module 102 may cooperate with the first user terminal 30A to execute a telephone number authentication similar to the first authentication.

For example, the authentication module 102 cooperates with the second user terminal 30B to execute the card scan authentication, which is an example of the second authentication, in the case in which the change necessity/unnecessity information indicates that the telephone number is to be changed. The second user terminal 30B acquires authentication information stored in the credit card by the short-range wireless communication function of the communication unit 33B, and transmits the authentication information to the authentication server 10. The authentication module 102 communicates to/from another computer of a card company or the like as the requirement arises, and verifies validity of the authentication information acquired from the second user terminal 30B. When the authentication module 102 stores information required for the card scan authentication, the authentication module 102 may execute the second authentication without communicating to/from the other computer. The authentication module 102 may execute, as the second authentication, another authentication such as an authentication using a security code written on a back side of the credit card.

After the user selects the button B41, the second user terminal 30B may transition to a screen that receives input of a new telephone number, and the user may input a new telephone number. After that, the second user terminal 30B may transition to the second authentication screen SC6 to execute the card scan authentication as the second authentication, may transition to a reading screen SC8 in a third embodiment of the present invention described later to execute a code-for-payment authentication as the second authentication, or may execute, as the second authentication, an authentication involving prompting the old telephone number and the new telephone number to be input on the same screen. When the authentication for changing the model and the authentication for changing the telephone number are executed separately, time and effort are required for the user. However, when only a single authentication, that is, the second authentication, is required, the authentication system 1 can reduce the time and effort for the user, and thus can improve the security while improving the convenience of the user.

Further, the authentication module 102 may execute another authentication other than the first authentication and the second authentication. For example, the authentication module 102 may execute the login authentication, or may execute another authentication other than the first authentication, the second authentication, and the login authentication. Specific processing for each individual authentication may be the same as processing employed in a publicly-known authentication, or may be such a novel authentication as described in the third embodiment. In the first embodiment, the configuration in which the authentication module 102 switches the authentication depending on the change necessity/unnecessity information is a novel configuration, but a specific flow of each individual authentication may be the same as a publicly-known flow.

### [1-3-2. Functions implemented in Payment Execution Server]

For example, the payment execution server 20 includes a data storage unit 200 and a payment execution module 201. The data storage unit 200 is implemented by the storage unit 22. The payment execution module 201 is implemented by the control unit 21.

### [Data Storage Unit]

The data storage unit 200 stores various kinds of data for payment. For example, the data storage unit 200 stores a payment database DB2.

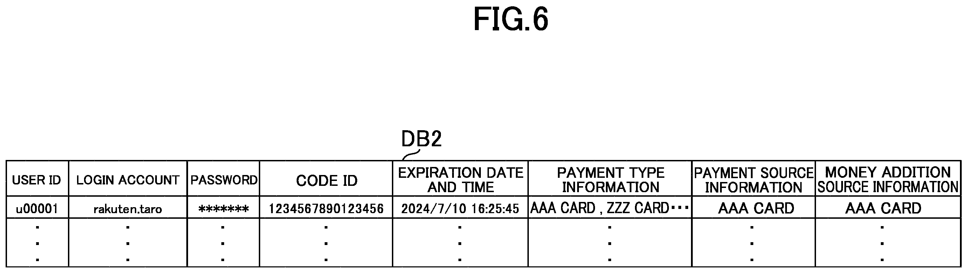

FIG. 6 is a table for showing an example of the payment database DB2 in the first embodiment. The payment database DB2 is a database in which various kinds of information for payment are stored. For example, the payment database DB2 stores a user ID, a login account, a code ID, an expiration date and time, payment type information, payment source information, and money addition source information. The information stored in the payment database DB2 is not limited to the example of FIG. 6. The payment database DB2 may store other information. For example, the payment database DB2 may store a telephone number, a terminal ID, or a usage history of the payment service. When the payment execution server 20 issues a code ID, the code ID issued by the payment execution server 20 is shared with the authentication server 10 as occasion arises.

The payment type information is information that can identify the payment type. Examples of the payment type information includes information such as a credit card number, information such as an electronic money number, information such as a bank account, and information such as loyalty card number. The payment source information is information that can identify the payment type selected as a payment source. The payment source is a payment type for paying for goods or services handled by the shop. The money addition source information is information that can identify the payment type selected as a money addition source. The money addition source is a payment type that serves as a source of funds for adding money.

The data stored in the data storage unit 200 is not limited to the above-mentioned example. The data storage unit 200 is only required to store data for payment. For example, the data storage unit 200 may store data required for displaying the login screen SC1, the telephone number authentication screen SC2, the code screen SC3, the change necessity/unnecessity screen SC4, the first authentication screen SC5, the second authentication screen SC6, or another screen. The data storage unit 200 may store a shop database in which various kinds of information relating to shops are stored.

### [Payment Execution Module]

The payment execution module 201 executes payment in the payment service. Processing to be executed by the payment execution module 201 may be the same as processing for a publicly-known payment service. For example, when the payment execution module 201 receives a payment execution request from the shop terminal 40, the payment execution module 201 executes the payment based on the payment execution request. The payment execution module 201 acquires the payment source information associated with the code ID included in the payment execution request from the payment database DB2, and executes the payment of a payment amount included in the payment execution request based on the payment source information. The payment execution module 201 may execute the payment when the payment execution module 201 receives the payment execution request from the first user terminal 30A or the second user terminal 30B.

### [1-3-3. Functions implemented in First User Terminal]

For example, the first user terminal 30A includes a data storage unit 300A, an operation reception module 301A, and a display control module 302A. The data storage unit 300A is implemented by the storage unit 32A. The operation reception module 301A and the display control module 302A are implemented by the control unit 31A.

### [Data Storage Unit]

The data storage unit 300A stores data required for the user to use the payment service. For example, the data storage unit 300A stores the payment app. When the user uses the payment service not from the payment app but from another app or a browser, the data storage unit 300A stores the other application or the browser. The data storage unit 300A may store a telephone number, a code ID, a terminal ID, a setting for the payment service, or other information.

### [Operation Reception Module]

The operation reception module 301A receives various operations of the user. For example, the operation reception module 301A receives an operation for the payment app. The operation reception module 301A transmits data indicating details of the operation of the user to the authentication server 10 or the payment execution server 20.

### [Display Control Module]

The display control module 302A displays various screens on the display unit 35A. For example, the display control module 302A displays each of the login screen SC1, the telephone number authentication screen SC2, and the code screen SC3 on the display unit 35A. The display control module 302A communicates to/from the authentication server 10 or the payment execution server 20, receives display data for those screens, and displays those screens on the display unit 35A based on the display data. The display data is data required for displaying each screen. The display data may be data for the entire screen, or may be data for a part of the screen. For example, the display data may be data in a markup language such as HTML, image data, text data, or other data.

### [1-3-4. Functions implemented in Second User Terminal]

For example, the second user terminal 30B includes a data storage unit 300B, an operation reception module 301B, and a display control module 302B. The data storage unit 300B is implemented by the storage unit 32B. The operation reception module 301B and the display control module 302B are implemented by the control unit 31B.

### [Data Storage Unit]

The data storage unit 300B stores data required for the user to use the payment service. For example, the data storage unit 300B stores the payment app. When the user uses the payment service not from the payment app but from another app or a browser, the data storage unit 300B stores the other application or the browser. The data storage unit 300B may store a telephone number, a code ID, a terminal ID, a setting for the payment service, or other information.

### [Operation Reception Module]

The operation reception module 301B receives various operations of the user. For example, the operation reception module 301B receives an operation for the payment app. The operation reception module 301B transmits data indicating details of the operation of the user to the authentication server 10 or the payment execution server 20.

### [Display Control Module]

The display control module 302B displays various screens on the display unit 35B. For example, the display control module 302B displays each of the login screen SC1, the code screen SC3, the change necessity/unnecessity screen SC4, the first authentication screen SC5, and the second authentication screen SC6 on the display unit 35B. The display control module 302B communicates to/from the authentication server 10 or the payment execution server 20, receives display data for those screens, and displays those screens on the display unit 35B based on the display data.

### [1-3-5. Functions implemented in Shop Terminal]

For example, the shop terminal 40 includes a data storage unit 400 and a payment execution request transmission module 401. The data storage unit 400 is implemented by the storage unit 42. The payment execution request transmission module 401 is implemented by the control unit 41.

### [Data Storage Unit]

The data storage unit 400 stores data required for processing in the payment service to be performed on the shop side. For example, the data storage unit 400 stores a database in which various kinds of information such as prices of goods or services handled by the shop are stored. The data storage unit 400 may also store a shop ID that can identify the shop.

### [Payment Execution Request Transmission Module]

The payment execution request transmission module 401 transmits a payment execution request to the authentication server 10. For example, when the shop terminal 40 reads the code C30 for payment by the reading unit 46, the payment execution request transmission module 401 acquires the code ID from the code C30 for payment. The payment execution request transmission module 401 transmits the payment execution request including information required for payment, such as the code ID, the payment amount, and the shop ID, to the authentication server 10. The payment execution request may be any request that is used in a publicly-known payment service.

### [1-4. Processing executed in Authentication System according to First Embodiment]

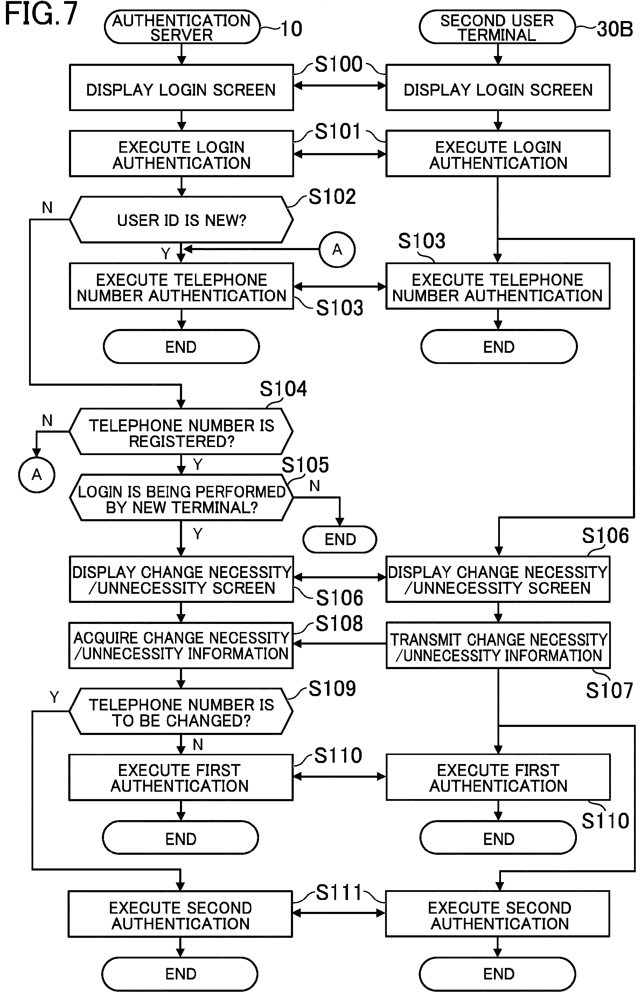

FIG. 7 is a flow chart for illustrating an example of processing executed in the authentication system 1 according to the first embodiment. In FIG. 7, processing executed when the user logs in to the payment service from the second user terminal 30B within the processing executed in the authentication system 1 is illustrated. The processing of FIG. 7 is executed by the control units 11 and 31B executing programs stored in the storage units 12 and 32B, respectively. The same processing as that of FIG. 7 is executed even when the user logs in to the payment service from the first user terminal 30A. The steps of FIG. 7 are an example of the authentication switching method in the first embodiment.

As illustrated in FIG. 7, when the second user terminal 30B starts the payment app, the second user terminal 30B cooperates with the authentication server 10 to execute processing for displaying the login screen SC1 (Step S100). The second user terminal 30B may communicate to/from the payment execution server 20, instead of to/from the authentication server 10, to display the login screen SC1 on the display unit 35B. This point also applies to the subsequent processing steps. The second user terminal 30B cooperates with the authentication server 10 to execute the login authentication (Step S101). In Step S101, the authentication server 10 acquires a login account and a password input by the user from the second user terminal 30B, and determines whether or not the login account and the password are present in the authentication database DB1, to thereby execute the login authentication.

The authentication server 10 determines whether or not the user with a new user ID has logged in (Step S102). In this case, it is assumed that the authentication database DB1 stores the login history of the user to the payment service. In Step S102, the authentication server 10 determines whether or not there is a history of the past login by the user based on the login history associated with the login account input at a time of login. When it is determined in Step S102 that the user with a new user ID has logged in (Y in Step S102), the authentication server 10 cooperates with the second user terminal 30B to execute the telephone number authentication (Step S103), and the process ends. In Step S103, the authentication server 10 displays the telephone number authentication screen SC2 or the first authentication screen SC5 on the second user terminal 30B, and executes the telephone number authentication.

When it is not determined in Step S102 that the user with a new user ID has logged in (N in Step S102), the authentication server 10 determines whether or not a telephone number is registered in the payment service based on the authentication database DB1 (Step S104). In Step S104, the authentication server 10 refers to the authentication database DB1 to determine whether or not there is a telephone number associated with the login account input at the time of login. When it is determined in Step S104 that a telephone number is not registered in the payment service (N in Step S104), the process advances to the processing step of Step S103 to execute the telephone number authentication.

When it is determined in Step S104 that a telephone number is registered in the payment service (Y in Step S104), the authentication server 10 determines whether or not the login is being performed by a new terminal based on the authentication database DB1 (Step S105). In Step S105, the authentication server 10 acquires the terminal ID from the second user terminal 30B, and determines whether or not the acquired terminal ID is stored in the authentication database DB1 in association with the login account input at the time of login. When it is determined in Step S105 that the login is not being performed by a new terminal (N in Step S105), the process ends. In this case, the authentication server 10 may notify the payment execution server 20 that the second user terminal 30B is not a new terminal, and the payment execution server 20 and the second user terminal 30B cooperate with each other to execute processing for displaying the code screen SC3.

When it is determined in Step S105 that the login is being performed by a new terminal (Y in Step S105), the second user terminal 30B cooperates with the authentication server 10 to execute processing for displaying the change necessity/unnecessity screen SC4 (Step S106). The second user terminal 30B transmits the change necessity/unnecessity information based on the details of the operation performed for the change necessity/unnecessity screen SC4 (Step S107). In Step S107, the button B40 or the button B41 is selected. When the user performs another operation, processing corresponding to the other operation is executed, and the process ends. The authentication server 10 acquires the change necessity/unnecessity information from the second user terminal 30B (Step S108).

The authentication server 10 determines whether or not the change necessity/unnecessity information indicates that the telephone number is to be changed (Step S109). When it is determined in Step S109 that the change necessity/unnecessity information indicates that the telephone number is not to be changed (N in Step S109), the authentication server 10 cooperates with the second user terminal 30B to execute the first authentication (Step S110), and the process ends. In Step S110, the authentication server 10 displays the first authentication screen SC5 on the second user terminal 30B, and cooperates with the second user terminal 30B to execute the telephone number authentication as the first authentication.

When it is determined in Step S109 that the change necessity/unnecessity information indicates that the telephone number is to be changed (Y in Step S109), the authentication server 10 cooperates with the second user terminal 30B to execute the second authentication (Step S111), and the process ends. In Step S111, the authentication server 10 displays the second authentication screen SC6 on the second user terminal 30B, and cooperates with the second user terminal 30B to execute the card scan authentication as the second authentication.

### [1-5. Summary of First Embodiment]

The authentication system 1 according to the first embodiment acquires the change necessity/unnecessity information when the user who used the payment service from the first user terminal 30A logs in to the service from the second user terminal 30B different from the first user terminal 30A. The authentication system 1 switches the authentication to be executed from the second user terminal 30B based on the change necessity/unnecessity information. The authentication system 1 can improve the security while improving the convenience of the user by providing the user with flexible authentication depending on the necessity or unnecessity of changing the telephone number. For example, as described in the first embodiment, the authentication involving prompting the old telephone number and the new telephone number to be input on the same screen may be executed as the second authentication. In this case, the authentication system 1 requires only a single authentication, that is, the second authentication, and thus can improve the security while improving the convenience of the user. For example, the authentication system 1 not only can improve the convenience of the valid user but also can improve the security by preventing an unauthorized user from logging in from a different terminal.

Further, the authentication system 1 executes the first authentication in the case in which the change necessity/unnecessity information indicates that the telephone number is not to be changed. The authentication system 1 executes the second authentication in the case in which the change necessity/unnecessity information indicates that the telephone number is to be changed. This enables the authentication system 1 to selectively use the first authentication and the second authentication, as appropriate, depending on whether or not the telephone number is to be changed, thereby being able to improve the security while improving the convenience of the user.

### [2. Second Embodiment]

A second embodiment, which is an example of embodiments of the authentication system 1, an authentication condition determination method, and a program according to the present disclosure, is described. In the second embodiment, the description of the same components as those in the first embodiment is omitted. For example, the hardware configuration of the authentication system 1 may be the same as that in the first embodiment.

### [2-1. Overview of Second Embodiment]

In the second embodiment, in the same manner as in the first embodiment, a case in which the user changes the model from the first user terminal 30A to the second user terminal 30B is taken as an example. For example, as described in the first embodiment, when the telephone number is to be changed, the card scan authentication may be executed. In the second embodiment, a case in which only a certain specific credit card supports the card scan authentication is taken as an example. In this case, when the user does not own a credit card that supports the card scan authentication, the card scan authentication cannot be executed.

For example, even when the user owns a credit card that supports the card scan authentication, the communication unit 33B of the second user terminal 30B may not support the short-range wireless communication. In this case as well, the user cannot execute the card scan authentication. This point is not limited to the card scan authentication, and also applies to other authentications. Some users may not be able to execute a certain specific authentication. In view of this, in the second embodiment, the screen to be displayed on the second user terminal 30B is changed based on whether or not a predetermined authentication condition is satisfied.

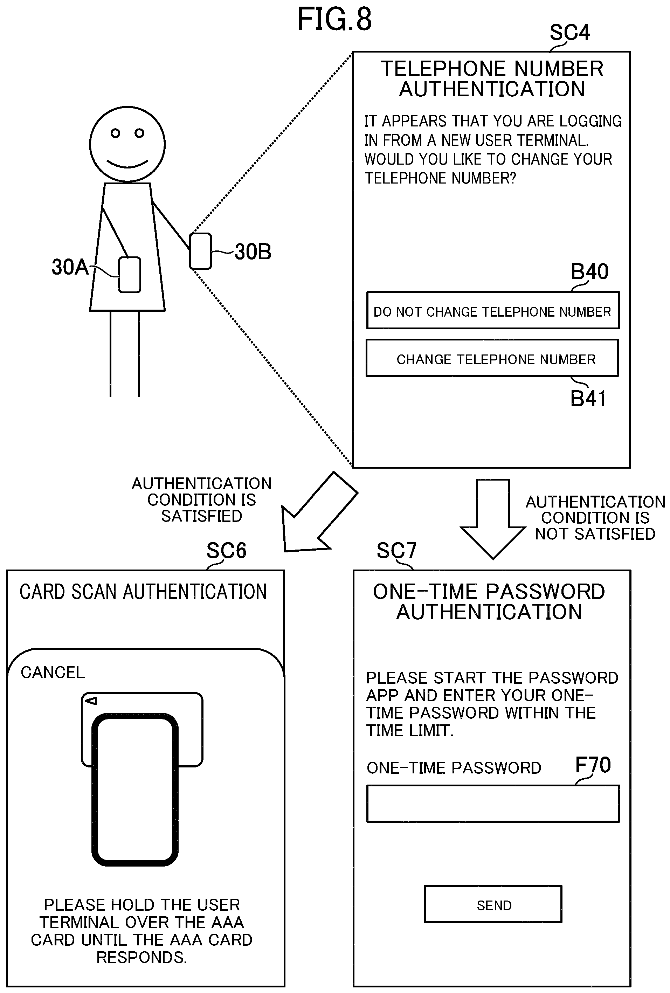

FIG. 8 is a view for illustrating an example of screens displayed on the second user terminal 30B in the second embodiment. For example, when the user logs in to the payment service from the second user terminal 30B, the second user terminal 30B displays the same change necessity/unnecessity screen SC4 as that in the first embodiment on the display unit 35B as in the upper right of FIG. 8. A display flow of the change necessity/unnecessity screen SC4 may be the same as that in the first embodiment. A flow that is followed after the user selects the button B40 may also be the same as that in the first embodiment. When the user selects the button B41, the authentication server 10 determines whether or not an authentication condition for the card scan authentication is satisfied. Details of this determination method are described later.

For example, when it is determined that the authentication condition for the card scan authentication is satisfied, in the same manner as in the first embodiment, the second user terminal 30B displays the second authentication screen SC6 for the card scan authentication on the display unit 35B as in the lower left of FIG. 8. When it is determined that the authentication condition for the card scan authentication is not satisfied, the second user terminal 30B displays an other-authentication screen SC7 for the user to execute another authentication different from the card scan authentication on the display unit 35B, as in the lower right of FIG. 8.

The other authentication may be any authentication. For example, the other authentication may be an authentication for which another authentication condition different from authentication conditions such as a specific credit card and a short-range wireless communication function is set. In the example in the lower right of FIG. 8, a one-time password authentication is executed as an example of the other authentication. The flow of the one-time password authentication may be the same as a publicly-known flow. For example, the user may confirm a one-time password in another app that issues a one-time password, and input the one-time password to an input form F70, to thereby execute the one-time password authentication.

As described above, when it is determined that the authentication condition for the card scan authentication is satisfied, the authentication system 1 according to the second embodiment displays the second authentication screen SC6 for the card scan authentication on the second user terminal 30B. When it is determined that the authentication condition for the card scan authentication is not satisfied, the authentication system 1 displays the other-authentication screen SC7 for the one-time password authentication on the second user terminal 30B. This enables the authentication system 1 to selectively display a different screen on the second user terminal 30B depending on whether or not the authentication condition for the card scan authentication is satisfied, thereby improving the security while improving the convenience of the user. Details of the second embodiment are described below.

### [2-2. Functions implemented in Authentication System according to Second Embodiment]

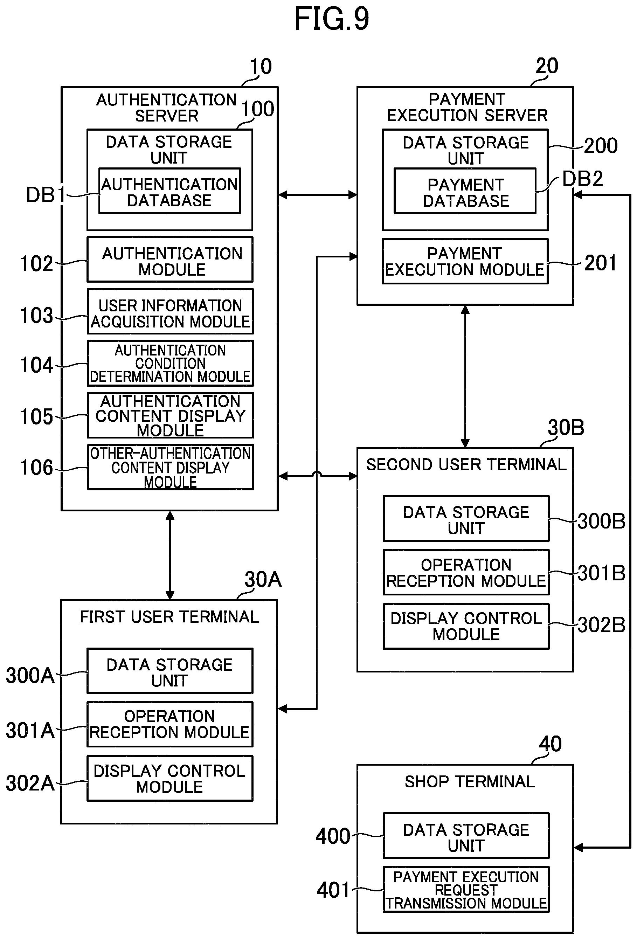

FIG. 9 is a diagram for illustrating an example of functions implemented in the authentication system 1 according to the second embodiment. Some of the functions described in the first embodiment are not shown in FIG. 9, but the authentication system 1 according to the second embodiment may include the function described in the first embodiment. Respective units and modules implemented by the authentication system 1 according to the second embodiment can be configured by combining some units or modules into a single device, or by distributing each unit or module into smaller devices, for example.

The authentication system 1 according to the second embodiment is not required to include the function described in the first embodiment (function of switching the authentication depending on the change necessity/unnecessity information). For example, the authentication system 1 according to the second embodiment may determine whether or not the authentication condition is satisfied irrespective of whether or not the telephone number is to be changed. The authentication system 1 according to the second embodiment is not required to include the function described in the first embodiment, and is not required to execute the telephone number authentication in the first place, and the telephone number is not required to be registered in the payment service.

As described above, a mode in which the authentication system 1 does not include the function described in the first embodiment and includes the functions described in the second embodiment is within the scope of the present disclosure. As a matter of course, a mode in which the authentication system 1 includes the function described in the first embodiment and the functions described in the second embodiment is also within the scope of the present disclosure. Those points are matters that a person skilled in the art can naturally understand from the description of the present disclosure.

### [2-2-1. Functions implemented in Authentication Server]

For example, the authentication server 10 includes the data storage unit 100, the authentication module 102, a user information acquisition module 103, an authentication condition determination module 104, an authentication content display module 105, and an other-authentication content display module 106.

### [Data Storage Unit]

The data storage unit 100 may be the same as that in the first embodiment. In the second embodiment, the data storage unit 100 stores data required for determination regarding the authentication condition. For example, the authentication database DB1 may store ownership information indicating whether or not the user owns a specific credit card. The ownership information may be stored in another database other than the authentication database DB1, another computer other than the authentication server 10, or an information storage medium. The data storage unit 100 may store data required for displaying the other-authentication screen SC7.

### [User Information Acquisition Module]

The user information acquisition module 103 acquires user information relating to the user who uses the payment service. In the second embodiment, in the same manner as in the first embodiment, the payment service is an example of the predetermined service. Thus, the payment service as used herein can be read as any other service. The authentication system 1 according to the second embodiment can also be applied to any service such as an electronic commerce service.

The user information is information relating to the user to be used to determine whether or not the authentication condition is satisfied. For example, the user information may be information associated with the user ID (information that can be retrieved based on the user ID), or may be information acquired from the first user terminal 30A or the second user terminal 30B. In the second embodiment, a case in which the ownership information indicating whether or not the user owns a specific credit card corresponds to the user information is taken as an example. The ownership information may be the payment type information stored in the payment database DB2, or may be information different from the payment type information. The ownership information may be the card number of the specific credit card, the identification information on a function (for example, electronic money or loyalty points) added to the specific credit card, or other information.

In the second embodiment, a case in which the ownership information is stored in the authentication database DB1 is taken as an example. For example, when a certain user logs in to the payment service, the user information acquisition module 103 refers to the authentication database DB1 to acquire, as the user information, the ownership information associated with the user ID of the certain user. The user information acquisition module 103 may acquire the ownership information as the user information from another database (for example, the payment database DB2) other than the authentication database DB1, another computer (for example, the payment execution server 20, the first user terminal 30A, the second user terminal 30B, or a computer of another service linked to the payment service) other than the authentication server 10, or an information storage medium.

The user information may be information other than the ownership information. For example, the user information may be information relating to the payment type of the user that is not registered in the payment service. In this case, the user information may be stored in a database of another service other than the payment service. For example, the user information acquisition module 103 may acquire the user information from a computer of a card company that issued a credit card that supports the card scan authentication. The user information acquisition module 103 may acquire the user information from a computer of a company that manages the function (for example, the electronic money or the loyalty points) added to the credit card that supports the card scan authentication.

Further, the user information is not limited to information relating to the payment type owned by the user. For example, the user information may indicate whether or not the communication unit 33B of the second user terminal 30B supports the short-range wireless communication function. In this case, the second user terminal 30B transmits the user information indicating whether or not the communication unit 33B supports the short-range wireless communication function to the authentication server 10. The user information acquisition module 103 acquires the user information from the second user terminal 30B. When another function (for example, a photographing function by the photographing unit 36B) other than the short-range wireless communication function is required for a certain specific authentication, the user information acquisition module 103 may acquire the user information indicating whether or not the second user terminal 30B has the other function from the second user terminal 30B.

For example, when the user is required to register in advance, for a certain specific authentication, authentication information to be used in the certain specific authentication, the authentication information may correspond to the user information. The authentication information may be any information, and examples thereof include a password, a passcode, a photograph of a face, a fingerprint pattern, an answer to a predetermined question, and other authentication information. The authentication information may be stored in advance in the authentication database DB1. The user information acquisition module 103 acquires, as the user information, the authentication information stored in the authentication database DB1. The user information acquisition module 103 may acquire information indicating whether or not the authentication information has been registered in advance, as the user information in place of the authentication information.

### [Authentication Condition Determination Module]

The authentication condition determination module 104 determines whether or not the user information satisfies a predetermined authentication condition relating to the authentication in the payment service. The authentication condition is a condition for the authentication module 102 to execute the authentication. In other words, the authentication condition is a condition indicating whether or not the logged-in user is in an environment in which the authentication can be executed. For example, when the user is required to own a certain specific item (for example, a specific credit card) for authentication, the authentication condition is that the user owns the item. When certain specific user information is required to be registered in the payment service for authentication, the authentication condition is that the user information is registered in the payment service. When the second user terminal 30B is required to have a certain specific function (for example, the short-range wireless communication function or the photographing function) for authentication, the authentication condition is that the second user terminal 30B has the certain specific function.

In the second embodiment, a case in which a certain specific credit card supports the card scan authentication is taken as an example. Thus, the fact that the user owns the specific credit card corresponds to the authentication condition. The authentication condition determination module 104 determines whether or not the user owns the specific credit card based on the ownership information acquired as the user information. When it is determined that the user does not own the specific credit card, the authentication condition determination module 104 determines that the user information does not satisfy the authentication condition. When it is determined that the user owns the specific credit card, the authentication condition determination module 104 determines that the user information satisfies the authentication condition.

A determination method performed by the authentication condition determination module 104 is not limited to the above-mentioned example. It suffices that the determination method performed by the authentication condition determination module 104 is a method corresponding to the authentication condition. For example, the authentication condition determination module 104 may determine whether or not the user information satisfies the authentication condition by determining whether or not the communication unit 33B of the second user terminal 30B supports the short-range wireless communication function based on the user information. When the user information does not indicate that the communication unit 33B supports the short-range wireless communication function, the authentication condition determination module 104 determines that the user information does not satisfy the authentication condition. When the user information indicates that the communication unit 33B supports the short-range wireless communication function, the authentication condition determination module 104 determines that the user information satisfies the authentication condition.

For example, the authentication condition determination module 104 may determine whether or not the user information satisfies the authentication condition by determining whether or not the user has registered specific authentication information in the payment service based on the user information. When the user information does not indicate that the user has registered the specific authentication information in the payment service, the authentication condition determination module 104 determines that the user information does not satisfy the authentication condition. When the user information indicates that the user has registered the specific authentication information in the payment service, the authentication condition determination module 104 determines that the user information satisfies the authentication condition. The user information may be the specific authentication information itself. In this case, the authentication condition determination module 104 may determine whether or not the user information satisfies the authentication condition by determining whether or not the user information, which is the specific authentication information, is registered in the payment service.

In the second embodiment, a case in which the authentication server 10 executes processing of each of the authentication content display module 105 and the other-authentication content display module 106 based on a determination result from the authentication condition determination module 104 is taken as an example. However, it suffices that the authentication server 10 executes predetermined processing based on the determination result from the authentication condition determination module 104. The predetermined processing may be only the processing of the authentication content display module 105 or only the processing of the other-authentication content display module 106. The predetermined processing may be other processing. For example, the authentication server 10 may execute the predetermined processing by displaying a screen irrelevant to the authentication on the second user terminal 30B based on the determination result from the authentication condition determination module 104. The authentication server 10 may execute the predetermined processing by storing the determination result from the authentication condition determination module 104 in the authentication database DB1.

### [Authentication Content Display Module]

When it is determined that the user information does not satisfy the authentication condition, the authentication content display module 105 does not display the second authentication screen SC6 on the second user terminal 30B of the user, and when it is determined that the user information satisfies the authentication condition, the authentication content display module 105 displays the second authentication screen SC6 on the second user terminal 30B. The second authentication screen SC6 is an example of authentication content relating to the authentication. Thus, the second authentication screen SC6 as used herein can be read as the authentication content. The authentication content may be any content to be displayed for authentication, and is not limited to the second authentication screen SC6. The authentication content may be another screen other than the second authentication screen SC6, or may be a screen component (a part of the screen, examples of which include a menu, a window, a pop-up, a modal interface, a button, a panel, an icon, and another component) in place of the entire screen.

For example, when it is determined that the user information satisfies the authentication condition, the authentication content display module 105 transmits display data for the second authentication screen SC6 to the second user terminal 30B, to thereby display the second authentication screen SC6 on the second user terminal 30B. When it is determined that the user information does not satisfy the authentication condition, the authentication content display module 105 does not transmit the display data for the second authentication screen SC6 to the second user terminal 30B. When it is determined that the user information does not satisfy the authentication condition, the authentication content display module 105 may transmit other data such as an error message to the second user terminal 30B.

The authentication content display module 105 may display the second authentication screen SC6 on the first user terminal 30A instead of on the second user terminal 30B. The authentication content display module 105 may display the second authentication screen SC6 on at least one of the first user terminal 30A or the second user terminal 30B. In the second embodiment, the first user terminal 30A and the second user terminal 30B are simply referred to as "user terminal 30" unless particularly distinguished from each other. It suffices that the authentication content display module 105 does not display the second authentication screen SC6 on the user terminal 30 when it is determined that the user information does not satisfy the authentication condition, and displays the second authentication screen SC6 on the user terminal 30 when it is determined that the user information satisfies the authentication condition.

### [Other-authentication Content Display Module]

When it is determined that the user information does not satisfy the authentication condition, the other-authentication content display module 106 displays, on the user terminal 30 (for example, the second user terminal 30B), the other-authentication screen SC7 relating to another authentication different from the authentication to be subjected to the determination regarding the authentication condition. The other-authentication screen SC7 is an example of other-authentication content. Thus, the other-authentication screen SC7 as used herein can be read as the other-authentication content. The other-authentication content may be any content for the other authentication, and is not limited to the other-authentication screen SC7. The other-authentication content may be another screen other than the other-authentication screen SC7, or may be a screen component (a part of the screen, examples of which include a menu, a window, a pop-up, a modal interface, a button, a panel, an icon, and another component) in place of the entire screen.

For example, when it is determined that the user information does not satisfy the authentication condition, the other-authentication content display module 106 transmits display data for the other-authentication screen SC7 to the second user terminal 30B, to thereby display the other-authentication screen SC7 on the second user terminal 30B. When it is determined that the user information satisfies the authentication condition, the other-authentication content display module 106 does not transmit the display data for the other-authentication screen SC7 to the second user terminal 30B. The authentication content display module 105 may display the other-authentication screen SC7 on the first user terminal 30A instead of on the second user terminal 30B. The other-authentication screen SC7 may be any screen for another authentication that can be executed even when the user information does not satisfy the authentication condition, and is not limited to such a screen for the one-time password authentication as in the lower right of FIG. 8.

### [Authentication Module]

The authentication module 102 may be the same as that in the first embodiment. In the second embodiment, the authentication module 102 executes the authentication after the determination is executed by the authentication condition determination module 104. For example, the authentication module 102 executes the card scan authentication after the determination is executed by the authentication condition determination module 104 and the second authentication screen SC6 is displayed. Processing for the card scan authentication may be the same as that in the first embodiment. The authentication module 102 executes the one-time password authentication after the determination is executed by the authentication condition determination module 104 and the other-authentication screen SC7 is displayed. The flow of the one-time password authentication may be the same as a publicly-known flow.

In the second embodiment, the card scan authentication is described as an example of the authentication for which the authentication condition is set. The authentication for which the authentication condition is set may be any authentication other than the card scan authentication. For example, the authentication for which the authentication condition is set may be an authentication in which an identification card is photographed, the code-for-payment authentication described later in the third embodiment, or another possession authentication. The authentication for which the authentication condition is set may be a knowledge authentication that requires registration of authentication information in advance or a biometric authentication that requires registration of biometric information in advance. The authentication for which the authentication condition is set may be executed by the first user terminal 30A or the second user terminal 30B instead of being executed by the authentication server 10.

In the second embodiment, the one-time password authentication is described as an example of another authentication other than the authentication for which the authentication condition is set. The other authentication may be any authentication other than the one-time password authentication. For example, the other authentication may be the telephone number authentication, an authentication using a password different from the login authentication, another knowledge authentication, another possession authentication other than the card scan authentication, or the biometric authentication. The other authentication may be executed by the first user terminal 30A or the second user terminal 30B instead of being executed by the authentication server 10.

### [2-2-2. Functions implemented in Payment Execution Server]

Functions of the payment execution server 20 may be the same as those in the first embodiment.

### [2-2-3. Functions implemented in First User Terminal]

Functions of the first user terminal 30A may be the same as those in the first embodiment.

### [2-2-4. Functions implemented in Second User Terminal]

Functions of the second user terminal 30B may be the same as those in the first embodiment.

### [2-2-5. Functions implemented in Shop Terminal]

Functions of the shop terminal 40 may be the same as those in the first embodiment.

### [2-3. Processing executed in Authentication System according to Second Embodiment]

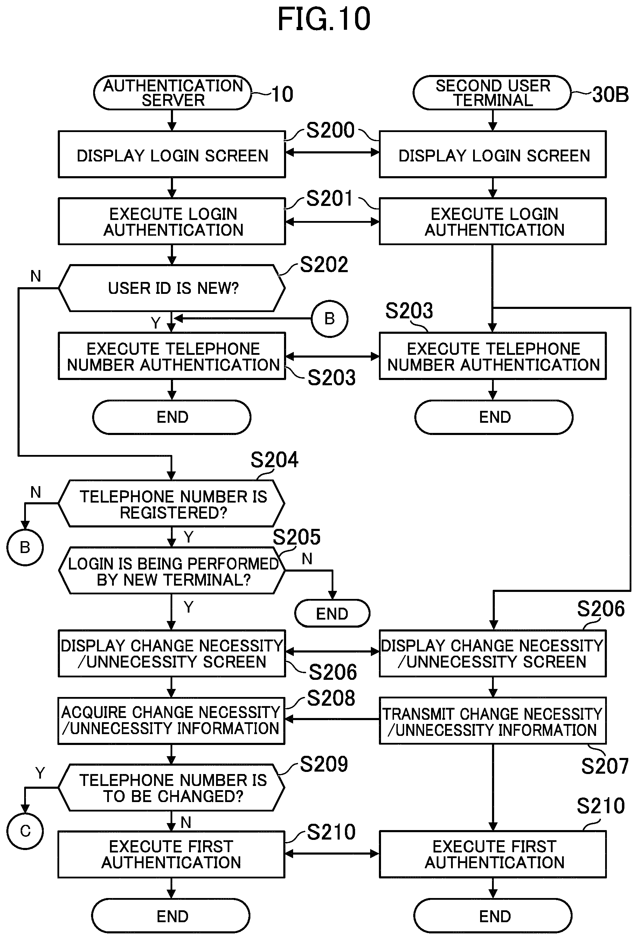

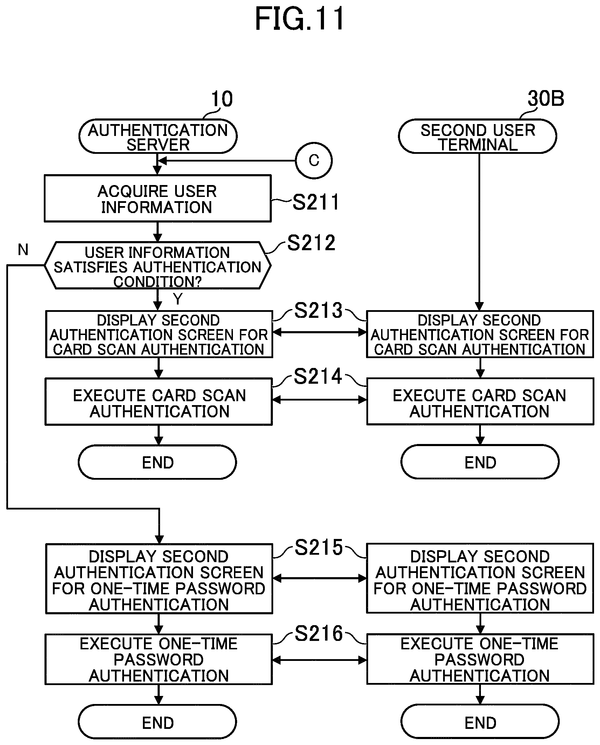

FIG. 10 and FIG. 11 are flow charts for illustrating an example of processing executed in the authentication system 1 in the second embodiment. In FIG. 10 and FIG. 11, processing executed when the user logs in to the payment service from the second user terminal 30B within the processing executed in the authentication system 1 is illustrated. The processing of FIG. 10 and FIG. 11 is executed by the control units 11 and 31B executing programs stored in the storage units 12 and 32B, respectively. The same processing as that of FIG. 10 and FIG. 11 is executed even when the user logs in to the payment service from the first user terminal 30A. The steps of FIG. 10 and FIG. 11 are an example of the authentication condition determination method in the second embodiment.

As in FIG. 10, the processing steps of from Step S200 to Step S210 are the same as the processing steps of from Step S100 to Step S110, respectively. In FIG. 10, a case in which the authentication system 1 according to the second embodiment includes the function in the first embodiment is illustrated as an example, but in a case in which the authentication system 1 according to the second embodiment does not include the function in the first embodiment, when the result of the determination of Step S205 is positive, the process may advance to the processing step of Step S211 without execution of the processing steps of from Step S206 to Step S210. In the determination of Step S205 in the second embodiment, it is not required to determine whether or not the login is being performed by a new terminal. Examples of the determination of Step S205 may include an authentication at a time of using the payment service (for example, an authentication for a user to be newly registered) or an authentication regarding the use of a function in the payment service (for example, a user authentication for changing the telephone number or a withdrawal function).

When it is determined in Step S209 that the change necessity/unnecessity information indicates that the telephone number is to be changed (Y in Step S209), the process advances to FIG. 11, and the authentication server 10 refers to the authentication database DB1 to acquire ownership information associated with the user ID of the logged-in user as user information (Step S211). The authentication server 10 determines whether or not the user information satisfies the authentication condition (Step S212). In Step S212, the authentication server 10 determines whether or not the ownership information indicates that the user owns a specific credit card that can support the card scan authentication.

When it is determined in Step S212 that the user information satisfies the authentication condition (Y in Step S212), the authentication server 10 cooperates with the second user terminal 30B to execute processing for displaying the second authentication screen SC6 for the card scan authentication (Step S213). The second authentication screen SC6 displayed in Step S213 is an example of the authentication content. The authentication server 10 cooperates with the second user terminal 30B to execute the card scan authentication (Step S214), and the process ends. The processing step of Step S214 may be the same as that of Step S111.

When it is determined in Step S212 that the user information does not satisfy the authentication condition (N in Step S212), the authentication server 10 cooperates with the second user terminal 30B to execute processing for displaying the other-authentication screen SC7 for the one-time password authentication (Step S215). The other-authentication screen SC7 displayed in Step S215 is an example of the other-authentication content. The authentication server 10 cooperates with the second user terminal 30B to execute the one-time password authentication (Step S216), and the process ends. In Step S216, the second user terminal 30B transmits the one-time password input to the input form F70 by the user to the authentication server 10. The authentication server 10 cooperates with another server computer that issues a one-time password to verify validity of the one-time password received from the second user terminal 30B.

### [2-4. Summary of Second Embodiment]

The authentication system 1 according to the second embodiment acquires the user information. The authentication system 1 determines whether or not the user information satisfies the authentication condition. This enables the authentication system 1 to determine whether or not the user information satisfies the authentication condition, thereby being able to improve the convenience of the user. For example, the authentication system 1 can execute the predetermined processing depending on whether or not the user information satisfies the authentication condition, and thus can execute flexible processing depending on whether or not the user information satisfies the authentication condition. The authentication system 1 can also selectively use the authentication that is requested to be performed by the user depending on whether or not the user information satisfies the authentication condition.

Further, the authentication system 1 does not display the second authentication screen SC6 on the user terminal 30 when it is determined that the user information does not satisfy the authentication condition, and displays the second authentication screen SC6 on the user terminal 30 when it is determined that the user information satisfies the authentication condition. This enables the authentication system 1 to control whether or not to display the second authentication screen SC6 depending on whether or not the user information satisfies the authentication condition, thereby being able to improve the convenience of the user. For example, the authentication system 1 can prevent the second authentication screen SC6 for the card scan authentication from being displayed to the user who does not satisfy the authentication condition and is unable to execute the card scan authentication.

Further, when it is determined that the user information does not satisfy the authentication condition, the authentication system 1 displays the other-authentication screen SC7 on the user terminal 30. This enables the authentication system 1 to control whether or not to display the other-authentication screen SC7 depending on whether or not the user information satisfies the authentication condition, thereby being able to improve the convenience of the user. For example, the authentication system 1 displays the other-authentication screen SC7 for the one-time password authentication different from the card scan authentication to the user who does not satisfy the authentication condition and is unable to execute the card scan authentication, to thereby enable the user to execute the one-time password authentication.

### [3. Third Embodiment]

The third embodiment, which is an example of embodiments of the authentication system 1, an authentication method, and a program according to the present disclosure, is described. In the third embodiment, the description of the same components as those in the first embodiment or the second embodiment is omitted. For example, the hardware configuration of the authentication system 1 may be the same as that in the first embodiment.

### [3-1. Overview of Third Embodiment]

In the third embodiment, in the same manner as in the first embodiment and the second embodiment, a case in which the user changes the model from the first user terminal 30A to the second user terminal 30B is taken as an example. However, in the third embodiment, a case in which, when the telephone number is to be changed, the code-for-payment authentication in which the second user terminal 30B is used to read the code C30 for payment displayed on the first user terminal 30A is executed in place of the card scan authentication is taken as an example.

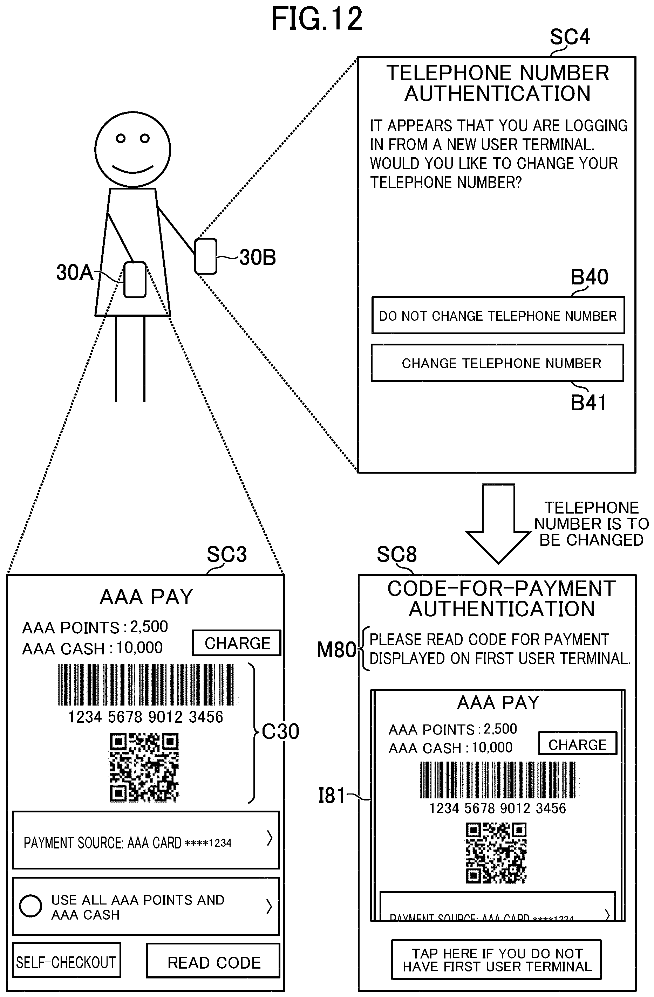

FIG. 12 is a view for illustrating an example of screens displayed on the second user terminal 30B in the third embodiment. For example, when the user logs in to the payment service from the second user terminal 30B, the second user terminal 30B displays the same change necessity/unnecessity screen SC4 as that in the first embodiment or the second embodiment on the display unit 35B as in the upper right of FIG. 12. The display flow of the change necessity/unnecessity screen SC4 may be the same as that in the first embodiment or the second embodiment. A flow that is followed after the user selects the button B40 may also be the same as that in the first embodiment or the second embodiment.

For example, when the user selects the button B41, the second user terminal 30B activates the photographing unit 36B, and displays the reading screen SC8 for reading the code C30 for payment by the photographing unit 36B on the display unit 35B. On the reading screen SC8, a photographed image I81, which has been generated by the photographing unit 36B, together with a message M80, which prompts the user to display the code C30 for payment on the first user terminal 30A, is displayed. As in the lower left of FIG. 12, the user operates the first user terminal 30A to display the code screen SC3 on the display unit 35A.

When the model is to be changed, there is a possibility that a SIM card in the first user terminal 30A may be removed or invalid. When the first user terminal 30A cannot connect to a public communication line, the first user terminal 30A may communicate to/from each of the authentication server 10 and the payment execution server 20 through use of other communication means such as a wireless LAN to display the code screen SC3 on the display unit 35A. The first user terminal 30A may store an offline code ID in advance without any particular communication, and display the code screen SC3 on the display unit 35A.

For example, when the user displays the code screen SC3 on the first user terminal 30A, the user uses the photographing unit 36B of the second user terminal 30B to read the code C30 for payment. The code C30 for payment may be a barcode or a two-dimensional code, and at least one thereof may be read. The second user terminal 30B transmits the code ID acquired from the code C30 for payment to the authentication server 10. When the authentication server 10 acquires the code ID from the second user terminal 30B, the authentication server 10 verifies the validity of the code ID. When the authentication server 10 confirms the validity of the code ID, the authentication server 10 executes the code-for-payment authentication by determining whether or not the user ID of the user who has logged in from the second user terminal 30B matches the user ID associated with the code ID.

As described above, the authentication system 1 according to the third embodiment executes the code-for-payment authentication based on the code C30 for payment that is used to perform payment. This enables the user to execute the code-for-payment authentication by performing an operation for displaying the code C30 for payment (for example, an operation for starting the payment app) to which the user is accustomed, and hence the authentication system 1 can improve the convenience of the user. Further, the code C30 for payment can also be used for authentication, and hence it is possible to save costs for developing the code for authentication. Details of the third embodiment are described below.

### [3-2. Functions implemented in Authentication System according to Third Embodiment]

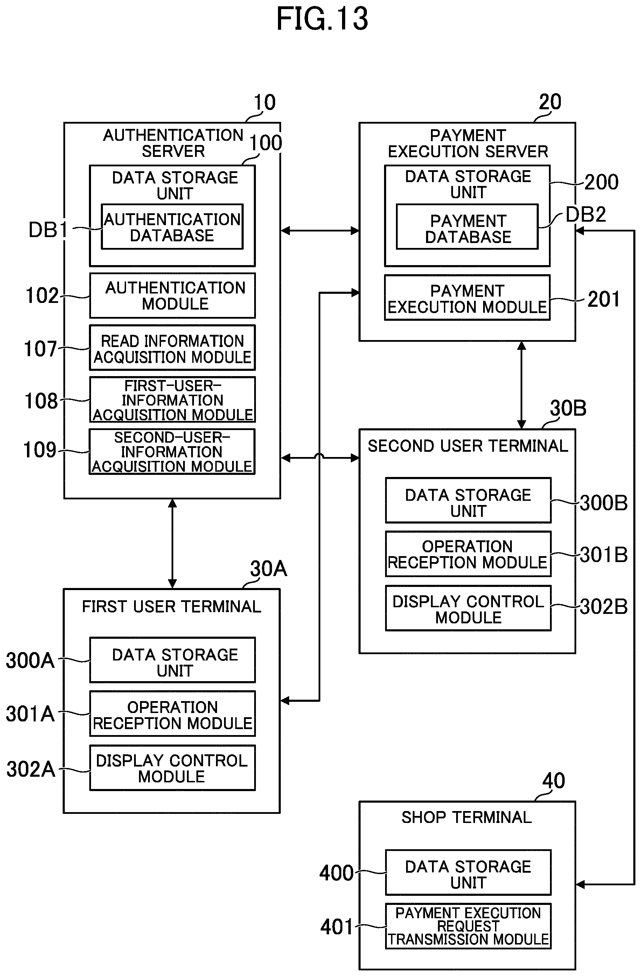

FIG. 13 is a diagram for illustrating an example of functions implemented in the authentication system 1 according to the third embodiment. Some of the functions described in the first embodiment or the second embodiment are not shown in FIG. 13, but the authentication system 1 according to the third embodiment may include the function described in the first embodiment or the second embodiment. Respective units and modules implemented by the authentication system 1 according to the third embodiment can be configured by combining some units or modules into a single device, or by distributing each unit or module into smaller devices, for example.

The authentication system 1 according to the third embodiment is not required to include at least one of the function described in the first embodiment (function of switching the authentication depending on the change necessity/unnecessity information) or the function described in the second embodiment (function of performing the determination regarding the authentication condition). The authentication system 1 according to the third embodiment is not required to include the function described in the first embodiment, and is not required to execute the telephone number authentication in the first place, and the telephone number is not required to be registered in the payment service. The authentication system 1 according to the third embodiment is not required to include the function described in the second embodiment, and is not required to particularly execute the determination regarding the authentication condition.

As described above, a mode in which the authentication system 1 does not include at least one of the function described in the first embodiment or the function described in the second embodiment and includes the function described in the third embodiment is within the scope of the present disclosure. As a matter of course, a mode in which the authentication system 1 includes the at least one and the function described in the third embodiment is also within the scope of the present disclosure. Those points are matters that a person skilled in the art can naturally understand from the description of the present disclosure.

### [3-2-1. Functions implemented in Authentication Server]

For example, the authentication server 10 includes the data storage unit 100, the authentication module 102, a read information acquisition module 107, a first-user-information acquisition module 108, and a second-user-information acquisition module 109. Each of the read information acquisition module 107, the first-user-information acquisition module 108, and the second-user-information acquisition module 109 is implemented by the control unit 11.

### [Data Storage Unit]

The data storage unit 100 may be the same as that in the first embodiment or the second embodiment. For example, the data storage unit 100 stores data for the code-for-payment authentication. In the third embodiment, the user ID and the code ID that are stored in the authentication database DB1 are used for the code-for-payment authentication.

### [Read Information Acquisition Module]

When the code C30 for payment displayed on the first user terminal 30A of the user who uses the payment service is read by the second user terminal 30B different from the first user terminal 30A, the read information acquisition module 107 acquires the code ID read from the code C30 for payment. For example, the read information acquisition module 107 acquires the code ID from the second user terminal 30B. The read information acquisition module 107 may acquire the code ID through another computer other than the second user terminal 30B.

In the third embodiment, the code ID is an example of read information. Thus, the code ID as used herein can be read as the read information. The read information is information read from the code C30 for payment. The read information can also be said to be information encoded into the code C30 for payment. The read information may be any information that can be used for both the payment and the code-for-payment authentication, and is not limited to a code ID. For example, the read information may be information for offline payment, a URL of the payment service, authentication information (for example, a user ID or a login account) other than the code ID, a terminal ID, or other information.

### [First-user-information Acquisition Module]

The first-user-information acquisition module 108 acquires the user ID based on the code ID acquired as the read information. The user ID acquired by the first-user-information acquisition module 108 is an example of first user information. Thus, the "user ID acquired by the first-user-information acquisition module 108" as used herein can be read as "first user information." The first user information is information relating to the user who has logged in from the first user terminal 30A. For example, the first user information is the user identification information on the user who has logged in from the first user terminal 30A.

The first user information is not limited to the user ID. The first user information may be any information that is used for the code-for-payment authentication. For example, the first user information may be the login account of the user who has logged in from the first user terminal 30A. The first user information is not limited to the user identification information exemplified by the user ID being one example. The first user information may be information associated with the user identification information (information that can be retrieved from the user identification information). For example, the first user information may be a telephone number, a terminal ID, payment type information, or other information associated with the user identification information.

In the third embodiment, the first-user-information acquisition module 108 acquires, as the first user information, the user ID associated with the code ID acquired as the read information. For example, the first-user-information acquisition module 108 may request the payment execution server 20 for the user ID associated with the code ID acquired as the read information. The payment execution server 20 acquires, based on the request received from the authentication server 10, the user ID associated with the code ID from the payment database DB2, and transmits the acquired user ID to the authentication server 10 as the first user information. The first-user-information acquisition module 108 acquires the user ID from the payment execution server 20 as the first user information. When the code ID and the user ID are associated with each other in the authentication database DB1, the first-user-information acquisition module 108 may acquire the user ID associated with the code ID acquired as the read information from the authentication database DB1.

For example, the authentication server 10 is not required to manage the association between the code ID and the user ID. In this case, the first-user-information acquisition module 108 acquires the user ID associated with the code ID acquired as the read information from a computer (for example, the payment execution server 20) that manages the association between the code ID and the user ID. In this case, the second user terminal 30B may transmit the code ID read from the code C30 for payment to the payment execution server 20. The payment execution server 20 may identify the user ID associated with the code ID based on the payment database DB2, and transmit the user ID to the authentication server 10. The first-user-information acquisition module 108 acquires, as the first user information, the user ID transmitted by the payment execution server 20.

### [Second-user-information Acquisition Module]

The second-user-information acquisition module 109 acquires the user ID of the user who has logged in to the payment service from the second user terminal 30B. The user ID acquired by the second-user-information acquisition module 109 is an example of second user information. Thus, the "user ID acquired by the second-user-information acquisition module 109" as used herein can be read as "second user information." The second user information is information relating to the user who has logged in from the second user terminal 30B. For example, the second user information is the user identification information on the user who has logged in from the second user terminal 30B.

The second user information is not limited to the user ID. The second user information may be any information that is used for the code-for-payment authentication. For example, the second user information may be the login account of the user who has logged in from the second user terminal 30B. The second user information is not limited to the user identification information exemplified by the user ID being one example. The second user information may be information associated with the user identification information (information that can be retrieved from the user identification information). For example, the second user information may be a telephone number, a terminal ID, payment type information, or other information associated with the user identification information.

In the third embodiment, the second-user-information acquisition module 109 acquires the user ID serving as the second user information based on an execution result of the login authentication executed from the second user terminal 30B. For example, the second-user-information acquisition module 109 refers to the authentication database DB1 to acquire the user ID associated with the login account input in the login authentication executed from the second user terminal 30B.

For example, when a session between the authentication server 10 and the second user terminal 30B is managed by a session ID after the login authentication is executed, the second-user-information acquisition module 109 may acquire the user ID serving as the second user information based on the session ID. The session ID may be stored in the authentication database DB1. The second-user-information acquisition module 109 acquires, as the second user information, the user ID associated with the session ID acquired from the second user terminal 30B.

### [Authentication Module]

The authentication module 102 may be the same as that in the first embodiment or the second embodiment. When the read information is acquired, the authentication module 102 executes the code-for-payment authentication using the code C30 for payment. For example, when the read information is acquired, the authentication module 102 executes the code-for-payment authentication based on the user ID of the user who has logged in to the payment service from the first user terminal 30A and the user ID of the user who has logged in to the payment service from the second user terminal 30B. The authentication module 102 determines that the code-for-payment authentication has failed when those user IDs do not match, and determines that the code-for-payment authentication has been successful when those user IDs match.

In the third embodiment, when the read information is acquired, the authentication module 102 executes the code-for-payment authentication based on the user ID acquired by the first-user-information acquisition module 108 and the user ID acquired by the second-user-information acquisition module 109. The authentication module 102 may determine that the code-for-payment authentication has failed when those user IDs do not match, and determine that the code-for-payment authentication has been successful when those user IDs match.

A method of executing the code-for-payment authentication is not limited to the above-mentioned example. The authentication module 102 may execute the code-for-payment authentication when the read information is acquired. For example, the authentication module 102 may use the read information itself in the code-for-payment authentication. The authentication module 102 may execute the code-for-payment authentication by determining whether or not the code ID, which is an example of the read information, is stored in the authentication database DB1. The authentication module 102 may determine that the code-for-payment authentication has failed when the code ID, which is an example of the read information, is not stored in the authentication database DB1, and determine that the code-for-payment authentication has been successful when the code ID is stored in the authentication database DB1.

### [3-2-2. Functions implemented in Payment Execution Server]

The functions of the payment execution server 20 may be the same as those in the first embodiment or the second embodiment. In the third embodiment, a case in which, when the second user terminal 30B reads the code C30 for payment displayed on the first user terminal 30A, the second user terminal 30B transmits the read information to the authentication server 10 is taken as an example. However, the second user terminal 30B may transmit the read information to the payment execution server 20. The payment execution server 20 refers to the payment database DB2 to identify the user ID corresponding to the read information. The payment execution server 20 transmits the identified user ID to the authentication server 10. The authentication server 10 may execute the code-for-payment authentication based on the user ID received from the payment execution server 20.

### [3-2-3. Functions implemented in First User Terminal]

The functions of the first user terminal 30A may be the same as those in the first embodiment or the second embodiment.

### [3-2-4. Functions implemented in Second User Terminal]

The functions of the second user terminal 30B may be the same as those in the first embodiment or the second embodiment. The display control module 302B of the second user terminal 30B in the third embodiment displays the reading screen SC8 on the display unit 35B.

### [3-2-5. Functions implemented in Shop Terminal]

The functions of the shop terminal 40 may be the same as those in the first embodiment or the second embodiment.

### [3-3. Processing executed in Authentication System according to Third Embodiment]

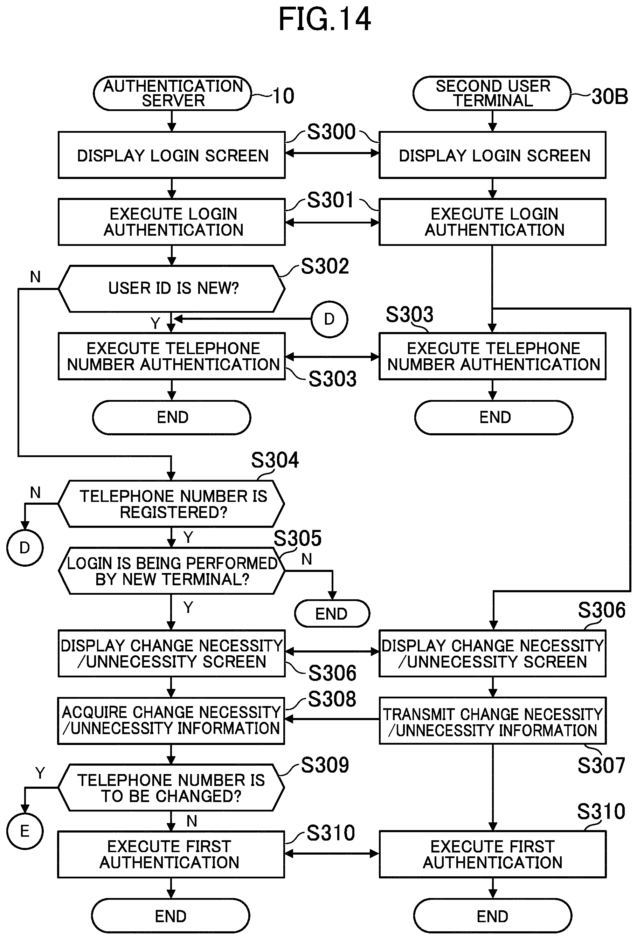

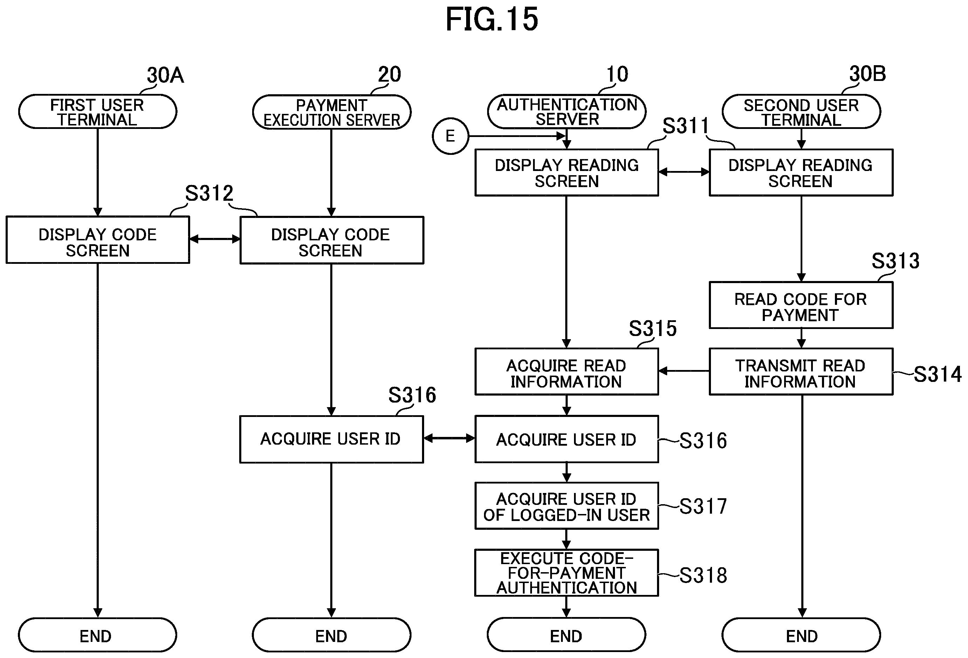

FIG. 14 and FIG. 15 are flow charts for illustrating an example of processing executed in the authentication system 1 according to the third embodiment. In FIG. 14 and FIG. 15, processing executed when the user logs in to the payment service from the second user terminal 30B within the processing executed in the authentication system 1 is illustrated. The processing of FIG. 14 and FIG. 15 is executed by the control units 11, 31A, and 31B executing programs stored in the storage units 12, 32A, and 32B, respectively. The steps of FIG. 14 and FIG. 15 are an example of the authentication method in the third embodiment.

As in FIG. 14, the processing steps of from Step S300 to Step S310 are the same as the processing steps of from Step S100 to Step S110, respectively. In FIG. 14, a case in which the authentication system 1 according to the third embodiment includes the function in the first embodiment is illustrated as an example, but in a case in which the authentication system 1 according to the third embodiment does not include the function in the first embodiment, when the result of the determination of Step S305 is positive, the process may advance to the processing step of Step S311 without execution of the processing steps of from Step S306 to Step S310.

When it is determined in Step S309 that the change necessity/unnecessity information indicates that the telephone number is to be changed (Y in Step S309), the process advances to FIG. 15, and the authentication server 10 cooperates with the second user terminal 30B to execute processing for displaying the reading screen SC8 (Step S311). In Step S311, the authentication server 10 transmits display data for the reading screen SC8 to the second user terminal 30B. The second user terminal 30B displays, based on the display data for the reading screen SC8, the reading screen SC8 on the display unit 35B by activating the photographing unit 36B. The user operates the first user terminal 30A to start the payment app.

When the first user terminal 30A starts the payment app, the first user terminal 30A cooperates with the payment execution server 20 to execute processing for displaying the code screen SC3 (Step S312). In Step S312, the first user terminal 30A cooperates with the payment execution server 20 to execute the login authentication. When the user has already logged in, the login authentication is not required to be executed. The payment execution server 20 issues a code ID, determines the expiration date and time, and stores the code ID and the expiration date and time in the payment database DB2 in association with the user ID and the login account of the user who has logged in from the first user terminal 30A. When the first user terminal 30A receives the display data for the code screen SC3 from the payment execution server 20, the first user terminal 30A displays the code screen SC3 on the display unit 35A. The display data for the code screen SC3 may be transmitted by the authentication server 10 instead of being transmitted by the payment execution server 20.

The second user terminal 30B uses the photographing unit 36B to read the code C30 for payment displayed on the code screen SC3 of the first user terminal 30A (Step S313). The second user terminal 30B transmits, as the read information, the code ID acquired from the code C30 for payment to the authentication server 10 (Step S314). The authentication server 10 acquires, as the read information, the code ID from the second user terminal 30B (Step S315). The authentication server 10 transmits the code ID to the payment execution server 20, and acquires the user ID associated with the code ID from the payment execution server 20 (Step S316). The authentication server 10 acquires the user ID of the logged-in user from the second user terminal 30B (Step S317). The authentication server 10 executes the code-for-payment authentication based on the user ID acquired in Step S316 and the user ID acquired in Step S317 (Step S318), and the process ends. The processing for acquiring the user ID of the logged-in user, which is executed in Step S317, may include, for example, processing for acquiring the user ID of the logged-in user from the second user terminal 30B through the payment execution server 20. Specifically, the second user terminal 30B may be subjected to the login authentication by the payment execution server 20, and the authentication server 10 may acquire the user ID of the logged-in second user terminal 30B from the payment execution server 20. Further, the processing for acquiring the user ID associated with the code ID, which is executed in Step S316, may be executed by the authentication server 10. In this case, the code ID, the expiration date and time, and the corresponding user ID are shared in advance by the payment execution server 20. Further, the authentication executed in Step S318 may be executed by the payment execution server 20.

### [3-4. Summary of Third Embodiment]

The authentication system 1 according to the third embodiment acquires the read information read from the code C30 for payment in the payment service when the code C30 for payment displayed on the first user terminal 30A of the user who uses the payment service is read by the second user terminal 30B different from the first user terminal 30A. When the read information is acquired, the authentication system 1 executes the code-for-payment authentication using the code C30 for payment. Accordingly, the authentication system 1 enables the user to execute the code-for-payment authentication by performing the operation for displaying the code C30 for payment (for example, the operation for starting the payment app) to which the user is accustomed, and hence the authentication system 1 can improve the convenience of the user. The authentication system 1 can use the code C30 for payment, which is used for the payment, also for the authentication at the time of changing the model or the like, and thus is not required to issue a code for authentication. As a result, the authentication system 1 can reduce development costs for implementing the authentication function.

Further, the authentication system 1 acquires the second user information relating to the user who has logged in to the payment service from the second user terminal 30B. When the read information is acquired, the authentication system 1 executes the code-for-payment authentication based on the first user information relating to the user who has logged in to the payment service from the first user terminal 30A and the second user information. This enables the authentication system 1 to improve the security in the payment service through use of the code C30 for payment.

Further, the authentication server 10 includes the authentication module 102, the read information acquisition module 107, the second-user-information acquisition module 109, and the first-user-information acquisition module 108. When the read information is acquired, the authentication server 10 executes the code-for-payment authentication based on the first user information acquired by the first-user-information acquisition module 108 and the second user information. The authentication server 10 can quickly complete the code-for-payment authentication.

### [4. Modification Examples]

The present disclosure is not limited to the first to third embodiments described above. The present disclosure can be modified suitably without departing from the spirit of the present disclosure. Now, modification examples regarding each of the first to third embodiments are described.

### [4-1. Modification Examples regarding First Embodiment]

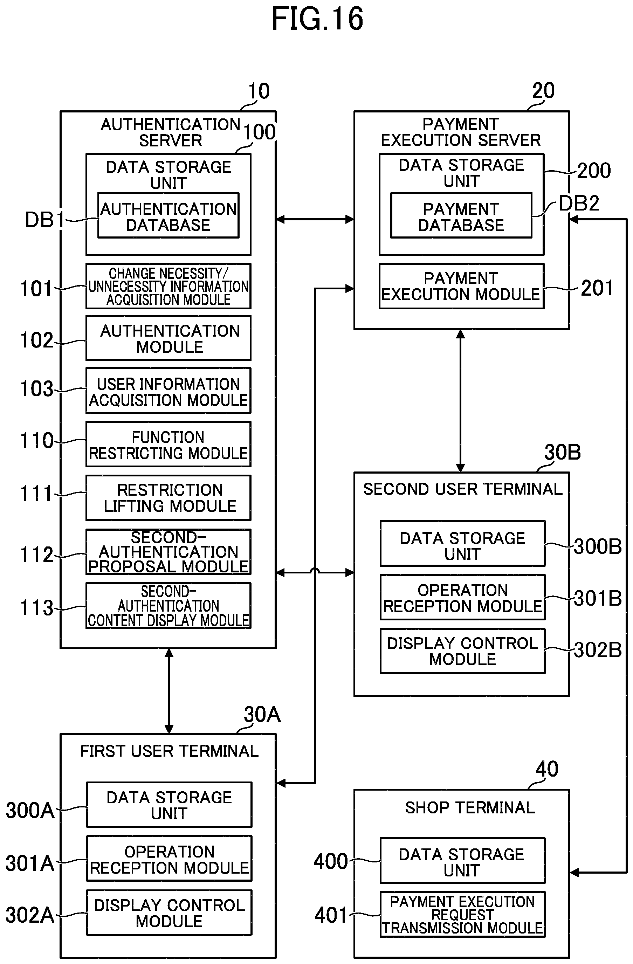

FIG. 16 is a diagram for illustrating an example of functions implemented in modification examples regarding the first embodiment. For example, the authentication server 10 includes the user information acquisition module 103, a function restricting module 110, a restriction lifting module 111, a second-authentication proposal module 112, and a second-authentication content display module 113. Each of the user information acquisition module 103, the function restricting module 110, the restriction lifting module 111, the second-authentication proposal module 112, and the second-authentication content display module 113 is implemented by the control unit 11.

### [Modification Example 1-1]

For example, as described somewhat in the first embodiment as well, in the case in which the change necessity/unnecessity information indicates that the telephone number is not to be changed, the authentication module 102 may execute, as the first authentication, an authentication similar to the authentication executed through use of the telephone number on the first user terminal 30A. For example, when the change necessity/unnecessity information indicates that the telephone number is not to be changed and the user performs the operation for the first authentication, the authentication module 102 may execute, as the first authentication, an authentication similar to the authentication executed through use of the telephone number on the first user terminal 30A. The authentication executed through use of the telephone number on the first user terminal 30A is a telephone number authentication performed from the first user terminal 30A. In other words, the authentication executed through use of the telephone number on the first user terminal 30A is an authentication for verifying the telephone number of the first user terminal 30A (the telephone number used by the user on the second user terminal 30B as well).

In the example of FIG. 2, the telephone number authentication executed from the telephone number authentication screen SC2 corresponds to the authentication executed through use of the telephone number on the first user terminal 30A. As described in the first embodiment, the telephone number authentication is not limited to such an authentication using an outgoing call from the telephone number of the user as in FIG. 2. The telephone number authentication may be an authentication using an incoming call to the telephone number of the user or an authentication using an SMS message. The authentication module 102 executes the telephone number authentication from the first user terminal 30A in the same flow as a publicly-known telephone number authentication.

An authentication similar to the authentication executed through use of the telephone number on the first user terminal 30A is an authentication performed by the same authentication method as the authentication method executed through use of the telephone number on the first user terminal 30A. In the example of FIG. 3, the telephone number authentication executed from the first authentication screen SC5 corresponds to the first authentication similar to the authentication executed through use of the telephone number on the first user terminal 30A. When the telephone number authentication executed from the first authentication screen SC5 is an authentication using an outgoing call from the telephone number of the user, the authentication using an outgoing call from the telephone number of the user corresponds to the first authentication.

When the telephone number authentication executed from the first authentication screen SC5 is an authentication using an incoming call to the telephone number of the user or an authentication using an SMS message, the authentication using an incoming call to the telephone number of the user or the authentication using an SMS message may correspond to the first authentication. The authentication module 102 may execute the first authentication in the same flow as that of the authentication executed through use of the telephone number on the first user terminal 30A.

In the case in which the change necessity/unnecessity information indicates that the telephone number is not to be changed, the authentication system 1 according to Modification Example 1-1 executes, as the first authentication, the authentication similar to the authentication executed through use of the telephone number on the first user terminal 30A. Accordingly, even when a malicious third party acquires the login account and the password of the user, the malicious third party cannot be successful in the authentication similar to the authentication executed through use of the telephone number on the first user terminal 30A, and hence the authentication system 1 can improve the security of the payment service. From a perspective of the user, the user is only required to execute an authentication similar to the authentication that the user executed before from the first user terminal 30A (an authentication the flow of which is already known to the user), and hence the authentication system 1 can improve the security while improving the convenience of the user.

### [Modification Example 1-2]

For example, it is assumed that a malicious third party acquires the login account and the password of the user and logs in to the payment service by impersonating the user. Even when the third party knows the telephone number of the user, it is difficult for the third party to set the telephone number of the user in a terminal of the third party (for example, it is difficult to write the telephone number of the user into a SIM card in a smartphone of the third party without permission), and hence it is considered to be extremely difficult to become successful in the first authentication.

Meanwhile, when the third party logs in to the payment service from his or her own terminal by impersonating the user and falsely claims that the telephone number of the user has been changed, the first authentication is not executed. In this case, there is a possibility that the third party may break through the second authentication by some method. In view of this, on the assumption that the third party may also fraudulently use the payment service, a restriction may be imposed on the use of the payment service when the second authentication is executed. When the user or the administrator can notice the fraudulent use during the restriction, damage can be minimized.

The authentication system 1 according to Modification Example 1-2 includes the function restricting module 110. When the second authentication is executed, the function restricting module 110 restricts a function relating to the payment service to be used from the second user terminal 30B more than when the first authentication is executed. The function is information processing to be executed in the payment service. For example, payment, money addition, remittance, withdrawal, changing of the payment source, changing of the money addition source, changing of the information registered in the payment service, or other processing corresponds to the function. When the predetermined service is another service other than the payment service, the function may be any information processing to be executed in the other service.

For example, the function restricting module 110 may restrict the function by setting an upper limit to the payment amount per time or within a predetermined period (for example, per day, per week, or per month). The function restricting module 110 may restrict the function by setting an upper limit to the number of times of payment within a predetermined period. The function restricting module 110 may restrict the function by setting an upper limit to an amount of money that can be added per time or within a predetermined period. The function restricting module 110 may restrict the function by setting an upper limit to the number of times of money addition within a predetermined period.

For example, the function restricting module 110 may restrict the function by setting an upper limit to a remittance amount per time or within a predetermine period. The function restricting module 110 may restrict the function by setting an upper limit to the number of times of remittance within a predetermined period. The function restricting module 110 may restrict the function by not accepting the changing of the payment source. The function restricting module 110 may restrict the function by not accepting the changing of the money addition source. The function restricting module 110 may restrict the function by not accepting the changing of the information registered in the payment service. For example, the function restricting module 110 may restrict the use of some functions such as the withdrawal.

For example, when the second authentication is executed while the payment service has been logged in to with a certain login account, the function restricting module 110 restricts the function by storing function restriction information indicating that the function is restricted in the authentication database DB1 in association with the login account. The function restriction information indicates whether or not the function is restricted. For example, the function restriction information may be information such as a flag that is any one of a value indicating that the function is not restricted or a value indicating that the function is restricted. The function restricting module 110 may store the function restriction information in another database other than the authentication database DB1. The function restricting module 110 may associate the function restriction information with user identification information other than the login account.

For example, when the payment service is used with a certain login account, the function restricting module 110 refers to the function restriction information associated with the certain login account. When the function restriction information indicates that the function is not restricted, the function restricting module 110 provides the payment service without restricting the function. When the function restriction information indicates that the function is restricted, the function restricting module 110 provides the payment service by restricting the function. Examples of the restriction on the function are as described above. When the first authentication is executed, the function restricting module 110 does not restrict the function.

The authentication system 1 according to Modification Example 1-2 restricts, when the second authentication is executed, the function relating to the service to be used from the second user terminal 30B more than when the first authentication is executed. Accordingly, even when a third party breaks through the second authentication, the authentication system 1 can restrict the function so as to prevent damage from occurring in the first place or minimize the damage. As a result, the authentication system 1 can improve the security while improving the convenience of the user.

### [Modification Example 1-3]

For example, the restriction on the function described in Modification Example 1-2 may be lifted under a predetermined lifting condition. The lifting condition is a condition for lifting the restriction on the function. That is, the lifting condition is a condition serving as a criterion for whether or not to lift the restriction on the function. Lifting the restriction on the function refers to changing a state in which the function is restricted to a state in which the function is not restricted. In other words, lifting the restriction on the function refers to returning the state to a state that existed before the function was restricted.

The authentication system 1 according to Modification Example 1-3 includes the restriction lifting module 111. The restriction lifting module 111 lifts the restriction on the function when the predetermined lifting condition is satisfied. For example, the restriction lifting module 111 determines whether or not each user for whom the function is restricted (each login account for which the function is restricted) satisfies the lifting condition. When it is determined that the user does not satisfy the lifting condition, the restriction lifting module 111 does not lift the restriction on the function for the user, and when it is determined that the user satisfies the lifting condition, the restriction lifting module 111 lifts the restriction on the function for the user.

In Modification Example 1-3, a case in which a lapse of a predetermined restriction period corresponds to the lifting condition is taken as an example. The restriction period is a period during which the function is restricted. The restriction period can also be said to be information that can identify when the restriction on the function is lifted. For example, a period from the execution of the second authentication (from the start of the restriction on the function) until a predetermined time (for example, one week) later may correspond to the restriction period.

In Modification Example 1-3, the function restricting module 110 associates restriction period information that can identify the restriction period with the function restriction information. The restriction period information may be included in the function restriction information. When the second authentication is executed, the function restricting module 110 determines a period from a current date and time until a predetermined time later as the restriction period, and associates the restriction period information indicating the determined restriction period with the function restriction information. The restriction period information may indicate a date and time at which the restriction on the function is ended. In this case, when the second authentication is executed, the function restricting module 110 may associate the restriction period information indicating a date and time a predetermined time later than the current date and time with the function restriction information. The restriction period information may indicate a date and time at which the restriction on the function is started. In this case, when the second authentication is executed, the function restricting module 110 associates the restriction period information indicating the current date and time with the function restriction information.

For example, the restriction lifting module 111 determines whether or not the restriction period has expired based on the restriction period information, to thereby determine whether or not the lifting condition is satisfied. The restriction lifting module 111 determines that the lifting condition is not satisfied when it is determined that the restriction period has not expired, and determines that the lifting condition is satisfied when it is determined that the restriction period has expired. The restriction lifting module 111 lifts the restriction on the function by changing the function restriction information from a state in which the function restriction information indicates that the function is restricted to a state in which the function restriction information indicates that the function is not restricted. For example, when the function restriction information is such a flag as described in Modification Example 1-2, the restriction lifting module 111 lifts the restriction on the function by changing the value of the flag.

The lifting condition may be any condition that is determined in advance, and may be another condition other than the expiration of the restriction period. For example, the lifting condition may be that there is no suspicion of fraud in the use of the payment service after the second authentication. The suspicion of fraud may be determined visually by an operator of the payment service, or may be automatically determined based on a predetermined fraud detection program. The fraud detection program may be the same as a program used in a publicly-known payment service. For example, the fraud detection program may be a program that determines whether or not there is a suspicion of fraud by comprehensively considering a payment amount, a payment date and time, a payment location, the number of times of payment, an amount of money added, a date and time of money addition, the number of times of money addition, a payment source, a money addition source, or another factor.

For example, a usage history of the payment service after the second authentication may be stored in the authentication database DB1, the payment database DB2, or another database. The restriction lifting module 111 presents the usage history to the operator of the payment service, and receives a confirmation result of the operator from a terminal of the operator. The restriction lifting module 111 may determine that the lifting condition is not satisfied when the confirmation result of the operator indicates that there is fraud, and determine that the lifting condition is satisfied when the confirmation result of the operator indicates that there is no fraud.

For example, the lifting condition may be that another authentication other than the second authentication is performed from the second user terminal 30B. The other authentication is an authentication different from both the login authentication and the first authentication. For example, the other authentication may be any one of the knowledge authentication, the possession authentication, or the biometric authentication. The restriction lifting module 111 determines that the lifting condition is not satisfied when it is determined that the other authentication has not been executed from the second user terminal 30B, and determines that the lifting condition is satisfied when it is determined that the other authentication has been executed from the second user terminal 30B. The lifting condition may be any other condition.

The authentication system 1 according to Modification Example 1-3 lifts the restriction on the function when a predetermined lifting condition is satisfied. This enables the user to use the payment service with the restriction on the function being lifted, and hence the authentication system 1 can ensure the security of the payment service, and can also improve the security while improving the convenience of the user. For example, even when the second authentication is executed, the authentication system 1 can also restrict the function when there is a suspicion of fraud and lift the restriction on the function when the suspicion of fraud is no longer present.

### [Modification Example 1-4]

For example, as the second authentication to be executed when the telephone number of the user is not to be changed, only one authentication method may be prepared, or a plurality of authentication methods may be prepared. When a plurality of authentication methods are prepared, the plurality of authentication methods may include a second authentication that cannot be handled depending on the user. In view of this, in Modification Example 1-4, a case in which a second authentication that can be handled by the user is proposed from among a plurality of authentication methods is taken as an example.

The authentication system 1 according to Modification Example 1-4 includes the user information acquisition module 103 and the second-authentication proposal module 112. The user information acquisition module 103 may be the same as the user information acquisition module 103 described in the second embodiment, but a case in which the user information acquisition module 103 in Modification Example 1-4 has a different function from that of the user information acquisition module 103 described in the second embodiment is taken as an example. The user information acquisition module 103 in Modification Example 1-4 acquires the user information relating to the user in the case in which the change necessity/unnecessity information indicates that the telephone number is to be changed.

The user information in Modification Example 1-4 is information acquired from the second user terminal 30B or information associated with the user ID or the login account of the user who has logged in from the second user terminal 30B. The user information in Modification Example 1-4 may be the same as the user information described in the second embodiment, or may be information different from the user information described in the second embodiment. In Modification Example 1-4, as an example of the user information, a case in which the user information is information indicating whether or not the communication unit 33B of the second user terminal 30B supports the short-range wireless communication function is described. The user information is only required to be some information on the user, and is not limited to the example in Modification Example 1-4.

For example, the second user terminal 30B determines whether or not the communication unit 33B supports the short-range wireless communication function. This determination method may be a publicly-known method. For example, the communication unit 33B determines whether or not the communication unit 33B supports the short-range wireless communication function based on model information on the second user terminal 30B. For example, when information indicating whether or not the communication unit 33B supports the short-range wireless communication function is stored in advance in the second user terminal 30B, the second user terminal 30B may determine whether or not the communication unit 33B supports the short-range wireless communication function based on the stored information. The second user terminal 30B transmits, based on a result of the determination, the user information indicating whether or not the communication unit 33B supports the short-range wireless communication function to the authentication server 10. The user information acquisition module 103 acquires the user information from the second user terminal 30B.

The second-authentication proposal module 112 proposes an authentication method for which the user information satisfies a predetermined authentication condition to the user as the second authentication. In the payment service, a plurality of authentication methods may be prepared, or only one authentication method may be prepared. The second-authentication proposal module 112 may have at least some of the functions of the authentication condition determination module 104 described in the second embodiment. The second-authentication proposal module 112 may have at least some of the functions of the authentication content display module 105 described in the second embodiment. The second-authentication proposal module 112 may have at least some of the functions of the other-authentication content display module 106 described in the second embodiment.

The authentication condition is as described in the second embodiment. The authentication condition in Modification Example 1-4 is an authentication condition for the second authentication. The second-authentication proposal module 112 may determine whether or not the user information satisfies the authentication condition in the same manner as the authentication condition determination module 104 in the second embodiment. For example, as in Modification Example 1-4, in a case in which the user information indicates whether or not the communication unit 33B supports the short-range wireless communication function, the second-authentication proposal module 112 determines that the user information does not satisfy the authentication condition when the user information indicates that the communication unit 33B does not support the short-range wireless communication function, and determines that the user information satisfies the authentication condition when the user information indicates that the communication unit 33B supports the short-range wireless communication function.

In Modification Example 1-4, it is assumed that, in the same manner as in the second embodiment, two authentication methods, that is, the card scan authentication and the one-time password authentication, are prepared as the second authentications. For example, when it is determined that the user information satisfies the authentication condition, the second-authentication proposal module 112 proposes the card scan authentication by displaying the second authentication screen SC6 for the card scan authentication on the second user terminal 30B. A display flow of the second authentication screen SC6 in this case may be the same as that in the first embodiment.

For example, when it is determined that the user information does not satisfy the authentication condition, the second-authentication proposal module 112 proposes the one-time password authentication to the user by displaying the second authentication screen SC6 for the one-time password authentication on the second user terminal 30B. This second authentication screen SC6 may be the same as the other-authentication screen SC7 in the second embodiment. In the second embodiment, the case in which the one-time password authentication is another authentication different from the second authentication has been taken as an example, but in Modification Example 1-4, the one-time password authentication is also a type of second authentication.

The authentication module 102 in Modification Example 1-4 executes the second authentication when the second authentication is proposed. For example, the authentication module 102 executes the second authentication when the second authentication is proposed and the user performs an operation for the second authentication. As described in the first embodiment, the flow in which the authentication module 102 executes the second authentication may be the same as a publicly-known flow. The authentication module 102 executes the second authentication proposed by the second-authentication proposal module 112 from among the plurality of authentication methods. For example, when the card scan authentication is proposed, the authentication module 102 executes the card scan authentication. When the one-time password authentication is proposed, the authentication module 102 executes the one-time password authentication.

The authentication system 1 according to Modification Example 1-4 acquires the user information in the case in which the change necessity/unnecessity information indicates that the telephone number is to be changed. The authentication system 1 proposes an authentication method for which the user information satisfies a predetermined authentication condition to the user as the second authentication. This enables the user to execute the second authentication through use of the authentication method corresponding to the authentication condition satisfied by the user information on the user himself or herself, and hence the authentication system 1 can improve the security while improving the convenience of the user.

### [Modification Example 1-5]

For example, in Modification Example 1-4, the second-authentication proposal module 112 may determine whether or not the user information satisfies the authentication condition by determining whether or not predetermined information relating to a possession is associated with the user information. In Modification Example 1-5, a case in which the user ID corresponds to the user information is taken as an example. The user information may be user identification information (for example, the login account) other than the user ID. A method by which the user information acquisition module 103 in Modification Example 1-5 acquires the user information exemplified by the user ID being one example may be the same as that of the user information acquisition module 103 in the second embodiment.

The possession is an item used in a so-called possession authentication. For example, the possession is a card such as a credit card. In addition to a credit card, the possession may be, for example, a membership card, a health insurance card, a driver's license, a passport, or an individual number card that can prove identity of the user. For example, a personal authentication may be executed based on the individual number card. When a login is performed from a different terminal with the same login account, in a case in which information on the individual number card is associated with the login account, a scan authentication using the individual number card may be executed again.

The predetermined information is information required for a certain specific second authentication or information indicating presence or absence of the information. For example, when the card scan authentication corresponds to the second authentication, the authentication information (for example, the electronic money number or the loyalty card number) stored in the credit card is required for the second authentication, and hence the predetermined information may be the stored authentication information or information indicating presence or absence of the stored authentication information. In Modification Example 1-5, a case in which the predetermined information is stored in the authentication database DB1 is taken as an example, but the predetermined information may be stored in another database other than the authentication database DB1. For example, the predetermined information may be stored in the payment database DB2.

The predetermined information is not limited to the authentication information such as the electronic money number or the loyalty card number. For example, when the second authentication for verifying the validity of the credit card number is executed, the predetermined information may be the credit card number. When another possession authentication other than the card scan authentication, the knowledge authentication, or the biometric authentication corresponds to the second authentication, authentication information required for each of those authentications or information indicating presence or absence of the required authentication information may correspond to the predetermined information. The second-authentication proposal module 112 may determine whether or not the above-mentioned predetermined information is associated with the user information.

For example, the second-authentication proposal module 112 determines that the user information does not satisfy the authentication condition when it is determined that the predetermined information is not associated with the user information, and determines that the user information satisfies the authentication condition when it is determined that the predetermined information is associated with the user information. In Modification Example 1-5, when it is determined that the authentication information such as the electronic money number or the loyalty card number is not associated with the user information, the second-authentication proposal module 112 determines that the user information does not satisfy the authentication condition, and thus displays the second authentication screen SC6 for the one-time password authentication on the second user terminal 30B. When it is determined that the authentication information such as the electronic money number or the loyalty card number is associated with the user information, the second-authentication proposal module 112 determines that the user information satisfies the authentication condition, and thus displays the second authentication screen SC6 for the card scan authentication on the second user terminal 30B. The subsequent flow of the authentication may be the same as that in Modification Example 1-4.

The authentication system 1 according to Modification Example 1-5 determines whether or not the user information satisfies the authentication condition by determining whether or not predetermined information relating to a possession is associated with the user information. This enables the user to execute the second authentication through use of a specific authentication method when the predetermined information is associated with the user information on the user himself or herself, and hence the authentication system 1 can improve the security while improving the convenience of the user. For example, the authentication system 1 can prevent the second authentication screen SC6 for the card scan authentication from being displayed on the second user terminal 30B even in an environment in which the user cannot execute the card scan authentication with no authentication information such as the electronic money number or the loyalty card number being associated with the user ID.

### [Modification Example 1-6]

For example, when the predetermined service described in the first embodiment is the payment service, the second-authentication proposal module 112 may determine whether or not the predetermined information relating to the payment type that can be set in the payment service is associated with the user information. The payment type that can be set in the payment service is the payment type that can be used by the user in the payment service. For example, the payment type that can be set as the payment source or the money addition source corresponds to the payment type that can be set in the payment service. In Modification Example 1-6, a case in which the payment type of the payment source of the payment app corresponds to the payment type that can be set in the payment service is taken as an example.

In Modification Example 1-6, a case in which the credit card described in Modification Example 1-4 or 1-5 corresponds to the payment type that can be set in the payment service is taken as an example. Further, a case in which the electronic money number or the loyalty card number for an electronic money function or a loyalty point function, which is an additional function of the credit card, corresponds to the predetermined information relating to the payment type exemplified by the credit card being one example is taken as an example. Processing of the second-authentication proposal module 112 in those examples is as described in Modification Example 1-5. For example, when the predetermined information is the authentication information such as the electronic money number or the loyalty card number, the second-authentication proposal module 112 determines whether or not the authentication information such as the electronic money number or the loyalty card number is associated with the user information. The authentication module 102 executes the second authentication based on the predetermined information. The flow of the second authentication may be the same as that in Modification Example 1-5.

The payment type that can be set in the payment service is not limited to the credit card described in Modification Example 1-4 or 1-5. For example, the payment type that can be set in the payment service may be a credit card that does not particularly have an additional function such as the electronic money function or the loyalty point function. In this case, the predetermined information may be information such as the credit card number. The payment type that can be set in the payment service may be another card such as a debit card in place of the credit card. In this case, the predetermined information may be information such as the debit card number.

For example, the payment type that can be set in the payment service may be another payment type other than a card. The payment type that can be set in the payment service may be the bank account, the electronic money, or the loyalty points. In this case, the predetermined information may be information on the bank account, information on the electronic money, or information on the loyalty points. The payment type that can be set in the payment service may be an app of another payment service. In this case, the predetermined information may be information on the app of the other payment service.

The authentication system 1 according to Modification Example 1-6 determines whether or not the predetermined information relating to the payment type that can be set in the payment service is associated with the user information. This enables the user to execute the second authentication through use of a specific authentication method when the predetermined information relating to the payment type that can be set in the payment service is associated with the user information on the user himself or herself, and hence the authentication system 1 can improve the security while improving the convenience of the user. For example, the authentication system 1 can prevent the second authentication screen SC6 for the card scan authentication from being displayed on the second user terminal 30B even in the environment in which the user cannot execute the card scan authentication with no authentication information such as the electronic money number or the loyalty card number being associated with the user ID.

### [Modification Example 1-7]

For example, as described somewhat in Modification Example 1-4 as well, second-authentication content relating to the second authentication may be presented to the user when the user satisfies the authentication condition in the first embodiment as well in the same manner as in the second embodiment. In Modification Example 1-7, the authentication content described in the second embodiment is referred to as "second-authentication content." The description of the authentication content in the second embodiment can be read as description of the second-authentication content. In Modification Example 1-7, in the same manner as in the second embodiment, a case in which the second authentication screen SC6 corresponds to the second-authentication content is taken as an example, but the second-authentication content may be a part of the second authentication screen SC6 in place of the entire second authentication screen SC6.

The authentication system 1 according to Modification Example 1-7 includes the second-authentication content display module 113. When the change necessity/unnecessity information indicates that the telephone number is to be changed and the predetermined authentication condition is satisfied, the second-authentication content display module 113 displays the second-authentication content relating to the second authentication on the second user terminal 30B. For example, the second-authentication content display module 113 displays the second authentication screen SC6, which is an example of the second-authentication content, on the second user terminal 30B by transmitting the display data for the second authentication screen SC6 to the second user terminal 30B.

For example, the second-authentication content display module 113 does not display the second-authentication content on the second user terminal 30B when the change necessity/unnecessity information indicates that the telephone number is not to be changed or the predetermined authentication condition is not satisfied. In this case, the authentication server 10 may display the other-authentication screen SC7 on the second user terminal 30B in the same manner as in the second embodiment, or may not particularly display any content.

The authentication module 102 in Modification Example 1-7 executes the second authentication when the second-authentication content is displayed on the second user terminal 30B. For example, the authentication module 102 executes the second authentication when the second-authentication content is displayed on the second user terminal 30B and the user performs the operation for the second authentication. A flow in which the authentication module 102 executes the second authentication after the second-authentication content is displayed on the second user terminal 30B may be the same as that in the first embodiment or the second embodiment. When the other-authentication screen SC7 is displayed on the second user terminal 30B, the authentication module 102 may execute the other authentication in the same manner as in the second embodiment.

The authentication system 1 according to Modification Example 1-7 displays the second-authentication content on the second user terminal 30B when the change necessity/unnecessity information indicates that the telephone number is to be changed and the authentication condition is satisfied. The authentication system 1 executes the second authentication when the second-authentication content is displayed on the second user terminal 30B. This enables the authentication system 1 to control whether or not to display the second-authentication content depending on whether or not the user satisfies the authentication condition, thereby being able to improve the security while improving the convenience of the user. For example, the authentication system 1 can prevent the second authentication screen SC6 for the card scan authentication from being displayed to the user who does not satisfy the authentication condition and is unable to execute the card scan authentication.

### [Modification Example 1-8]

For example, in Modification Example 1-7, when the change necessity/unnecessity information indicates that the telephone number is to be changed and the predetermined authentication condition is satisfied, the second-authentication content display module 113 may display the second-authentication content and the other-authentication content relating to another authentication different from the second authentication on the second user terminal 30B in a distinguished manner. The other-authentication content is as described in the second embodiment.

Distinguishing the second-authentication content and the other-authentication content from each other refers to displaying the second-authentication content before the other-authentication content, displaying the second-authentication content and the other-authentication content on separate screens, displaying the second-authentication content and the other-authentication content at separate positions on the same screen, or displaying the second-authentication content more emphasized than the other-authentication content. In Modification Example 1-8, a case in which the second-authentication content and the other-authentication content are parts of the screen instead of being the entire screens is taken as an example, but the second-authentication content and the other-authentication content may be the entire screens.

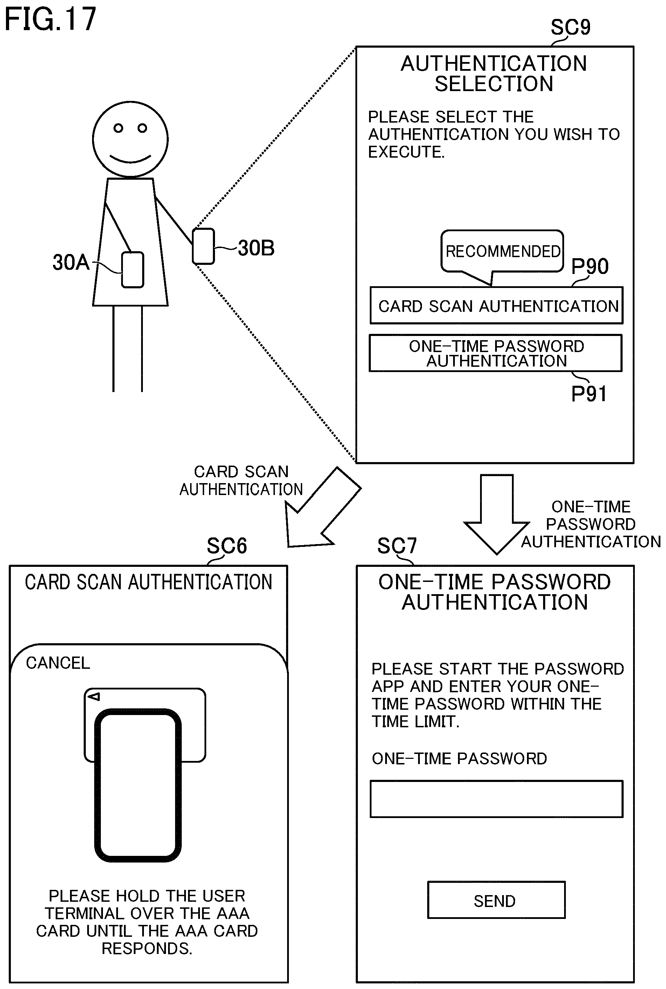

FIG. 17 is a view for illustrating an example of an authentication selection screen displayed on the second user terminal 30B in Modification Example 1-8. As in the upper right of FIG. 17, the second-authentication content display module 113 displays, on the second user terminal 30B, an authentication selection screen SC9 in which a part P90, which is an example of the second-authentication content, and a part P91, which is an example of the other-authentication content, are distinguished from each other. In the example in the upper right of FIG. 17, the second-authentication content display module 113 displays a message such as "RECOMMENDED" near the part P90 to display the part P90 more emphasized than the part P91, to thereby display the part P90 and the part P91 on the second user terminal 30B in a distinguished manner.

A method by which the second-authentication content display module 113 displays the second-authentication content more emphasized than the other-authentication content is not limited to the example of FIG. 17. For example, the second-authentication content display module 113 may display another message other than that in FIG. 17 or another image other than the message, to thereby display the second-authentication content more emphasized than the other-authentication content. The second-authentication content display module 113 may display the second-authentication content above or before the other-authentication content, to thereby display the second-authentication content more emphasized than the other-authentication content. The second-authentication content display module 113 may preferentially display the second-authentication content by automatically transitioning to the second-authentication content instead of automatically transitioning to the other-authentication content.

For example, when the user selects the part P90, the second user terminal 30B displays the second authentication screen SC6 for the card scan authentication on the display unit 35B as in the lower left of FIG. 17. The display flow of the second authentication screen SC6 is the same as that in the first embodiment or the second embodiment. When the user selects the part P91, the second user terminal 30B displays the other-authentication screen SC7 for the other authentication on the display unit 35B as in the lower right of FIG. 17. The display flow of the other-authentication screen SC7 is the same as that in the second embodiment.

The authentication module 102 in Modification Example 1-8 executes the second authentication or the other authentication when the second-authentication content and the other-authentication content are displayed on the second user terminal 30B in a distinguished manner. For example, the authentication module 102 executes the second authentication or the other authentication when the second-authentication content and the other-authentication content are displayed on the second user terminal 30B in a distinguished manner and the user performs an operation for the second authentication or the other authentication. For example, the authentication module 102 executes the second authentication when the part P90, which is an example of the second-authentication content, is selected. The flow of the second authentication may be the same as that in the first embodiment or the second embodiment. The authentication module 102 executes the other authentication when the part P91, which is an example of the other-authentication content, is selected. The flow of the other authentication may be the same as that in the second embodiment.

The authentication system 1 according to Modification Example 1-8 displays the second-authentication content and the other-authentication content on the second user terminal 30B in a distinguished manner when the change necessity/unnecessity information indicates that the telephone number is to be changed and the authentication condition is satisfied. The authentication system 1 executes the second authentication or the other authentication when the second-authentication content and the other-authentication content are displayed on the second user terminal 30B in a distinguished manner. Thus, it becomes easier for the user to distinguish between the second-authentication content and the other-authentication content, and hence the authentication system 1 can improve the security while improving the convenience of the user.

### [Modification Example 1-9]

For example, the authentication module 102 may execute the second authentication using the first user terminal 30A when the change necessity/unnecessity information indicates that the telephone number is to be changed and the first user terminal 30A is owned. The second authentication using the first user terminal 30A is a second authentication involving occurrence of an operation for the first user terminal 30A. In Modification Example 1-9, a case in which the code-for-payment authentication described in the third embodiment corresponds to the second authentication is taken as an example. The authentication module 102 may execute the same code-for-payment authentication as that in the third embodiment as the second authentication when the change necessity/unnecessity information indicates that the telephone number is to be changed and the first user terminal 30A is owned. When the change necessity/unnecessity information indicates that the telephone number is to be changed, the first user terminal 30A is owned, and the user performs the operation for the second authentication, the authentication module 102 may execute the same code-for-payment authentication as that in the third embodiment as the second authentication.

The second authentication using the first user terminal 30A may be another authentication other than the code-for-payment authentication. For example, an authentication to be executed by displaying another code different from the code C30 for payment on the first user terminal 30A and causing the second user terminal 30B to read the other code may correspond to the second authentication. An authentication to be executed by causing the first user terminal 30A to read the code C30 for payment displayed on the second user terminal 30B may correspond to the second authentication. For example, an authentication to be executed by causing the user to input a new telephone number to the first user terminal 30A may correspond to the second authentication.

For example, the authentication module 102 may determine whether or not the user owns the first user terminal 30A, and execute the second authentication on condition that the user owns the first user terminal 30A. The authentication module 102 may determine whether or not the user owns the first user terminal 30A based on information (for example, a login account or a terminal ID) transmitted by the first user terminal 30A, information (for example, a login account or a terminal ID) transmitted by the second user terminal 30B, a status of use of the payment service from the first user terminal 30A (for example, a login date and time, a date and time at which the code C30 for payment was issued, or an expiration date and time of the code C30 for payment), or other information. Further, the authentication module 102 may determine whether or not the user owns the first user terminal 30A based on, for example, information input by the user regarding whether or not the user owns the first user terminal 30A. The authentication module 102 does not execute the second authentication using the first user terminal 30A when it is determined that the user does not own the first user terminal 30A, and executes the second authentication using the first user terminal 30A when it is determined that the user owns the first user terminal 30A.

The authentication system 1 according to Modification Example 1-9 executes the second authentication using the first user terminal 30A when the change necessity/unnecessity information indicates that the telephone number is to be changed and the first user terminal 30A is owned. This enables the authentication system 1 to improve the security by the second authentication using the first user terminal 30A. For example, in a case in which the authentication system 1 executes the second authentication on condition that the user owns the first user terminal 30A, the authentication system 1 can prevent the processing for the second authentication from being executed even when the user does not own the first user terminal 30A.

### [Modification Example 1-10]

For example, as described in the first embodiment, the predetermined service may be a payment service in which payment is executed by reading the code C30 for payment. In this case, as described in Modification Example 1-9, the authentication module 102 may execute the second authentication in which the code C30 for payment displayed on the first user terminal 30A is read by the second user terminal 30B. This second authentication is the same as the code-for-payment authentication in the third embodiment.

The authentication system 1 according to Modification Example 1-10 executes the second authentication in which the code C30 for payment displayed on the first user terminal 30A is read by the second user terminal 30B. Accordingly, the authentication system 1 enables the user to execute the code-for-payment authentication by performing the operation for displaying the code C30 for payment (for example, the operation for starting the payment app) to which the user is accustomed, and hence the authentication system 1 can improve the security while improving the convenience of the user. The authentication system 1 can use the code C30 for payment, which is used for the payment, also for the authentication at the time of changing the model or the like, and thus is not required to issue a code for authentication. As a result, the authentication system 1 can reduce development costs for implementing the authentication function.

### [Modification Example 1-11]

For example, in the case in which the change necessity/unnecessity information indicates that the telephone number is to be changed, the authentication module 102 may execute the second authentication in which the changed telephone number is input from the first user terminal 30A. For example, when the change necessity/unnecessity information indicates that the telephone number is to be changed and the user performs the operation for the second authentication, the authentication module 102 may execute the second authentication in which the changed telephone number is input from the first user terminal 30A. The authentication module 102 executes the telephone number authentication using the second user terminal 30B based on the changed telephone number input from the first user terminal 30A. The changed telephone number is the telephone number of the second user terminal 30B.

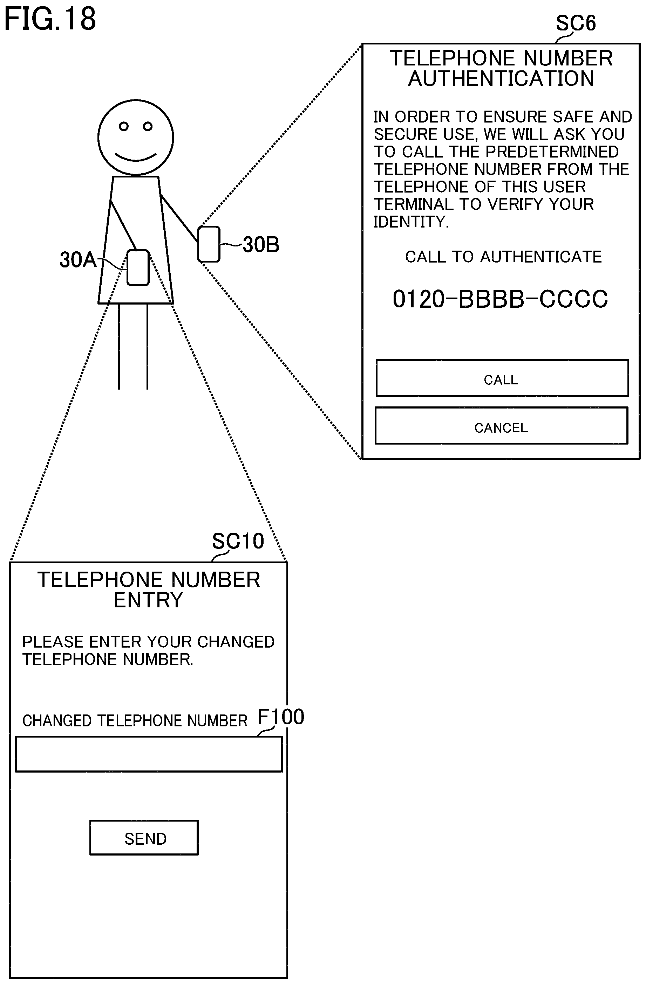

FIG. 18 is a view for illustrating an example of screens respectively displayed on the first user terminal 30A and the second user terminal 30B in Modification Example 1-11. For example, as in the lower left of FIG. 18, the first user terminal 30A communicates to/from the authentication server 10 to display a telephone number input screen SC10, which receives input of a changed telephone number, on the display unit 35A. The user inputs the changed telephone number to an input form F100. The first user terminal 30A transmits the changed telephone number to the authentication server 10. The first user terminal 30A may transmit the changed telephone number to the second user terminal 30B.

For example, when the authentication server 10 receives the changed telephone number, the authentication server 10 displays, on the second user terminal 30B, the second authentication screen SC6 for executing the telephone number authentication based on the changed telephone number as the second authentication as in the upper right of FIG. 18. The user performs an operation for executing the telephone number authentication based on the changed telephone number as the second authentication from the second authentication screen SC6. The authentication module 102 executes the telephone number authentication based on the changed telephone number as the second authentication. The flow itself of the telephone number authentication may be the same as a publicly-known flow.

When the telephone number is to be changed, the authenticated first user terminal 30A may acquire the changed telephone number, and display the changed telephone number on the display unit 35A. The first user terminal 30A may acquire the changed telephone number from another service or website linked to the payment service. It is assumed that the user has registered the changed telephone number in the other service or website from the second user terminal 30B or another computer. The authentication server 10 may acquire the changed telephone number displayed on the display unit 35A of the first user terminal 30A from the first user terminal 30A or the other service or website, and cooperate with the second user terminal 30B to execute the telephone number authentication.

The authentication system 1 according to Modification Example 1-11 executes the second authentication in which the changed telephone number is input from the first user terminal 30A in the case in which the change necessity/unnecessity information indicates that the telephone number is to be changed. Accordingly, it is a condition for the second authentication to be executed that the user owns the first user terminal 30A, and hence the authentication system 1 can improve the security in the payment service. For example, even when a malicious third party acquires the login account and the password of the user, it is difficult for the third party to steal the first user terminal 30A, and hence the third party cannot execute the second authentication. This enables the authentication system 1 to improve the security in the payment service.

### [4-2. Modification Examples regarding Second Embodiment]

Next, modification examples regarding the second embodiment are described.

### [Modification Example 2-1]

For example, in the second embodiment as well, in the same manner as in Modification Example 1-8, the authentication content display module 105 may preferentially display the authentication content on the second user terminal 30B when it is determined that the user information satisfies the authentication condition. In Modification Example 2-1, a case in which the same authentication selection screen SC9 as that in Modification Example 1-8 is displayed on the second user terminal 30B is taken as an example. The authentication content display module 105 displays the part P90 as the authentication content. For example, the authentication content display module 105 arranges the part P90 on the authentication selection screen SC9. The other-authentication content display module 106 displays the part P91 as the other-authentication content. For example, the other-authentication content display module 106 arranges the part P91 on the authentication selection screen SC9.

In the example in the upper right of FIG. 17, the authentication content display module 105 displays a message such as "RECOMMENDED" near the part P90, which is an example of the authentication content, to thereby preferentially display the part P90 over the part P91, which is an example of the other-authentication content. More emphasizing the part P90 described in Modification Example 1-8 corresponds to preferentially displaying the part P90. The authentication content display module 105 may use another message, to thereby preferentially display the part P90 over the part P91. The authentication content display module 105 may arrange the part P90 above the part P91, to thereby preferentially display the part P90 over the part P91. The authentication content display module 105 may automatically transition to the second authentication screen SC6 in the lower left of FIG. 17 as the authentication content, to thereby preferentially display the authentication content.

When it is determined that the user information satisfies the authentication condition, the authentication system 1 according to Modification Example 2-1 preferentially displays the authentication content on the second user terminal 30B. Thus, it becomes easier for the user to notice the authentication content, and hence the authentication system 1 can improve the convenience of the user.

### [Modification Example 2-2]

For example, when it is determined that the user information satisfies the authentication condition, the other-authentication content display module 106 may display the other-authentication content relating to another authentication different from the authentication to be executed when the authentication condition is satisfied on the second user terminal 30B based on a selection status of the authentication content by the user. The selection status of the authentication content refers to an operation for the authentication content. For example, selection of whether or not to execute the authentication indicated by the authentication content corresponds to the selection status of the authentication content. The user canceling the authentication is also an example of the selection status of the authentication content.

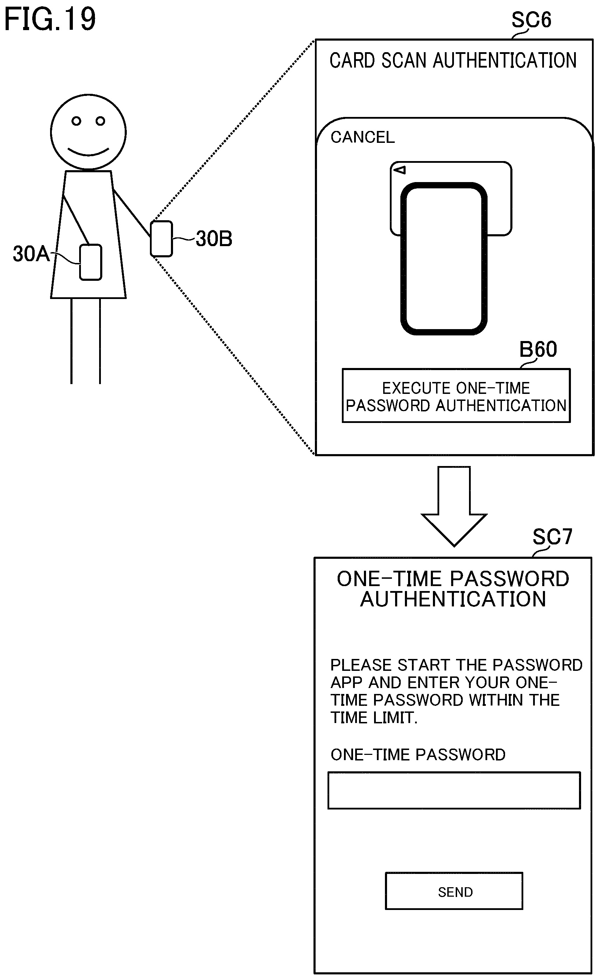

FIG. 19 is a view for illustrating an example of screens displayed on the second user terminal 30B in Modification Example 2-2. As in the upper right of FIG. 19, the authentication content display module 105 displays, on the second user terminal 30B, the second authentication screen SC6 including a button B60 indicating whether or not to execute the card scan authentication. The user can execute the card scan authentication without selecting the button B60, or can select the button B60 to inhibit the execution of the card scan authentication. In the example in the upper right of FIG. 19, whether or not the user selects the button B60 corresponds to the selection status of the authentication content.

For example, when the user does not select the button B60, the card scan authentication is executed in the same manner as in the first embodiment or the second embodiment. When the user selects the button B60, the other-authentication content display module 106 displays the other-authentication screen SC7 on the second user terminal 30B. That is, the other-authentication content display module 106 transitions from the second authentication screen SC6 to the other-authentication screen SC7. Processing in which the other-authentication content display module 106 displays the other-authentication screen SC7 may be the same as in the second embodiment.

When it is determined that the user information satisfies the authentication condition, the authentication system 1 according to Modification Example 2-2 displays the other-authentication content on the second user terminal 30B based on the selection status of the authentication content by the user. This enables, when the user does not wish for the authentication indicated by the authentication content, the user to display the other-authentication content and execute the other authentication, and hence the authentication system 1 can improve the convenience of the user. In the example of FIG. 19, when the user does not wish for the card scan authentication, the user can execute the one-time password authentication, and hence the authentication system 1 can improve flexibility of authentication.

### [Modification Example 2-3]

For example, in the second embodiment, the case in which the determination regarding an authentication condition for one authentication exemplified by the card scan authentication being one example is performed has been taken as an example, but there may be a plurality of authentications for which authentication conditions are set. The authentication condition determination module 104 may determine whether or not the user information satisfies the authentication condition for each of the plurality of authentications. In Modification Example 2-3, the card scan authentication and the biometric authentication are described as an example of the plurality of authentications. The determination regarding the authentication condition for the biometric authentication may be performed based on whether or not the biometric information (for example, the photograph of the face or the fingerprint pattern) is registered in the authentication database DB1. The plurality of authentications may be any authentications, and are not limited to the example in Modification Example 2-3. For example, the plurality of authentications may be three or more authentications.

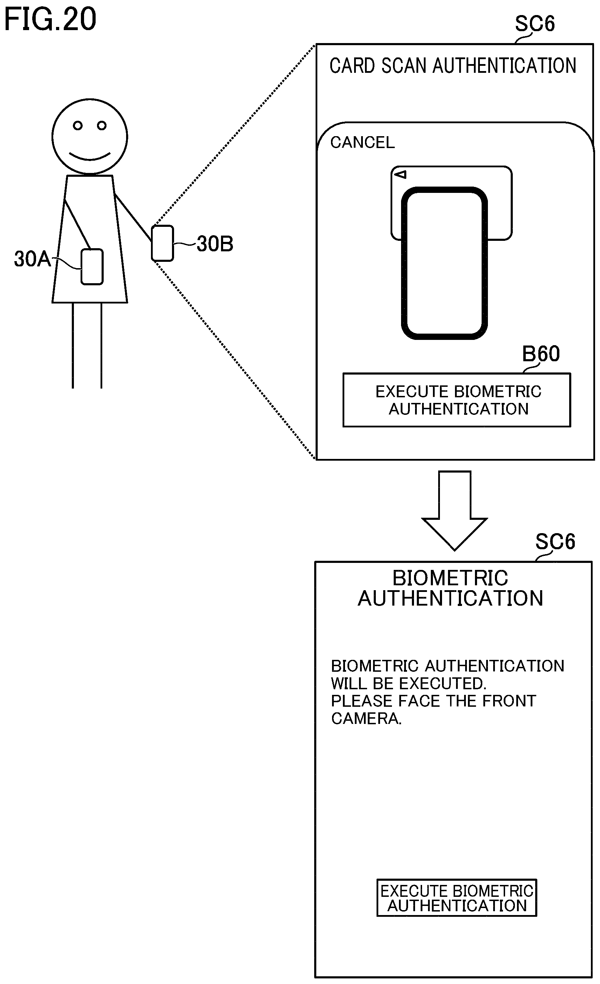

FIG. 20 is a view for illustrating an example of screens displayed on the second user terminal 30B in Modification Example 2-3. When it is determined that the user information satisfies the authentication condition for each of the plurality of authentications, the authentication content display module 105 in Modification Example 2-3 displays the authentication content for at least one authentication on the second user terminal 30B based on a priority associated with each of the plurality of authentications. In the example of FIG. 20, it is assumed that the authentication conditions for both the card scan authentication and the biometric authentication are satisfied. It is further assumed that the priority of the card scan authentication is higher than the priority of the biometric authentication. It is assumed that the priority of each authentication is stored in the data storage unit 100. The priority is designated by an entity that runs the payment service.

For example, as in the upper right of FIG. 20, the authentication content display module 105 displays the second authentication screen SC6 for the card scan authentication, which has a relatively high priority among the card scan authentication and the biometric authentication that satisfy the authentication conditions, on the second user terminal 30B before the second authentication screen SC6 for the biometric authentication. When the user selects the button B60 indicating that the card scan authentication is not to be performed, the authentication content display module 105 displays the second authentication screen SC6 for the biometric authentication on the second user terminal 30B, as in the lower right of FIG. 20.

The authentication system 1 according to Modification Example 2-3 determines whether or not the user information satisfies the authentication condition for each of the plurality of authentications. When it is determined that the user information satisfies the authentication condition for each of the plurality of authentications, the authentication system 1 displays, on the second user terminal 30B, the authentication content for at least one authentication based on the priority associated with each of the plurality of authentications. This enables the user to identify the authentication content in accordance with the priority, and hence the authentication system 1 can improve the convenience of the user. It becomes easier for the user to execute the authentication having a relatively high priority, and hence the authentication system 1 can improve the security of the payment service.

### [Modification Example 2-4]

For example, in the second embodiment as well, in the same manner as in Modification Example 1-5, the authentication condition determination module 104 may determine whether or not the user information satisfies the authentication condition by determining whether or not the predetermined information is associated with the user information. The authentication condition determination module 104 may perform the determination regarding the authentication condition by the same processing as that of the second-authentication proposal module 112 in Modification Example 1-5. The meaning of the predetermined information is as described in Modification Example 1-5. In Modification Example 2-4, the predetermined information may be information relating to a possession in the same manner as in Modification Example 1-5, or may be information that does not particularly relate to the possession. In Modification Example 2-4 as well, in the same manner as in Modification Example 1-5, a case in which the user ID corresponds to the user information and the authentication information (for example, electronic money number or loyalty card number) stored in the credit card corresponds to the predetermined information is taken as an example.

For example, the authentication condition determination module 104 determines that the user information does not satisfy the authentication condition when it is determined that the predetermined information is not associated with the user information, and determines that the user information satisfies the authentication condition when it is determined that the predetermined information is associated with the user information. When it is determined that the authentication information such as the electronic money number or the loyalty card number is not associated with the user information, the authentication condition determination module 104 determines that the user information does not satisfy the authentication condition. When it is determined that the authentication information such as the electronic money number or the loyalty card number is associated with the user information, the authentication condition determination module 104 determines that the user information satisfies the authentication condition. The subsequent flow of the authentication may be the same as that in the second embodiment.

The authentication system 1 according to Modification Example 2-4 determines whether or not the user information satisfies the authentication condition by determining whether or not the predetermined information is associated with the user information. This enables the user to execute the authentication when the predetermined information is associated with the user information on the user himself or herself, and hence the authentication system 1 can improve the convenience of the user. For example, the authentication system 1 can prevent the processing for the card scan authentication from being started even in the environment in which the user cannot execute the card scan authentication with no authentication information such as the electronic money number or the loyalty card number being associated with the user ID.

### [Modification Example 2-5]

For example, in the second embodiment as well, in the same manner as in Modification Example **1-6,** when the predetermined service is the payment service, the authentication condition determination module 104 may determine whether or not the predetermined information relating to the payment type that can be set in the payment service is associated with the user information. The authentication condition determination module 104 may determine whether or not the predetermined information is associated with the user information by the same processing as that in the second-authentication proposal module 112 in Modification Example 1-6. When the predetermined information is the authentication information such as the electronic money number or the loyalty card number, the authentication condition determination module 104 determines whether or not the authentication information such as the electronic money number or the loyalty card number is associated with the user information.

The authentication system 1 according to Modification Example 2-5 determines whether or not the predetermined information relating to the payment type that can be set in the payment service is associated with the user information. This enables the user to execute the authentication when the predetermined information relating to the payment type that can be set in the payment service is associated with the user information on the user himself or herself, and hence the authentication system 1 can improve the convenience of the user. For example, the authentication system 1 can prevent the processing for the card scan authentication from being executed even in the environment in which the user cannot execute the card scan authentication with no authentication information such as the electronic money number or the loyalty card number being associated with the user ID.

### [Modification Example 2-6]

For example, as described somewhat in the second embodiment as well, the user information acquisition module 103 may acquire the user information when the user who used a service from the first user terminal 30A logs in to the service from the second user terminal 30B different from the first user terminal 30A. In this case, an authentication for the user to use the payment service from the second user terminal 30B may be an authentication using the first user terminal 30A. The authentication using the first user terminal 30A may be the same as the second authentication using the first user terminal 30A described in Modification Example 1-9.

The authentication condition determination module 104 in Modification Example 2-6 determines whether or not the user information satisfies the authentication condition by determining whether or not the user owns the first user terminal 30A. This determination method may be the same as that of the authentication module 102 in Modification Example 1-9. For example, the authentication condition determination module 104 may determine whether or not the user owns the first user terminal 30A based on information (for example, a login account) transmitted by the first user terminal 30A, information (for example, a login account) transmitted by the second user terminal 30B, a status of use of the payment service from the first user terminal 30A (for example, a login date and time, a date and time at which the code C30 for payment was issued, or an expiration date and time of the code C30 for payment), or other information. The authentication condition determination module 104 may also determine whether or not the user owns the first user terminal 30A based on, for example, the information input by the user regarding whether or not the user owns the first user terminal 30A.

The authentication system 1 according to Modification Example 2-6 acquires the user information when the user who used a service from the first user terminal 30A logs in to the service from the second user terminal 30B. The authentication system 1 determines whether or not the user information satisfies the authentication condition by determining whether or not the user owns the first user terminal 30A. This enables the authentication system 1 to improve the security by the authentication using the first user terminal 30A. For example, in a case in which the authentication system 1 executes the authentication on condition that the user owns the first user terminal 30A, the authentication system 1 can prevent the processing for the authentication from being executed even when the user does not own the first user terminal 30A.

### [Modification Example 2-7]

For example, as described in the second embodiment, the predetermined service may be the payment service in which payment is executed by reading the code C30 for payment. In this case, in the same manner as in the third embodiment or Modification Example 1-9 or 1-10, the authentication module 102 may execute an authentication in which the code C30 for payment displayed on the first user terminal 30A is read by the second user terminal 30B when it is determined that the user information satisfies the authentication condition. This authentication is the same as the code-for-payment authentication in the third embodiment. For example, the authentication module 102 may execute the authentication in which the code C30 for payment displayed on the first user terminal 30A is read by the second user terminal 30B when it is determined that the user information satisfies the authentication condition and the user performs an operation for the authentication.

The authentication system 1 according to Modification Example 2-7 executes the authentication in which the code C30 for payment displayed on the first user terminal 30A is read by the second user terminal 30B when it is determined that the user information satisfies the authentication condition. Accordingly, the authentication system 1 enables the user to execute the code-for-payment authentication by performing the operation for displaying the code C30 for payment (for example, the operation for starting the payment app) to which the user is accustomed, and hence the authentication system 1 can improve the convenience of the user. The authentication system 1 can use the code C30 for payment, which is used for the payment, also for the authentication at the time of changing the model or the like, and thus is not required to issue a code for authentication. As a result, the authentication system 1 can reduce development costs for implementing the authentication function.

### [4-3. Modification Examples regarding Third Embodiment]

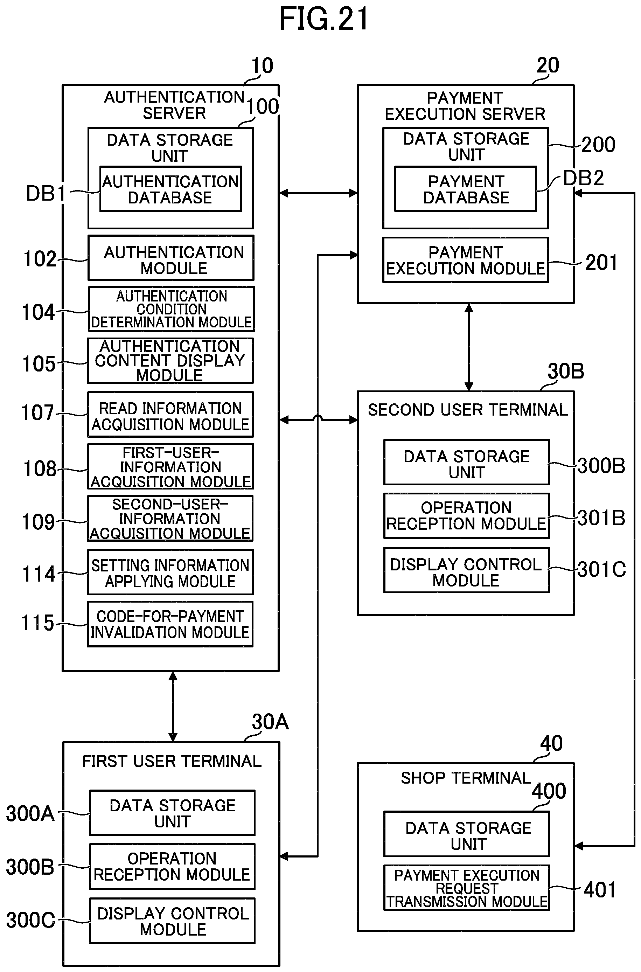

FIG. 21 is a diagram for illustrating an example of functions implemented in modification examples regarding the third embodiment. For example, the authentication server 10 includes the authentication condition determination module 104, the authentication content display module 105, a setting information applying module 114, and a code-for-payment invalidation module 115. The authentication condition determination module 104, the authentication content display module 105, the setting information applying module 114, and the code-for-payment invalidation module 115 are implemented by the control unit 11.

### [Modification Example 3-1]

For example, in the third embodiment as well, in the same manner as in the second embodiment, the authentication content may be displayed based on whether or not the authentication condition is satisfied. The authentication system 1 according to Modification Example 3-1 includes the authentication condition determination module 104 and the authentication content display module 105. The authentication condition determination module 104 determines whether or not the user satisfies the predetermined authentication condition relating to the code-for-payment authentication. Processing of the authentication condition determination module 104 in Modification Example 3-1 is generally the same as that in the second embodiment. The code-for-payment authentication requires that the second user terminal 30B include the photographing unit 36B, and hence in Modification Example 3-1, a case in which the second user terminal 30B including the photographing unit 36B corresponds to the authentication condition is taken as an example.

For example, the authentication condition determination module 104 may determine whether or not the user satisfies the authentication condition by determining whether or not the second user terminal 30B includes the photographing unit 36B (has the photographing function). The second user terminal 30B transmits the user information indicating whether or not the second user terminal 30B itself includes the photographing unit 36B to the authentication server 10. Presence or absence of the photographing unit 36B may be determined by a publicly-known method. For example, the second user terminal 30B may store in advance the user information indicating the presence or absence of the photographing unit 36B.

For example, the authentication condition determination module 104 determines whether or not the second user terminal 30B includes the photographing unit 36B (has the photographing function) based on the user information received from the second user terminal 30B. When the user information does not indicate that the second user terminal 30B includes the photographing unit 36B, the authentication condition determination module 104 determines that the user does not satisfy the authentication condition. When the user information indicates that the second user terminal 30B includes the photographing unit 36B, the authentication condition determination module 104 determines that the user satisfies the authentication condition.

An authentication condition for the code-for-payment authentication is not limited to the above-mentioned example. For example, the user owning the first user terminal 30A may correspond to the authentication condition for the code-for-payment authentication. In this case, in the same manner as in Modification Example 2-6, the authentication condition determination module 104 may determine whether or not the user satisfies the authentication condition by determining whether or not the user owns the first user terminal 30A. When it is determined that the user does not own the first user terminal 30A, the authentication condition determination module 104 determines that the user does not satisfy the authentication condition. When it is determined that the user owns the first user terminal 30A, the authentication condition determination module 104 determines that the user satisfies the authentication condition.

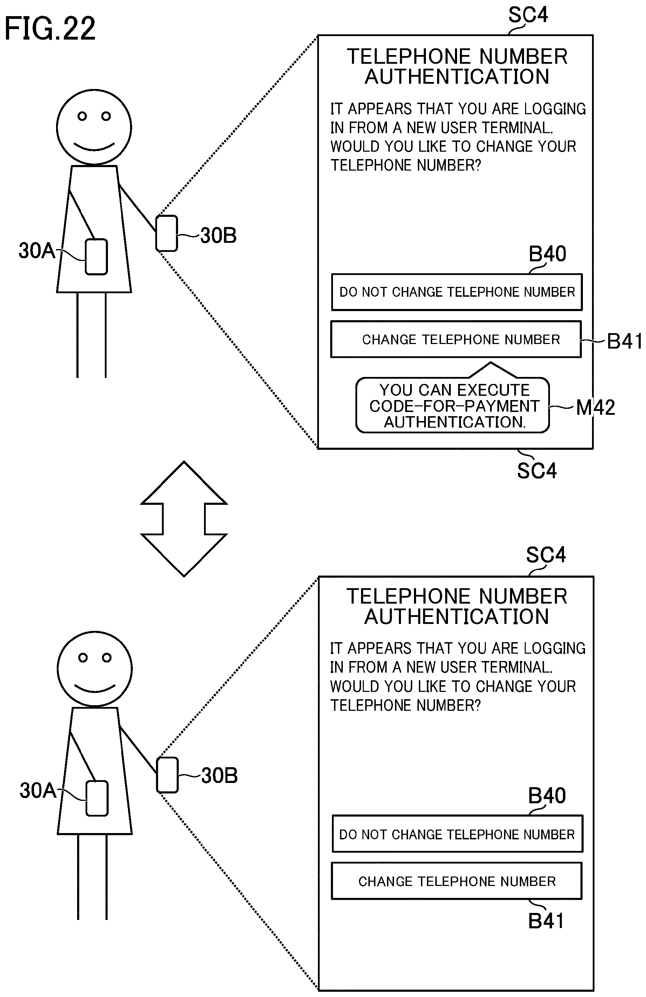

FIG. 22 is a view for illustrating an example of screens displayed on the second user terminal 30B in Modification Example **3-1.** When it is determined that the user satisfies the authentication condition, the authentication content display module 105 in Modification Example 3-1 displays authentication content relating to the code-for-payment authentication on the second user terminal 30B. The meaning of the authentication content is as described in the second embodiment. In Modification Example 3-1, the authentication content is the authentication content relating to the code-for-payment authentication. In the example in the upper right of FIG. 22, a message M42 displayed on the change necessity/unnecessity screen SC4 corresponds to the authentication content. In Modification Example 3-1, a case in which a part such as the message M42 within the screen corresponds to the authentication content is taken as an example, but the entire screen may correspond to the authentication content.

For example, when the user selects the button B41 under the state of the change necessity/unnecessity screen SC4 in the upper right of FIG. 22, the same reading screen SC8 as that in the lower right of FIG. 12 is displayed. The read information acquisition module 107 in Modification Example 3-1 acquires the read information when the authentication content is displayed on the second user terminal 30B. The wording "when the authentication content is displayed on the second user terminal 30B" refers to "after the authentication content is displayed on the second user terminal 30B." The authentication module 102 in Modification Example 3-1 executes the code-for-payment authentication when the authentication content is displayed on the second user terminal 30B.

When it is determined that the user does not satisfy the authentication condition, the authentication content display module 105 in Modification Example 3-1 does not display the authentication content relating to the code-for-payment authentication on the second user terminal 30B. In the example in the lower right of FIG. 22, the user does not satisfy the authentication condition, and hence the message M42 is not displayed on the change necessity/unnecessity screen SC4. When the user selects the button B41 under the state of the change necessity/unnecessity screen SC4 in the lower right of FIG. 22, the other-authentication screen SC7 in the lower right of FIG. 8 may be displayed on the second user terminal 30B. In this case, the one-time password authentication may be executed in place of the code-for-payment authentication. The flow of the one-time password authentication may be the same as that in the second embodiment.

The authentication system 1 according to Modification Example 3-1 determines whether or not the user satisfies the predetermined authentication condition relating to the code-for-payment authentication. When it is determined that the user satisfies the authentication condition, the authentication system 1 displays the authentication content relating to the code-for-payment authentication on the second user terminal 30B. When the authentication content is displayed on the second user terminal 30B, the authentication system 1 acquires the read information. When the authentication content is displayed on the second user terminal 30B, the authentication system 1 executes the code-for-payment authentication. This enables the authentication system 1 to display the authentication content depending on whether or not the user satisfies the authentication condition, thereby being able to improve the convenience of the user. For example, the authentication system 1 can prevent the reading screen SC8 for the code-for-payment authentication from being displayed to the user who does not satisfy the authentication condition and is unable to execute the code-for-payment authentication.

### [Modification Example 3-2]

For example, in Modification Example 3-1, the authentication condition determination module 104 may determine whether or not the user satisfies the authentication condition by determining whether or not there is a change in the user information relating to the user. The meaning of the user information is as described in the second embodiment. In Modification Example 3-2, a case in which the user information is the information registered in the payment service is taken as an example. For example, the user information may be the telephone number, full name, email address, address, or another profile item of the user, the payment type information, the payment source, the money addition source, or other information.

In Modification Example 3-2, a case in which the user selects whether or not there is a change in the user information from the second user terminal 30B is taken as an example. For example, when the telephone number of the user corresponds to the user information, the user selects whether or not there is a change in the user information from the change necessity/unnecessity screen SC4. The second user terminal 30B transmits change presence/absence information indicating whether or not there is a change in the user information to the authentication server 10 based on the selection result of the user. When the user selects that there is a change in the user information from the change necessity/unnecessity screen SC4, the change presence/absence information indicates that there is a change in the user information. When the user selects that there is no change in the user information from the change necessity/unnecessity screen SC4, the change presence/absence information indicates that there is no change in the user information.

For example, the authentication condition determination module 104 determines whether or not there is a change in the user information based on the change presence/absence information received from the second user terminal 30B. The authentication condition determination module 104 determines that there is no change in the user information when the change presence/absence information indicates that there is no change in the user information, and determines that there is a change in the user information when the change presence/absence information indicates that there is a change in the user information. The authentication condition determination module 104 determines that the authentication condition is not satisfied when it is determined that there is no change in the user information, and determines that the authentication condition is satisfied when it is determined that there is a change in the user information.

In Modification Example 3-2, presence or absence of a change in the user information other than the telephone number may be selected from the change necessity/unnecessity screen SC4. For example, presence or absence of a change in the full name, email address, address, or another profile item of the user, the payment type information, the payment source, the money addition source, or other information may be selected from the change necessity/unnecessity screen SC4. The presence or absence of a change in the user information may be selected from another screen other than the change necessity/unnecessity screen SC4. The second user terminal 30B may transmit the change presence/absence information indicating whether or not there is a change in the user information to the authentication server 10 based on a result of the selection on the other screen.

Further, the user may select whether or not there is a change in the user information from the first user terminal 30A. For example, the first user terminal 30A displays, on the display unit 35A, a screen that receives selection of whether or not there is a change in the user information. The screen may have the same layout as that of the change necessity/unnecessity screen SC4, or may have a different layout from that of the change necessity/unnecessity screen SC4. The first user terminal 30A may transmit the change presence/absence information indicating whether or not there is a change in the user information to the authentication server 10 based on the result of the selection on the screen. The authentication condition determination module 104 may determine whether or not there is a change in the user information based on the change presence/absence information received from the first user terminal 30A.

The authentication content display module 105 in Modification Example 3-2 displays the authentication content for the code-for-payment authentication on the second user terminal 30B based on whether or not there is a change in the user information. In Modification Example 3-1, the case in which the message M42 on the change necessity/unnecessity screen SC4 corresponds to the authentication content as in the upper right of FIG. 22 has been taken as an example, but in Modification Example 3-2, it is determined whether or not there is a change in the user information after the change necessity/unnecessity screen SC4 is displayed, and hence a case in which a screen displayed after the change necessity/unnecessity screen SC4 is displayed or a part of the displayed screen corresponds to the authentication content is taken as an example.

For example, the reading screen SC8 may correspond to the authentication content. The authentication content display module 105 does not display the reading screen SC8, which is an example of the authentication content, on the second user terminal 30B when it is determined that there is no change in the user information, and displays the reading screen SC8, which is an example of the authentication content, on the second user terminal 30B when it is determined that there is a change in the user information.

For example, the authentication selection screen SC9 described in Modification Example 1-8 may correspond to the authentication content. The authentication content display module 105 does not display the authentication selection screen SC9, which is an example of the authentication content, on the second user terminal 30B when it is determined that there is no change in the user information, and displays the authentication selection screen SC9, which is an example of the authentication content, on the second user terminal 30B when it is determined that there is a change in the user information.

The authentication system 1 according to Modification Example 3-2 determines whether or not the user satisfies the authentication condition by determining whether or not there is a change in the user information. This enables the authentication system 1 to display the authentication content depending on whether or not there is a change in the user information, thereby being able to improve the convenience of the user. For example, the authentication system 1 can prevent the authentication content for the code-for-payment authentication from being displayed to the user who does not satisfy the authentication condition and is unable to execute the code-for-payment authentication.

### [Modification Example 3-3]

For example, as described somewhat in Modification Example 3-2 as well, the authentication condition determination module 104 may determine whether or not there is a change in the user information by determining whether or not there is a change in the telephone number of the user. In Modification Example 3-3, in the same manner as in Modification Example 3-2, a case in which the user selects whether or not there is a change in the telephone number from the change necessity/unnecessity screen SC4 is taken as an example, but it may be determined that there is a change in the user information when the user registers the changed telephone number in another service or website linked to the payment service. The authentication condition determination module 104 may acquire the changed telephone number from the other service or website and determine whether or not there is a change in the user information, or may request the other service or website to determine whether or not there is a change in the user information and receive a determination result from the other service or website.

For example, when the user selects the button B40, the second user terminal 30B transmits the change presence/absence information indicating that there is no change in the telephone number to the authentication server 10. When the user selects the button B41, the second user terminal 30B transmits the change presence/absence information indicating that there is a change in the telephone number to the authentication server 10. The authentication condition determination module 104 in Modification Example 3-3 may determine whether or not there is a change in the user information based on the change presence/absence information received from the second user terminal 30B.

In Modification Example 3-3 as well, in the same manner as in Modification Example 3-2, the user may select the presence or absence of a change in the telephone number from the first user terminal 30A. The first user terminal 30A transmits change presence/absence information to the authentication server 10. The authentication condition determination module 104 may determine whether or not there is a change in the user information based on the change presence/absence information received from the first user terminal 30A. In Modification Example 3-3, in the same manner as in Modification Example 1-11, the presence or absence of a change in the telephone number may be selected based on input to the telephone number input screen SC10 displayed on the first user terminal 30A.

The authentication system 1 according to Modification Example 3-3 determines whether or not there is a change in the user information by determining whether or not there is a change in the telephone number of the user. This enables the authentication system 1 to display the authentication content depending on whether or not there is a change in the telephone number, thereby being able to improve the convenience of the user. For example, the authentication system 1 can prevent the authentication content for the code-for-payment authentication from being displayed to the user who has not changed the telephone number and does not require the code-for-payment authentication.

### [Modification Example 3-4]

For example, in the third embodiment as well, in the same manner as in Modification Example 2-6, the authentication condition determination module 104 may determine whether or not the user satisfies the authentication condition by determining whether or not the user owns the first user terminal 30A. As described in Modification Example 2-6, this determination method may be the same as the authentication module 102 in Modification Example 1-9. For example, the authentication condition determination module 104 may determine whether or not the user owns the first user terminal 30A based on information (for example, a login account or a terminal ID) transmitted by the first user terminal 30A, information (for example, a login account or a terminal ID) transmitted by the second user terminal 30B, a status of use of the payment service from the first user terminal 30A (for example, a login date and time, a date and time at which the code C30 for payment was issued, or an expiration date and time of the code C30 for payment), or other information. Further, the authentication module 102 may determine whether or not the user owns the first user terminal 30A based on, for example, the information input by the user regarding whether or not the user owns the first user terminal 30A.

The authentication system 1 according to Modification Example 3-4 determines whether or not the user satisfies the authentication condition by determining whether or not the user owns the first user terminal 30A. This enables the authentication system 1 to improve the security by the authentication using the first user terminal 30A. For example, in the case in which the authentication system 1 executes the authentication on condition that the user owns the first user terminal 30A, the authentication system 1 can prevent the processing for the authentication from being executed even when the user does not own the first user terminal 30A.

### [Modification Example 3-5]

For example, as described somewhat in the third embodiment as well, the read information acquisition module 107 may acquire the read information when the user does not select the telephone number authentication using the telephone number registered in the payment service. In the example of FIG. 12, the user selects the telephone number authentication by selecting the button B40. The user selects not to perform the telephone number authentication by selecting the button B41.

For example, when the user does not select the telephone number authentication by selecting the button B41, the second user terminal 30B then activates the photographing unit 36B to display the reading screen SC8 on the display unit 35B, and acquires the read information. The second user terminal 30B transmits the read information to the authentication server 10. The read information acquisition module 107 acquires the read information from the second user terminal 30B. The authentication module 102 executes the code-for-payment authentication when the user does not select the telephone number authentication. For example, when the user does not select the telephone number authentication and performs an operation for the code-for-payment authentication, the authentication module 102 executes the code-for-payment authentication. A flow in which the code-for-payment authentication is performed after the read information is acquired is the same as that in the third embodiment.

The authentication system 1 according to Modification Example 3-5 acquires the read information when the user does not select the telephone number authentication using the telephone number registered in the payment service. The authentication system 1 executes the code-for-payment authentication when the user does not select the telephone number authentication. This enables the authentication system 1 to execute a highly secure code-for-payment authentication that requires the user to own the first user terminal 30A when the user does not select the telephone number authentication.

### [Modification Example 3-6]

For example, the code C30 for payment is a hybrid code that can be used for both the payment at a shop and the code-for-payment authentication, and hence when the authentication system 1 receives the read information, the authentication system 1 is required to identify whether to execute the payment or to execute the code-for-payment authentication. The authentication system 1 may store data of an API for payment and an API for authentication for the above-mentioned identification.

The API for payment is an API to be used for payment. The API for payment may be the same as an API employed in a publicly-known payment service. When the API for payment receives the read information, the API for payment calls a function (program) for payment. In Modification Example 3-6, a case in which the API for payment is implemented by the payment execution server 20 is taken as an example, but the API for payment may be implemented by another computer such as the authentication server 10. For example, when the API for payment receives the read information from a computer such as the shop terminal 40, the API for payment executes processing for payment. This processing may be the same as processing for a publicly-known payment service.

The API for authentication is an API to be used for the code-for-payment authentication. When the API for authentication receives the read information, the API for authentication calls a function (program) for the code-for-payment authentication. In Modification Example 3-6, a case in which the API for authentication is implemented by the authentication server 10 is taken as an example, but the API for authentication may be implemented by another computer such as the payment execution server 20. For example, when the API for authentication receives the read information from a computer such as the second user terminal 30B, the API for authentication executes processing for the code-for-payment authentication. This processing is as described in the third embodiment.

In Modification Example 3-6, when the code C30 for payment is read by the shop terminal 40 in the payment service, the shop terminal 40 transmits the read information to the API for payment. For example, the shop terminal 40 reads the code C30 for payment displayed on the first user terminal 30A by the reading unit 46. The shop terminal 40 acquires the code ID from the code C30 for payment as the read information. It is assumed that the shop terminal 40 stores in advance information (for example, a URL or an IP address) on the API for payment. The shop terminal 40 transmits the code ID, which is an example of the read information, to the API for payment based on the stored information. When the API for payment receives the code ID, the API for payment executes the payment.

In Modification Example 3-6, when the code C30 for payment is read by the second user terminal 30B, the second user terminal 30B transmits the read information to the API for authentication, which is different from the API for payment. For example, the second user terminal 30B reads the code C30 for payment displayed on the first user terminal 30A by the photographing unit 36B. The second user terminal 30B acquires the code ID from the code C30 for payment as the read information. It is assumed that the second user terminal 30B stores in advance information (for example, a URL or an IP address) on the API for authentication. The second user terminal 30B transmits the code ID, which is an example of the read information, to the API for authentication based on the stored information. The read information acquisition module 107 acquires the read information transmitted to the API for authentication. Processing performed after the read information is acquired may be the same as that in the third embodiment.

In a case in which payment of a type in which the second user terminal 30B reads the code displayed on the shop terminal 40 or the code posted in the shop is executed, when the second user terminal 30B reads the above-mentioned code, the second user terminal 30B transmits the read information to the API for payment instead of to the API for authentication. It is assumed that the second user terminal 30B stores in advance information (for example, a URL or an IP address) on the API for payment.

For example, when the code in the shop is read on the screen that is displayed when "READ CODE" is selected on the code screen SC3, the second user terminal 30B transmits the read information to the API for payment. When the code C30 for payment is read on the reading screen SC8, the second user terminal 30B transmits the read information to the API for authentication. In this manner, the second user terminal 30B may determine which of the API for payment and the API for authentication is to be set as a transmission destination depending on which screen the reading has been performed on. The user may select which of the API for payment and the API for authentication is to be set as the transmission destination.

In Modification Example 3-6, when the code C30 for payment is read by the shop terminal 40, the shop terminal 40 transmits the read information to the API for payment. The second user terminal 30B transmits the read information to an API for authentication, which is different from the API for payment. The authentication system 1 acquires the read information transmitted to the API for authentication. This enables the authentication system 1 to execute appropriate processing by the API for payment and the API for authentication when the code C30 for payment is read by the shop terminal 40 and when the code C30 for payment is read by the second user terminal 30B, respectively.

### [Modification Example 3-7]

For example, the first user terminal 30A may store setting information relating to the payment service. The setting information is information indicating a setting for using the payment service. For example, the setting information may be information indicating a setting of the payment type (for example, the payment source or the money addition source) to be used by the user in the payment service, a setting of whether or not the user is to use the loyalty points, a setting for automatic money addition, or another setting. The setting information may be information indicating another setting such as a screen or a notification to be displayed in the payment app in place of information indicating the setting of the payment type. When the user logs in to the payment service from the second user terminal 30B and executes the code-for-payment authentication, the setting information stored in the first user terminal 30A may be reflected in the second user terminal 30B. The setting information is displayed on the first user terminal 30A or the second user terminal 30B, or is referred to when the authentication server 10 or the payment execution server 20 executes the processing for the payment service.

The authentication system 1 according to Modification Example 3-7 includes the setting information applying module 114. When the code-for-payment authentication is executed, the setting information applying module 114 applies the setting information relating to the payment service, which is stored in the first user terminal 30A, to the second user terminal 30B. For example, when the code-for-payment authentication is executed, the setting information applying module 114 requests the first user terminal 30A to transmit the setting information. When the first user terminal 30A receives the request, the first user terminal 30A transmits the setting information stored in the data storage unit 300A to the authentication server 10. The setting information applying module 114 transmits the setting information acquired from the first user terminal 30A to the second user terminal 30B, to thereby apply the transmitted setting information to the second user terminal 30B.

The setting information stored in the first user terminal 30A of a certain user may be stored in advance in the authentication database DB1 in association with the user ID and the login account of the user. In this case, the setting information applying module 114 may acquire the setting information from the authentication database DB1 to apply the setting information to the second user terminal 30B. The second user terminal 30B records the setting information transmitted by the setting information applying module 114 in the data storage unit 300B. The second user terminal 30B executes various kinds of processing in the payment service based on the setting information stored in the data storage unit 300B.

The authentication system 1 according to Modification Example 3-7 applies the setting information relating to the payment service, which is stored in the first user terminal 30A, to the second user terminal 30B when the code-for-payment authentication is executed. Thus, the user is no longer required to perform setting work on the second user terminal 30B, and hence the authentication system 1 can improve the convenience of the user.

### [Modification Example 3-8]

For example, a malicious third party may acquire a screenshot (screen capture) of the code C30 for payment on the first user terminal 30A by some method to impersonate the user and attempt to break through the code-for-payment authentication. In view of this, in Modification Example 3-8, the code C30 for payment may be invalidated when a screenshot operation is performed from the operating unit 34A while the code C30 for payment is displayed on the first user terminal 30A.

The authentication system 1 according to Modification Example 3-8 includes the code-for-payment invalidation module 115. The code-for-payment invalidation module 115 invalidates the code C30 for payment when a predetermined operation for the code C30 for payment is performed on the first user terminal 30A. The predetermined operation is the screenshot operation performed while the code C30 for payment is displayed. For example, the first user terminal 30A determines whether or not the screenshot operation has been performed while the code C30 for payment is displayed. A method for determination regarding the screenshot operation may be the same as a publicly-known method. For example, the first user terminal 30A determines whether or not a predetermined button on the operating unit 34A is pressed.

For example, when it is determined that the screenshot operation has been performed while the code C30 for payment is displayed, the first user terminal 30A transmits, to the authentication server 10, an invalidation request indicating that the code C30 for payment is to be invalidated. The invalidation request is assumed to include the code ID, but information that can identify the user for which the code C30 for payment is to be invalidated may be included in the invalidation request. For example, the invalidation request may include a user ID or the login account. When the code-for-payment invalidation module 115 receives an invalidation request, the code-for-payment invalidation module 115 invalidates the code C30 for payment to be used. The authentication server 10 or the payment execution server 20 does not execute the payment even when the authentication server 10 or the payment execution server 20 receives the payment execution request including the code ID of the invalidated code C30 for payment. When the authentication server 10 or the payment execution server 20 receives the payment execution request including the code ID of the valid code C30 for payment, the authentication server 10 or the payment execution server 20 executes the payment.

For example, the code-for-payment invalidation module 115 may store an invalidation flag indicating that the code C30 for payment to be used is invalid in the authentication database DB1 in association with the code ID of the code C30 for payment, to thereby invalidate the code C30 for payment. In this case, even when the code C30 for payment with the invalidation flag indicating that the code C30 for payment is invalid is read, the code-for-payment authentication or the payment fails without being successful. For example, when the invalidation flag associated with the code ID of the code C30 for payment to be used for the code-for-payment authentication indicates that the code C30 for payment is invalid, the authentication module 102 determines that the code-for-payment authentication has failed.

A method by which the code-for-payment invalidation module 115 invalidates the code C30 for payment is not limited to a method using the invalidation flag. For example, the code-for-payment invalidation module 115 may invalidate the code C30 for payment to be used by setting the expiration date and time of the code ID of the code C30 for payment to a past expiration timing. The code-for-payment invalidation module 115 may invalidate the code C30 for payment to be used by deleting the code ID of the code C30 for payment from the authentication database DB1.

The authentication system 1 according to Modification Example 3-8 invalidates the code C30 for payment when the predetermined operation for the code C30 for payment is performed on the first user terminal 30A. This inhibits a malicious third party from becoming successful in the code-for-payment authentication even when the malicious third party fraudulently obtains the screenshot of the code C30 for payment, and hence the authentication system 1 can improve the security in the payment service.

### [4-4. Other Modification Examples]

For example, the above-mentioned modification examples may be combined.

For example, in the first embodiment to the third embodiment, scenes in which the user changes the model from the first user terminal 30A to the second user terminal 30B have been taken as examples, but the model of the first user terminal 30A and the model of the second user terminal 30B may be the same. Even when the user repurchases the second user terminal 30B of the same model as that of the first user terminal 30A due to a battery thereof becoming weak, the same processing as those in the first embodiment to the third embodiment may be executed. The user may have purchased the second user terminal 30B before purchasing the first user terminal 30A. Any one of the first user terminal 30A or the second user terminal 30B may be older.

For example, the authentication system 1 may not include the authentication server 10, and the function for the authentication may be implemented by the payment execution server 20. That is, the payment execution server 20 may have the functions of the authentication server 10 described in the embodiments and the above-mentioned modification examples. In this case, the information described as being stored in the authentication database DB1 may be stored in the payment database DB2. The payment execution server 20 executes the authentication for the user to log in to the payment service. In the code-for-payment authentication described in the third embodiment, when the second user terminal 30B reads the code C30 for payment displayed on the code screen SC3 of the first user terminal 30A, the second user terminal 30B transmits the code ID to the payment execution server 20 as the read information. The payment execution server 20 may execute the code-for-payment authentication by determining whether or not the user ID associated with the code ID received from the second user terminal 30B as the read information and the user ID of the user who has logged in from the second user terminal 30B match.

For example, the functions described as being implemented by the authentication server 10 may be implemented by the payment execution server 20, the first user terminal 30A, the second user terminal 30B, the shop terminal 40, or another computer. The processing described as being implemented by the authentication server 10 may be distributed to a plurality of computers. The functions described as being implemented by the payment execution server 20 may be implemented by the authentication server 10, the first user terminal 30A, the second user terminal 30B, the shop terminal 40, or another computer. The processing described as being implemented by the payment execution server 20 may be distributed to a plurality of computers. For example, the case in which the function for the authentication is implemented by the authentication server 10 and the function for the payment is implemented by the payment execution server 20 has been taken as an example, but the function for the authentication and the function for the payment may be implemented by a single computer (for example, the authentication server 10, the payment execution server 20, or another computer).

### [5. Supplementary Notes]

For example, the authentication system 1 can also be configured as follows.

### [5-1. Supplementary Notes regarding First Embodiment]

For example, the authentication system 1 according to the first embodiment can also be configured as follows.
(1-1) An authentication system, including:
   a change necessity/unnecessity information acquisition module configured to acquire change necessity/unnecessity information regarding whether to change a telephone number registered in a predetermined service when a login to the predetermined service is performed from a second user terminal different from a first user terminal after a login to the predetermined service was performed from the first user terminal; and
   an authentication module configured to switch an authentication to be executed from the second user terminal based on the change necessity/unnecessity information.
(1-2) The authentication system according to Item (1-1), wherein the authentication module is configured to:
   execute a first authentication using the telephone number when the change necessity/unnecessity information indicates that the telephone number is not to be changed; and
   execute a second authentication different from the first authentication when the change necessity/unnecessity information indicates that the telephone number is to be changed.
(1-3) The authentication system according to Item (1-2), wherein the authentication module is configured to execute an authentication similar to the authentication executed through use of the telephone number on the first user terminal as the first authentication when the change necessity/unnecessity information indicates that the telephone number is not to be changed.
(1-4) The authentication system according to Item (1-2) or (1-3), further including a function restricting module configured to restrict, when the second authentication is executed, a function relating to the predetermined service to be used from the second user terminal more than when the first authentication is executed.
(1-5) The authentication system according to Item (1-4), further including a restriction lifting module configured to lift the restriction of the function when a predetermined lifting condition is satisfied.
(1-6) The authentication system according to any one of Items (1-2) to (1-5), further including:
   a user information acquisition module configured to acquire user information relating to a user when the change necessity/unnecessity information indicates that the telephone number is to be changed; and
   a second-authentication proposal module configured to propose, as the second authentication, an authentication method for which the user information satisfies a predetermined authentication condition.
(1-7) The authentication system according to Item (1-6), wherein the second-authentication proposal module is configured to determine whether the user information satisfies the predetermined authentication condition by determining whether predetermined information relating to a possession is associated with the user information.
(1-8) The authentication system according to Item (1-7),
   wherein the predetermined service is a payment service, and
   wherein the second-authentication proposal module is configured to determine whether the predetermined information relating to a payment type that is settable in the payment service is associated with the user information.
(1-9) The authentication system according to any one of Items (1-2) to (1-8), further including a second-authentication content display module configured to display, when the change necessity/unnecessity information indicates that the telephone number is to be changed and a predetermined authentication condition is satisfied, second-authentication content relating to the second authentication on the second user terminal,
   wherein the authentication module is configured to execute the second authentication when the second-authentication content is displayed on the second user terminal.
(1-10) The authentication system according to Item (1-9),
   wherein the second-authentication content display module is configured to display, when the change necessity/unnecessity information indicates that the telephone number is to be changed and the predetermined authentication condition is satisfied, the second-authentication content and other-authentication content relating to another authentication different from the second authentication on the second user terminal in a distinguished manner, and
   wherein the authentication module is configured to execute one of the second authentication or the another authentication when the second-authentication content and the other-authentication content are displayed on the second user terminal in a distinguished manner.
(1-11) The authentication system according to any one of Items (1-2) to (1-10), wherein the authentication module is configured to execute, when the change necessity/unnecessity information indicates that the telephone number is to be changed and the first user terminal is owned, the second authentication using the first user terminal.
(1-12) The authentication system according to Item (1-11),
   wherein the predetermined service is a payment service in which payment is executed by reading a code for payment, and
   wherein the authentication module is configured to execute the second authentication in which the code for payment displayed on the first user terminal is read by the second user terminal.
(1-13) The authentication system according to any one of Items (1-2) to (1-12), wherein the authentication module is configured to execute, when the change necessity/unnecessity information indicates that the telephone number is to be changed, the second authentication in which a changed telephone number is input from the first user terminal.

### [5-2. Supplementary Notes regarding Second Embodiment]

For example, the authentication system 1 according to the second embodiment can also be configured as follows.
(2-1) An authentication system, including:
   a user information acquisition module configured to acquire user information relating to a user who uses a predetermined service; and
   an authentication condition determination module configured to determine whether the user information satisfies a predetermined authentication condition relating to an authentication in the predetermined service.
(2-2) The authentication system according to Item (2-1), further including an authentication content display module configured to avoid, when it is determined that the user information does not satisfy the predetermined authentication condition, displaying authentication content relating to the authentication on a user terminal of the user, and display, when it is determined that the user information satisfies the predetermined authentication condition, the authentication content on the user terminal.
(2-3) The authentication system according to Item (2-2), further including an other-authentication content display module configured to display, when it is determined that the user information does not satisfy the predetermined authentication condition, other-authentication content relating to another authentication different from the authentication on the user terminal.
(2-4) The authentication system according to Item (2-2) or (2-3), wherein the authentication content display module is configured to preferentially display, when it is determined that the user information satisfies the predetermined authentication condition, the authentication content on the user terminal.
(2-5) The authentication system according to any one of Items (2-2) to (2-4), further including an other-authentication content display module configured to display, when it is determined that the user information satisfies the predetermined authentication condition, other-authentication content relating to another authentication different from the authentication on the user terminal based on a selection status of the authentication content by the user.
(2-6) The authentication system according to any one of Items (2-2) to (2-5),
   wherein the authentication condition determination module is configured to determine whether the user information satisfies the predetermined authentication condition for each of a plurality of the authentications, and
   wherein the authentication content display module is configured to display, when it is determined that the user information satisfies the predetermined authentication condition for the each of the plurality of the authentications, the authentication content for at least one of the plurality of the authentications on the user terminal based on a priority associated with the each of the plurality of the authentications.
(2-7) The authentication system according to any one of Items (2-1) to (2-6), wherein the authentication condition determination module is configured to determine whether the user information satisfies the predetermined authentication condition by determining whether predetermined information is associated with the user information.
(2-8) The authentication system according to Item (2-7),
   wherein the predetermined service is a payment service, and
   wherein the authentication condition determination module is configured to determine whether the predetermined information relating to a payment type that is settable in the payment service is associated with the user information.
(2-9) The authentication system according to any one of Items (2-1) to (2-8),
   wherein the user information acquisition module is configured to acquire the user information when a user who used the predetermined service from a first user terminal logs in to the predetermined service from a second user terminal different from the first user terminal, and
   wherein the authentication condition determination module is configured to determine whether the user information satisfies the predetermined authentication condition by determining whether the user owns the first user terminal.
(2-10) The authentication system according to Item (2-9),
   wherein the predetermined service is a payment service in which payment is executed by reading a code for payment, and
   wherein the authentication system further includes an authentication module configured to execute, when it is determined that the user information satisfies the predetermined authentication condition, the authentication in which the code for payment displayed on the first user terminal is read by the second user terminal.

### [5-3. Supplementary Notes regarding Third Embodiment]

For example, the authentication system 1 according to the third embodiment can also be configured as follows.
(3-1) An authentication system, including:
   a read information acquisition module configured to acquire, when a code for payment displayed on a first user terminal of a user who uses a payment service is read by a second user terminal different from the first user terminal, read information read from the code for payment; and
   an authentication module configured to execute, when the read information is acquired, a code-for-payment authentication using the code for payment.
(3-2) The authentication system according to Item (3-1), further including a second-user-information acquisition module configured to acquire second user information relating to the user who has logged in to the payment service from the second user terminal,
   wherein the authentication module is configured to execute, when the read information is acquired, the code-for-payment authentication based on first user information relating to the user who has logged in to the payment service from the first user terminal and the second user information.
(3-3) The authentication system according to Item (3-2), further including a first-user-information acquisition module configured to acquire the first user information based on the read information,
   wherein the authentication module is configured to execute, when the read information is acquired, the code-for-payment authentication based on the first user information acquired by the first-user-information acquisition module and the second user information.
(3-4) The authentication system according to any one of Items (3-1) to (3-3), further including:
   an authentication condition determination module configured to determine whether the user satisfies a predetermined authentication condition relating to the code-for-payment authentication; and
   an authentication content display module configured to display, when it is determined that the user satisfies the predetermined authentication condition, authentication content relating to the code-for-payment authentication on the second user terminal.
(3-5) The authentication system according to Item (3-4), wherein the authentication condition determination module is configured to determine whether the user satisfies the predetermined authentication condition by determining whether a change in user information relating to the user exists.
(3-6) The authentication system according to Item (3-5), wherein the authentication condition determination module is configured to determine whether a change in the user information exists by determining whether a change in a telephone number of the user exists.
(3-7) The authentication system according to any one of Items (3-4) to (3-6), wherein the authentication condition determination module is configured to determine whether the user satisfies the predetermined authentication condition by determining whether the user owns the first user terminal.
(3-8) The authentication system according to any one of Items (3-1) to (3-7),
   wherein the read information acquisition module is configured to acquire the read information when the user has not selected telephone number authentication using a telephone number registered in the payment service, and
   wherein the authentication module is configured to execute the code-for-payment authentication when the user has not selected the telephone number authentication.
(3-9) The authentication system according to any one of Items (3-1) to (3-8),
   wherein a shop terminal in the payment service is configured to transmit, when the code for payment is read by the shop terminal, the read information to an API for payment,
   wherein the second user terminal is configured to transmit, when the code for payment is read by the second user terminal, the read information to an API for authentication different from the API for payment, and
   wherein the read information acquisition module is configured to acquire the read information transmitted to the API for authentication.
(3-10) The authentication system according to any one of Items (3-1) to (3-9), further including a setting information applying module configured to apply setting information relating to the payment service, which is stored in the first user terminal, to the second user terminal when the code-for-payment authentication is executed.
(3-11) The authentication system according to any one of Items (3-1) to (3-10), further including a code-for-payment invalidation module configured to invalidate the code for payment when a predetermined operation for the code for payment is performed on the first user terminal.

While there have been described what are at present considered to be certain embodiments of the invention, it will be understood that various modifications may be made thereto, and it is intended that the appended claims cover all such modifications as fall within the true spirit and scope of the invention.

## Claims

1. An authentication system (1), comprising:
a read information acquisition module (107) configured to acquire, when a code for payment displayed on a first user terminal (30A) of a user who uses a payment service is read by a second user terminal (30B) different from the first user terminal (30A), read information read from the code for payment; and
an authentication module (102) configured to execute, when the read information is acquired, a code-for-payment authentication using the code for payment.

2. The authentication system (1) according to claim 1, further comprising a second-user-information acquisition module (109) configured to acquire second user information relating to the user who has logged in to the payment service from the second user terminal (30B),
wherein the authentication module (102) is configured to execute, when the read information is acquired, the code-for-payment authentication based on first user information relating to the user who has logged in to the payment service from the first user terminal (30A) and the second user information.

3. The authentication system (1) according to claim 2, further comprising a first-user-information acquisition module (108) configured to acquire the first user information based on the read information,
wherein the authentication module (102) is configured to execute, when the read information is acquired, the code-for-payment authentication based on the first user information acquired by the first-user-information acquisition module (108) and the second user information.

4. The authentication system (1) according to any one of claims 1 to **3,** further comprising:
an authentication condition determination module (104) configured to determine whether the user satisfies a predetermined authentication condition relating to the code-for-payment authentication; and
an authentication content display module (105) configured to display, when it is determined that the user satisfies the predetermined authentication condition, authentication content relating to the code-for-payment authentication on the second user terminal (30B).

5. The authentication system (1) according to claim 4, wherein the authentication condition determination module (104) is configured to determine whether the user satisfies the predetermined authentication condition by determining whether a change in user information relating to the user exists.

6. The authentication system (1) according to claim 5, wherein the authentication condition determination module (104) is configured to whether a change in the user information exists by determining whether a change in a telephone number of the user exists.

7. The authentication system (1) according to any one of claims 4 to 6, wherein the authentication condition determination module (104) is configured to determine whether the user satisfies the predetermined authentication condition by determining whether the user owns the first user terminal (30A).

8. The authentication system (1) according to any one of claims 1 to 7,
wherein the read information acquisition module (107) is configured to acquire the read information when the user has not selected telephone number authentication using a telephone number registered in the payment service, and
wherein the authentication module (102) is configured to execute the code-for-payment authentication when the user has not selected the telephone number authentication.

9. The authentication system (1) according to any one of claims 1 to 8,
wherein a shop terminal (40) in the payment service is configured to transmit, when the code for payment is read by the shop terminal (40), the read information to an API for payment,
wherein the second user terminal (30B) is configured to transmit, when the code for payment is read by the second user terminal (30B), the read information to an API for authentication different from the API for payment, and
wherein the read information acquisition module (107) is configured to acquire the read information transmitted to the API for authentication.

10. The authentication system (1) according to any one of claims 1 to 9, further comprising a setting information applying module (114) configured to apply setting information relating to the payment service, which is stored in the first user terminal (30A), to the second user terminal (30B) when the code-for-payment authentication is executed.

11. The authentication system (1) according to any one of claims 1 to 10, further comprising a code-for-payment invalidation module (115) configured to invalidate the code for payment when a predetermined operation for the code for payment is performed on the first user terminal (30A).

12. An authentication method, comprising:
a read information acquisition step of acquiring, when a code for payment displayed on a first user terminal (30A) of a user who uses a payment service is read by a second user terminal (30B) different from the first user terminal (30A), read information read from the code for payment; and
an authentication step of executing, when the read information is acquired, a code-for-payment authentication using the code for payment.

13. A program for causing a computer to function as:
a read information acquisition module (107) configured to acquire, when a code for payment displayed on a first user terminal (30A) of a user who uses a payment service is read by a second user terminal (30B) different from the first user terminal (30A), read information read from the code for payment; and
an authentication module (102) configured to execute, when the read information is acquired, a code-for-payment authentication using the code for payment.
